# EUROPEAN PATENT APPLICATION

(11) **EP 4 796 574 A1**
(43) Date of publication of application: **26.08.2026**
(21) Application number: 24879655.9
(22) Date of filing: 11.10.2024
(51) Int. Cl.: C08G 65/333

(54) **ACETAL-TYPE RELEASABLE POLYOXYETHYLENE DERIVATIVE CONTAINING AMINO GROUP, METHOD FOR PRODUCING SAME, AND ACETAL-TYPE RELEASABLE POLYOXYETHYLENE CONJUGATE CONTAINING AMINO GROUP**

(30) Priority: 16.10.2023 JP 2023177998
(71) Applicant: NOF Corporation, Shibuya-ku Tokyo 150-6019 (JP)
(72) Inventor: HAMURA Ken, Kawasaki-shi, Kanagawa 210-0865 (JP); DOHI Reina, Kawasaki-shi, Kanagawa 210-0865 (JP)
(74) Representative: Hoffmann Eitle
(86) International application number: PCT/JP2024/036391
(87) International publication number: WO 2025/084230

(57) **Abstract**

An acetal-type releasable polyoxyethylene derivative containing an amino group, the derivative being characterised by being represented by a specific formula; a method for producing the same; and an acetal-type releasable polyoxyethylene conjugate containing an amino group.

## Description

### TECHNICAL FIELD

The present invention relates to an amino group-containing acetal-type releasable polyoxyethylene derivative, a method for producing the same, and an amino group-containing acetal-type releasable polyoxyethylene conjugate, which is a conjugate with a biofunctional molecule.

### BACKGROUND ART

When a pharmaceutical that uses a biofunctional molecule such as hormones, cytokines, and enzymes is administered into a general living body, it is promptly excreted from the living body through glomerular filtration in the kidneys and uptake by macrophages in the liver or spleen. Therefore, the half-life in blood is short, and it is often difficult to obtain a sufficient pharmacological effect. In order to solve this problem, attempts have been made to chemically modify the biofunctional molecule with a water-soluble polymer such as a polyoxyethylene (PEG). As a result, it is possible to extend the half-life in blood of the biofunctional molecule by increasing the molecular weight and forming a hydration layer. It is also well known that these modifications can produce effects such as a decrease in toxicity and antigenicity of the biofunctional molecule, improvement in aggregation properties, and the like.

On the other hand, it is known that the biofunctional molecule chemically modified with the water-soluble polymer such as a PEG may have, due to the formation of the hydration layer by the water-soluble polymers or a steric shielding effect at an active site, undesirable influences such as a decrease in interaction with target biological endogenous molecules or receptors, a decrease in inherent pharmacological action of the biofunctional molecule or a dynamic change in the living body or cells.

As an approach to the above problems, a method of chemically modifying a biofunctional molecule with a water-soluble polymer via a temporary bond and releasing the not chemically modified biofunctional molecule by cleaving the temporary bond in vivo, that is, a prodrug formation method, is used.

In recent years, for the biofunctional molecule modified with the water-soluble polymer, techniques described in Patent Literatures 1 and 2 have been known as techniques can prevent the decrease in inherent pharmacological action of the biofunctional molecule and the dynamic change in the living body or cells by using the prodrug formation method. Patent Literatures 1 and 2 report that PEGylated hGH and PEGylated IL-2, which are obtained by respectively modifying a human growth hormone (hGH) and interleukin 2 (IL-2) as biofunctional molecules with a PEG via a linker that decomposes in an enzyme-independent manner at a moderate rate under a physiological condition, that is, a neutral condition, can have an extended half-life in blood, and can reduce the decrease in pharmacological action caused by PEGylation by releasing the biofunctional molecule as the linker decomposes. For this reason, the prodrug formation technique that can extend the half-life in blood of the biofunctional molecule and that can release the biofunctional molecule in an enzyme-independent manner at a moderate rate under a physiological condition to exert the pharmacological action is important.

Patent Literature 3 reports a compound that enzyme-independently cleaves a temporary bond in a biofunctional molecule chemically modified with a PEG, and that releases the not chemically modified biofunctional molecule.

Specifically, it is reported that hydrolysis of a linker having an acetal structure that is hydrolyzed under an acidic condition triggers cleavage of a carbamate bond, which is a temporary bond, through 1,4- or 1,6-benzyl elimination, and the not chemically modified biofunctional molecule is released.

### PRIOR ART DOCUMENTS

### PATENT LITERATURES

Patent Literature 1: JP2018-150311A
Patent Literature 2: JP2022-000043A
Patent Literature 3: JP2018-172648A

### SUMMARY OF INVENTION

### OBJECT TO BE ACHIEVED BY THE INVENTION

In Examples in Patent Literature 3, structures capable of releasing the biofunctional molecule in an enzyme-independent manner and capable of releasing the biofunctional molecule under an acidic condition are exemplified. However, there is no description of a prodrug formation technique that can release the biofunctional molecule in an enzyme-independent manner at a moderate rate under a physiological condition, that is, a neutral condition at a pH of about 7.4, to exert the pharmacological action.

In view of the above problems, an object of the present invention is to provide a polyoxyethylene derivative containing an amino group and having an acetal structure, which is characterized by forming a biofunctional molecule into a prodrug and gradually releasing the biofunctional molecule under a physiological condition, a stable method for producing the same, and an amino group-containing acetal-type releasable polyoxyethylene conjugate.

### MEANS FOR ACHIEVING THE OBJECT

As a result of intensive studies, the present inventors have found a polyoxyethylene derivative containing an amino group and having an acetal structure, which enables forming a biofunctional molecule into a prodrug, gradually hydrolyzing an acetal under a physiological condition to induce benzyl elimination, and releasing the biofunctional molecule, a stable method for producing the same, and an amino group-containing acetal-type releasable polyoxyethylene conjugate.

That is, the present invention relates to the following [1] to [10]. [1] An amino group-containing acetal-type releasable polyoxyethylene derivative, which is represented by the following formula (1), formula (2), formula (3), or formula (4). 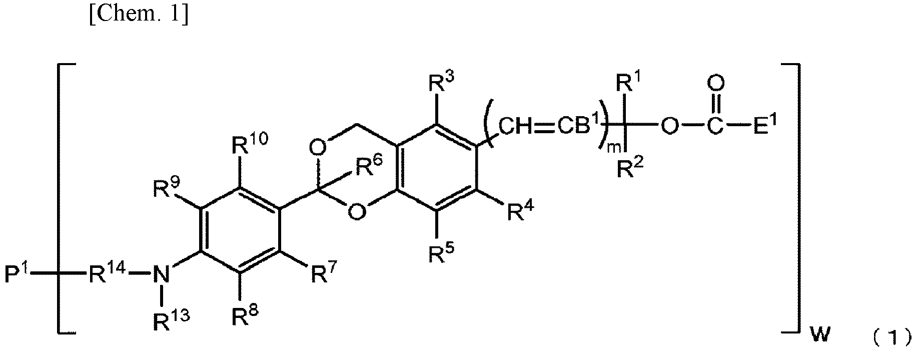 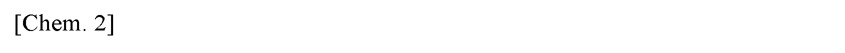 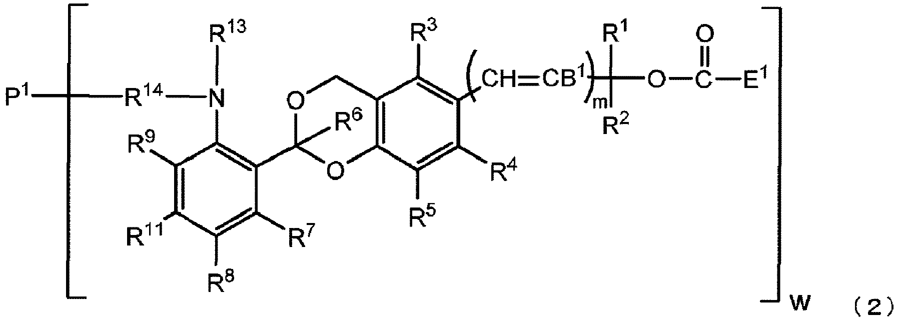 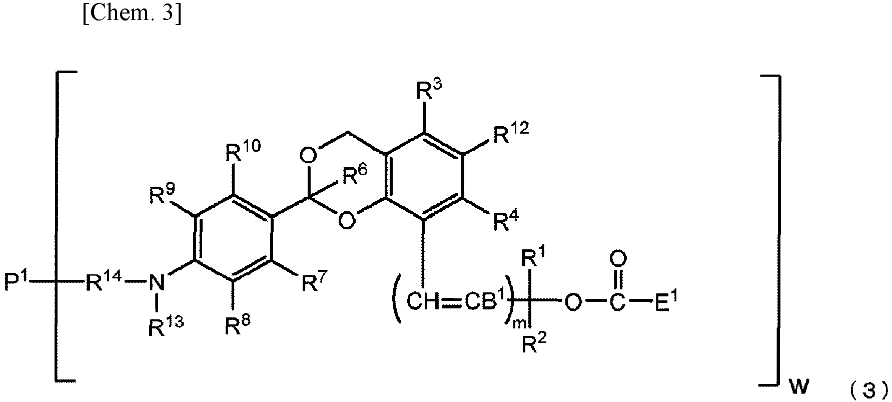 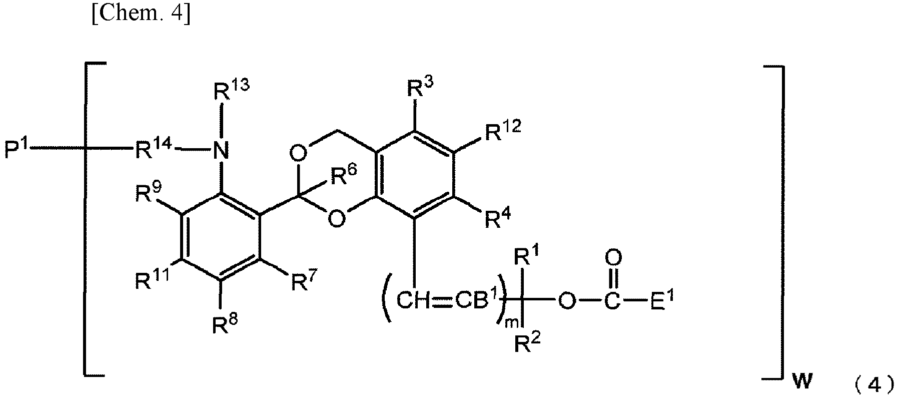 (In the formulas (1), (2), (3), and (4),
B¹ is a hydrogen atom or -C(R¹)(R²)OC(O)E¹,
E¹ is a leaving group,
P¹ is a polyoxyethylene derivative moiety,
w is an integer of 1 to 8,
R¹, R², R³, R⁴, R⁵, and R¹² are each independently a hydrogen atom or a hydrocarbon group having 1 to 10 carbon atoms,
R⁶ is a hydrogen atom or a hydrocarbon group having 1 to 24 carbon atoms which may be substituted,
R⁷, R⁸, R⁹, R¹⁰, and R¹¹ are each independently an electron-withdrawing substituent, an electron-donating substituent, or a hydrogen atom,
R¹³ is a hydrogen atom or a hydrocarbon group having 1 to 10 carbon atoms which may be substituted,
R¹⁴ is a hydrocarbon group having 1 to 10 carbon atoms which may be substituted,
R¹³ may be bonded to R¹⁴, and
m is 0 or 1.)

[2] The amino group-containing acetal-type releasable polyoxyethylene derivative according to [1], in which m is 0, R¹ and R² are each a hydrogen atom, and R³, R⁴, R⁵, and R¹² are each independently a hydrogen atom or a methyl group.

[3] The amino group-containing acetal-type releasable polyoxyethylene derivative according to [1] or [2], in which
m is 0,
R¹ and R² are each a hydrogen atom,
R³, R⁴, R⁵, and R¹² are each independently a hydrogen atom or a methyl group,
R¹³ and R¹⁴ are bonded to each other,
R¹³ is a hydrocarbon group represented by the following formula (5), and
R¹⁴ is a hydrocarbon group represented by the following formula (6). 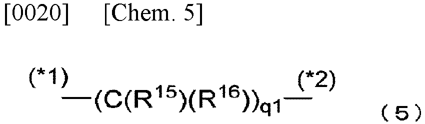 (In the formula (5),
   R¹⁵ and R¹⁶ are each independently a hydrogen atom or a hydrocarbon group having 1 to 4 carbon atoms which may be substituted,
   q1 is an integer of 1 to 4,
   (*1) represents a bonding point with N, and
   (*2) represents a bonding point with R¹⁴.) 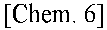 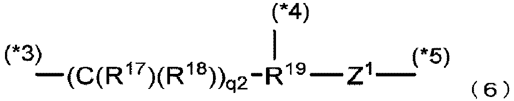 (In the formula (6),
      R¹⁷ and R¹⁸ are each independently a hydrogen atom or a hydrocarbon group having 1 to 4 carbon atoms which may be substituted,
      R¹⁹ is CR²⁰ or a nitrogen atom,
      R²⁰ is a hydrogen atom or a hydrocarbon group having 1 to 4 carbon atoms which may be substituted,
      q2 is an integer of 0 to 3,
      Z¹ is a single bond or a divalent spacer connecting P¹ and a carbon atom or a nitrogen atom of R¹⁹,
      (*3) represents a bonding point with N,
      (*4) represents a bonding point with R¹³, and
      (*5) represents a bonding point with P¹.)

[4] The amino group-containing acetal-type releasable polyoxyethylene derivative according to [3], in which
m is 0,
R¹ and R² are each a hydrogen atom,
R³, R⁴, R⁵, and R¹² are each independently a hydrogen atom or a methyl group,
R¹³ and R¹⁴ are bonded to each other,
R¹⁵ and R¹⁶ are each a hydrogen atom,
q1 is 2,
R¹⁷ and R¹⁸ are each a hydrogen atom,
R¹⁹ is a methine group or a nitrogen atom, and
q2 is 2.

[5] A method for producing the amino group-containing acetal-type releasable polyoxyethylene derivative according to [1], [2], [3], or [4], the method including:
a coupling step of coupling a polyoxyethylene derivative with a benzaldehyde derivative or a phenyl ketone derivative to obtain a coupling product represented by the following formula (7) or the following formula (8);
an acetalization step of, after the coupling step, reacting the coupling product represented by the following formula (7) or the following formula (8) with a phenol having a hydroxymethyl group at a 2-position and a substituent (-CH=CB¹)C(R¹)(R²)-OH (B¹, m, R¹, and R² are as described above) at a 4-position or a 6-position under an acidic condition, thereby obtaining an acetal structure; and
a leaving group structure introduction step of introducing a leaving group structure (-OC(O)E¹) (E¹ is a leaving group) to a terminal of the substituent at the 4-position or the 6-position after the acetalization step. 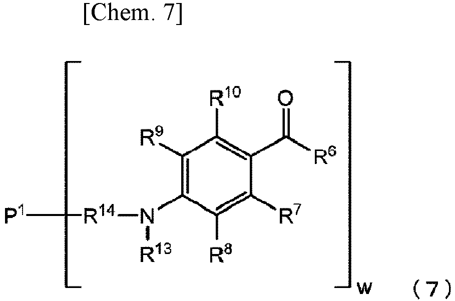 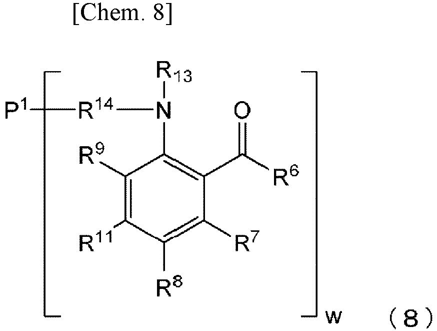 (In the formula (7) and the formula (8), P¹, w, R⁶, R⁷, R⁸, R⁹, R¹⁰, R¹¹, R¹³, and R¹⁴ are as described above.)

[6] The method for producing an amino group-containing acetal-type releasable polyoxyethylene derivative according to [5], further including:
between the coupling step and the acetalization step, a dialkylation step of reacting the coupling product represented by the formula (7) or the formula (8) with a monohydric alcohol under an acidic condition to obtain a dialkyl acetal structure represented by the following formula (9) or the following formula (10). 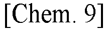 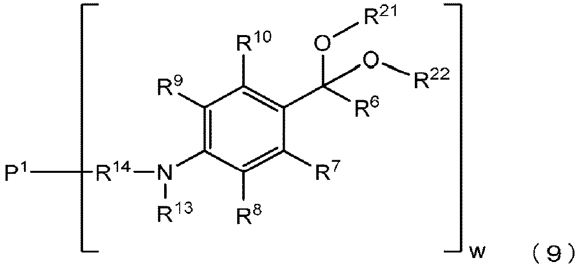 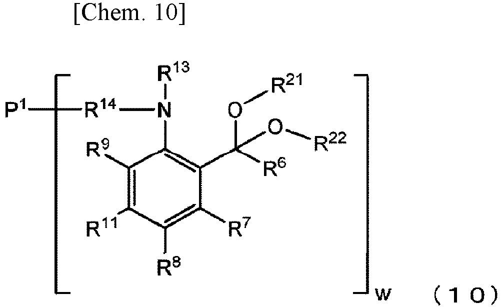 (In the formulas (9) and (10),
R²¹ and R²² are each independently a hydrocarbon group having 1 to 10 carbon atoms, and
P¹, w, R⁶, R⁷, R⁸, R⁹, R¹⁰, R¹¹, R¹³, and R¹⁴ are as described above.)

[7] The method for producing an amino group-containing acetal-type releasable polyoxyethylene derivative according to claim 5, further including, between the acetalization step and the leaving group structure introduction step:
a deprotection step of deprotecting an amino group protected by a protective group in the coupling product; and
a step of introducing, into the amino group deprotected after the deprotection step, a functional group reactive with a biofunctional molecule.

[8] The method for producing an amino group-containing acetal-type releasable polyoxyethylene derivative according to [6], further including, between the acetalization step and the leaving group structure introduction step:
a deprotection step of deprotecting an amino group protected by a protective group in the dialkyl acetal structure; and
a step of introducing, into the amino group deprotected after the deprotection step, a functional group reactive with a biofunctional molecule.

[9] An amino group-containing acetal-type releasable polyoxyethylene conjugate, which is represented by the following formula (11), formula (12), formula (13), or formula (14), and which is cleaved under a physiological condition. 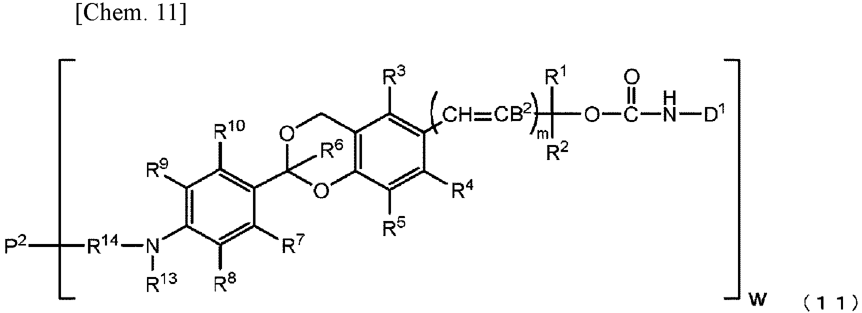 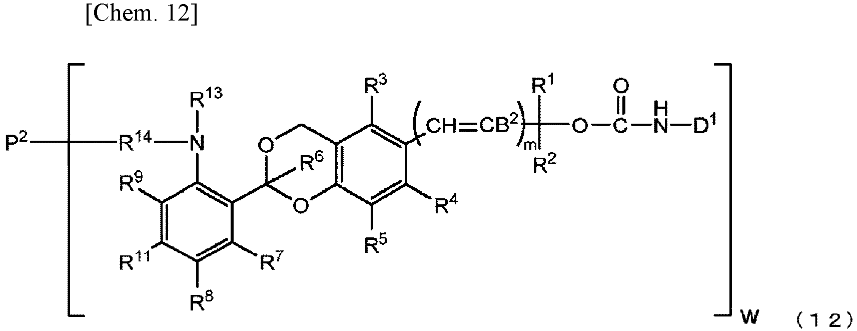 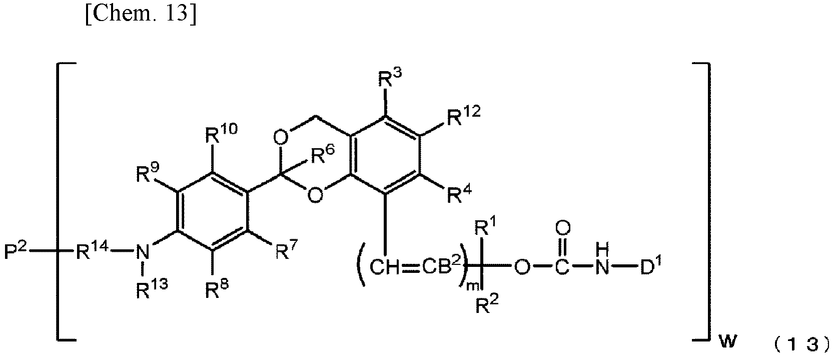 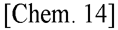 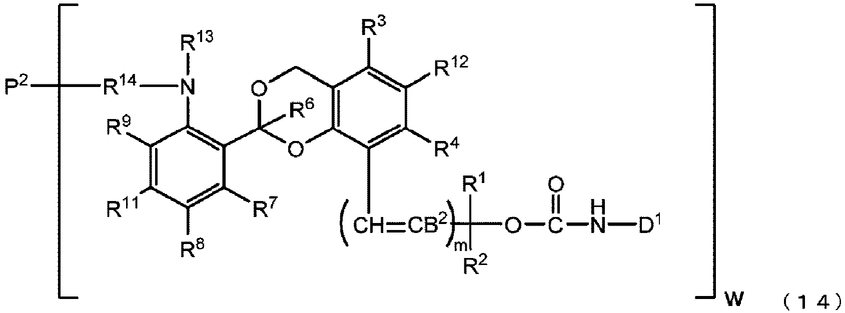 (In the formula (11), formula (12), formula (13), and formula (14),
B² is a hydrogen atom or -C(R¹)(R²)OC(O)NHD¹,
D¹ is a residue obtained by removing, from amino groups contained in a biofunctional molecule, the amino group constituting a carbamate bond,
P² is a polyoxyethylene derivative moiety or a conjugate of a polyoxyethylene derivative moiety and a biofunctional molecule,
w is an integer of 1 to 8,
R¹, R², R³, R⁴, R⁵, and R¹² are each independently a hydrogen atom or a hydrocarbon group having 1 to 10 carbon atoms,
R⁶ is a hydrogen atom or a hydrocarbon group having 1 to 24 carbon atoms which may be substituted,
R⁷, R⁸, R⁹, R¹⁰, and R¹¹ are each independently an electron-withdrawing substituent, an electron-donating substituent, or a hydrogen atom,
R¹³ is a hydrogen atom or a hydrocarbon group having 1 to 10 carbon atoms which may be substituted,
R¹⁴ is a hydrocarbon group having 1 to 10 carbon atoms which may be substituted,
R¹³ may be bonded to R¹⁴, and
m is 0 or 1.)

[10] A method for producing the acetal-type releasable polyoxyethylene conjugate according to [9], the method including:
a coupling step of reacting the acetal-type releasable polyoxyethylene derivative according to any one of [1] to [4] with a biofunctional molecule in a neutral or basic buffer solution which may contain a water-soluble organic solvent; and
a purification step under a neutral or basic condition after the coupling step.

### EFFECTS OF INVENTION

The amino group-containing acetal-type releasable polyoxyethylene derivative according to the present invention can form a biofunctional molecule into a prodrug, gradually hydrolyze an acetal under a physiological condition to induce benzyl elimination, and gradually release the biofunctional molecule, thereby improving a pharmacological action of a biofunctional functional molecule modified with a polyoxyethylene derivative.

Although in Examples in Patent Literature 3, structures capable of releasing the biofunctional molecule in an enzyme-independent manner and capable of releasing the biofunctional molecule under an acidic condition are exemplified, there is no description of a specific structure capable of releasing the biofunctional molecule by benzyl elimination triggered by acetal hydrolysis under a physiological condition, that is, a neutral condition at a pH of about 7.4.

Here, an acetal structure in the compound described in Patent Literature 3 is generally used as a protective group for a diol or carbonyl group, and it is known that the deprotection thereof is performed under an acidic condition and it is stable under a neutral or basic condition. Therefore, in the compound described in Patent Literature 3, there is no suggestion of creating a compound that is hydrolyzed at an appropriate rate under a physiological condition, that is, under a neutral condition, and that releases a biofunctional molecule.

### BRIEF DESCRIPTION OF DRAWINGS

FIG. 1 shows results of a decomposition test at 37°C using compounds represented by formulas (47), (48), (49), and (50) in phosphate buffered saline having a pH of 7.4.
FIG. 2 shows results of a decomposability test at 37°C using compounds represented by formulas (63), (64), (65), and (66) in phosphate buffered saline having a pH of 7.4.
FIG. 3 shows an amino acid sequence of IL-2.
FIG. 4 shows results of a cell proliferation test of CTLL-2 using (RLS)PEG(20k)-IL2 and (NRL)PEG(20k)-IL2.

### EMBODIMENTS FOR CARRYING OUT THE INVENTION

Hereinafter, the present invention will be described in detail.

The present invention is characterized in that an acetal undergoes hydrolysis under a physiological condition, followed by benzyl elimination, and a biofunctional molecule is gradually released. In the present description, the "physiological condition" refers to a pH of 6.0 to 8.0.

In addition, a release rate of the biofunctional molecule under the physiological condition can be evaluated as a half-life of the acetal in a buffer solution having a pH of 7.4. The half-life of the acetal in the buffer solution having a pH of 7.4 is preferably 1 to 840 hours. Here, the "half-life" refers to a time required for the acetal to be hydrolyzed to convert 1/2 equivalent thereof to an aldehyde.

The compound exemplified in Examples in Patent Literature 3, in which a polyoxyethylene derivative is introduced via an ether bond to a 3-position of a phenyl group bonded to an acetal, cannot achieve the above acetal half-life under a physiological condition. In contrast, the present inventors have found that a compound in which a polyoxyethylene derivative is introduced via an amino group to a 2-position or a 4-position of the phenyl group bonded to an acetal can achieve the above acetal half-life in the case of being applied under a physiological condition.

That is, the present invention relates to an amino group-containing acetal-type releasable polyoxyethylene derivative, which is represented by the following formula (1), formula (2), formula (3), or formula (4), and which is cleaved under a physiological condition.

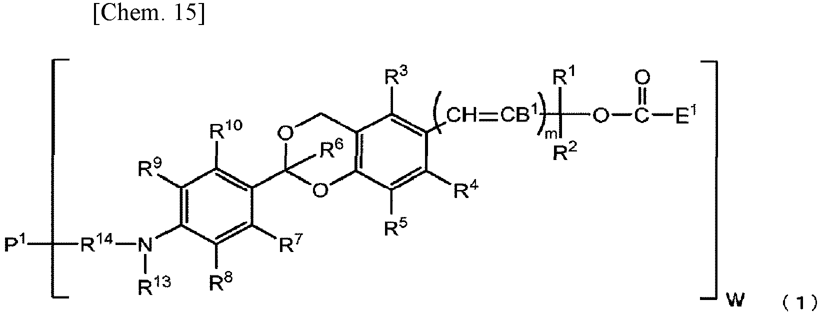

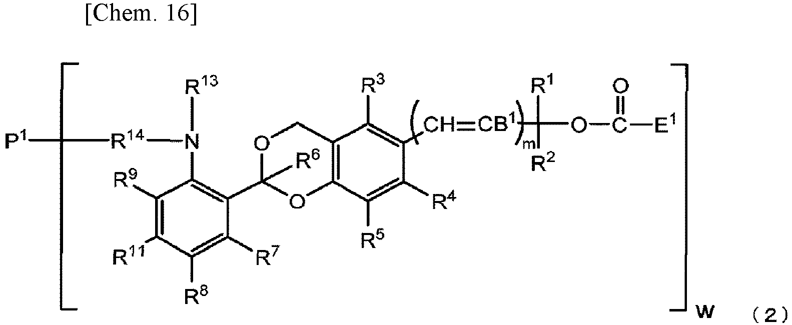

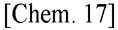

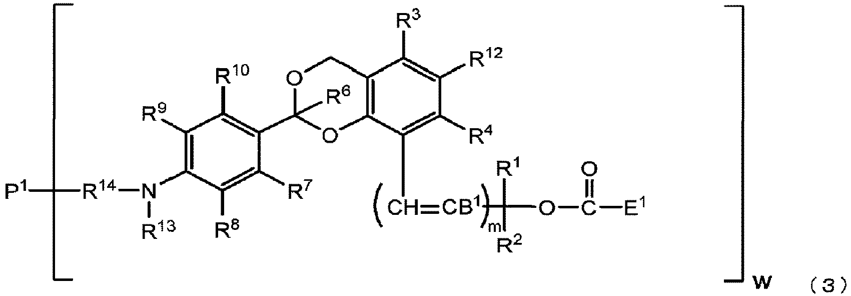

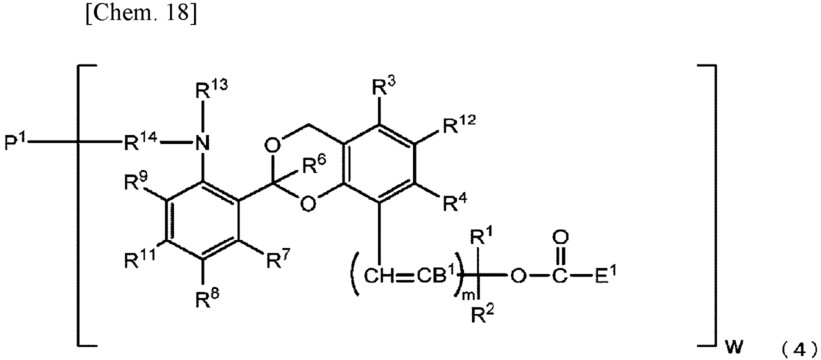

In the formulas (1), (2), (3), and (4), B¹ is a hydrogen atom or -C(R¹)(R²)OC(O)E¹, and is preferably a hydrogen atom.

E¹ is a leaving group. Preferred examples of the leaving group include a succinimidyloxy group, a phthalimidyloxy group, a 4-nitrophenoxy group, a 1-imidazolyl group, a pentafluorophenoxy group, a benzotriazol-1-yloxy group, and a 7-azabenzotriazol-1-yloxy group, more preferably a succinimidyloxy group, a 4-nitrophenoxy group, a 1-imidazolyl group, and a pentafluorophenoxy group, and still more preferably a succinimidyloxy group and a 4-nitrophenoxy group.

P¹ is a polyoxyethylene derivative moiety, and the polyoxyethylene derivative moiety includes both a polyoxyethylene having a molecular weight distribution obtained by polymerization of ethylene oxides, and a monodisperse polyoxyethylene obtained by coupling oligooxyethylenes each having a single molecular weight by a coupling reaction. The polyoxyethylene derivative moiety represented by P¹ may have a hydrocarbon group having 1 to 24 carbon atoms, an amino group protected by a protective group, or a functional group reactive with a biofunctional molecule.

w is an integer of 1 to 8.

Preferred examples of P¹ include the following residues depending on the number represented by w.

A preferred example of P¹ when w = 1 is a residue represented by the following formula (p1) or (p2). 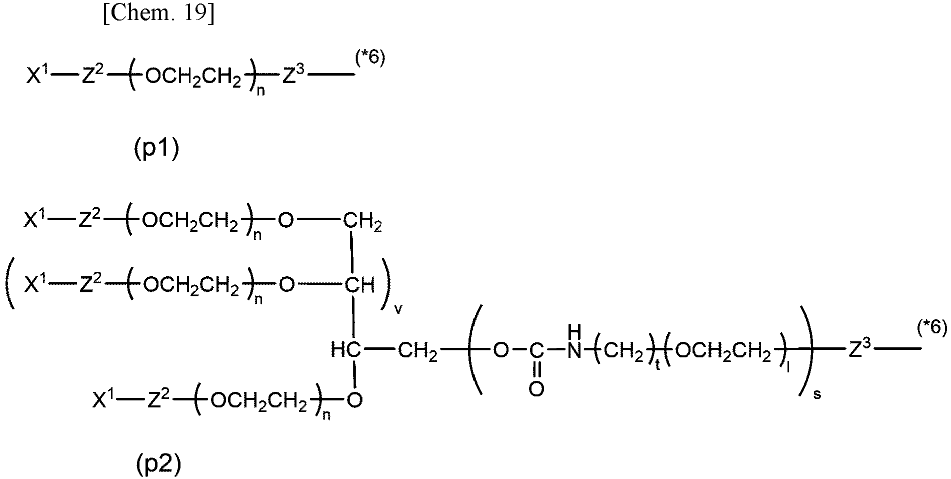
(X¹ is a hydrocarbon group having 1 to 24 carbon atoms, an amino group protected by a protective group, or a functional group reactive with a biofunctional molecule,
Z² and Z³ are each a divalent spacer or a single bond,
n and l are each independently 3 to 2,000, and
s is 0 or 1, t is 2 or 3, and v is 0 or 2.)

A preferred example of P¹ when w = 2 is a residue represented by the following formula (p3) or (p4). 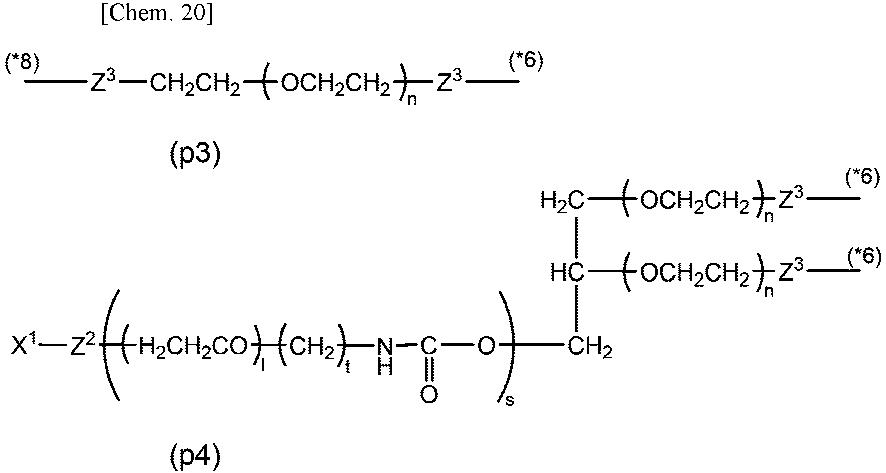 (X¹, Z², Z³, n, l, s, and t are as defined above.)

A preferred example of P¹ when w = 3 is a residue represented by the following formula (p5). 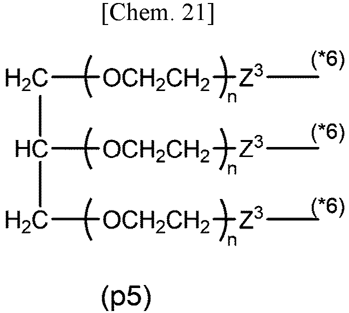 (Z³ and n are as defined above.)

A preferred example of P¹ when w = 4 is a residue represented by the following formula (p6), (p7), or (p8). 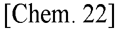 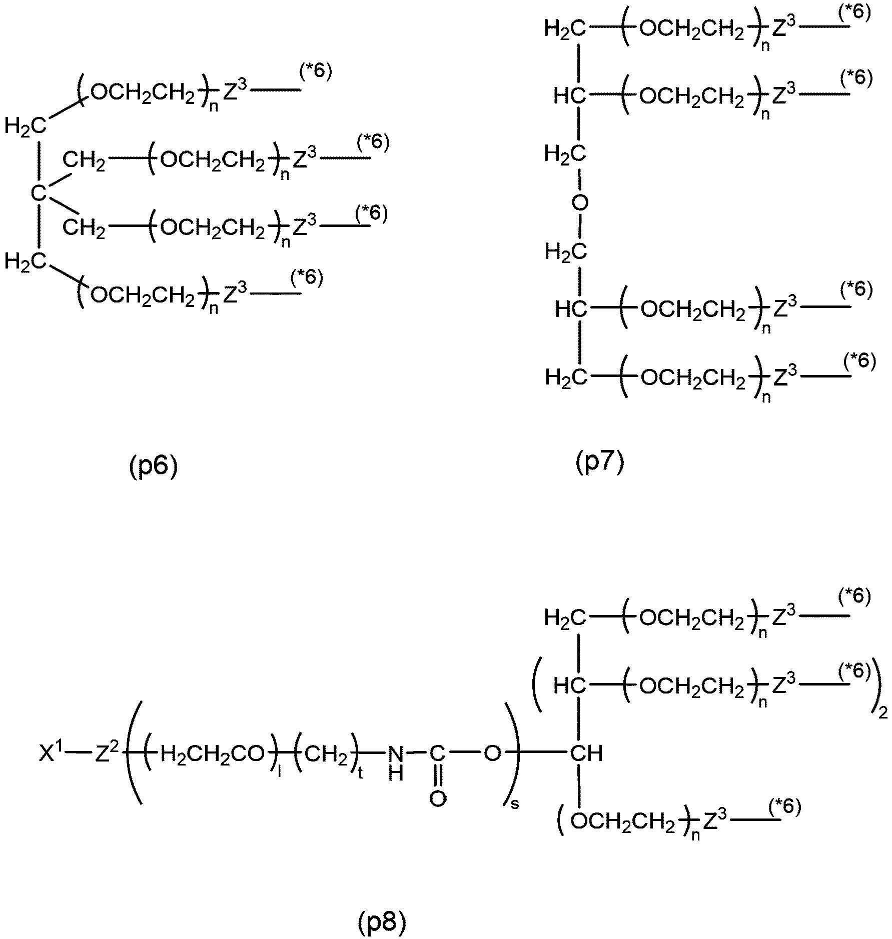 (X¹, Z², Z³, n, l, s, and t are as defined above.)

A preferred example of P¹ when w = 5 is a residue represented by the following formula (p9). 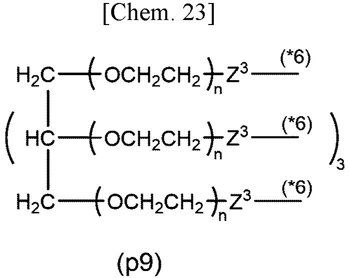 (Z³ and n are as defined above.)

A preferred example of P¹ when w = 6 is a residue represented by the following formula (p10). 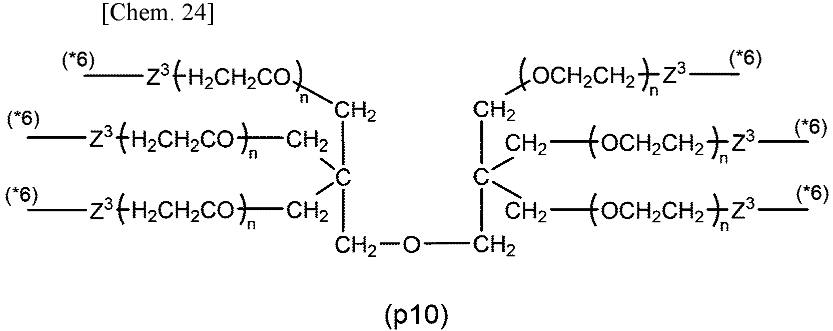 (Z³ and n are as defined above.)

A preferred example of P¹ when w = 8 is a residue represented by the following formula (p11), (p12), or (p13). 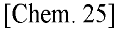 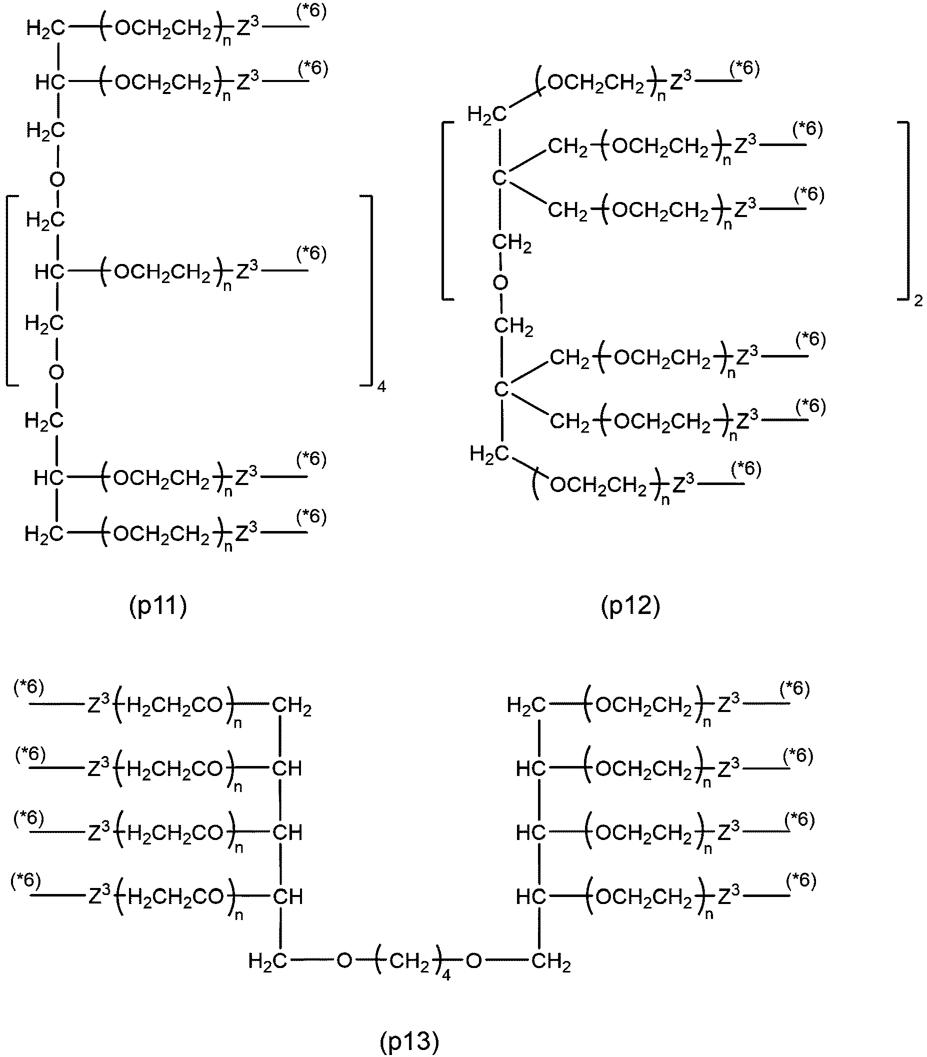 (Z² and n are as defined above.)

### (*6) represents a bonding point with L¹

In the formulas (p1) to (p13), n and 1 each represent the added molar number of an oxyethylene group represented by -(CH₂CH₂O)-, and are each independently 3 to 2,000, preferably 20 to 1,500, more preferably 40 to 1,000, and still more preferably 60 to 500. The added molar number of the oxyethylene group can be calculated by dividing a value obtained by subtracting a molecular weight derived from a molecule other than a polyoxyethylene chain represented by -(CH₂CH₂O)ₙ- from a number average molecular weight of the polyoxyethylene derivative obtained by size exclusion chromatography, mass spectrometry, or the like, by 44 derived from the oxyethylene group.

In the formulas (p1), (p2), (p4), and (p8), Z² is a divalent spacer or a single bond connecting a polyoxyethylene group and X¹, and in the formulas (p1) to (p13), Z³ is a divalent spacer or a single bond connecting a polyoxyethylene group and R¹⁴. The divalent spacer represented by Z² and Z³ is not particularly limited as long as it is more stable than an acetal structure, and is preferably an ether bond, an ester bond, a carbonate bond, a urethane bond, an amide bond, a secondary amino group, or an alkylene group containing these, or a single bond. The alkylene group has 1 to 24 carbon atoms, and examples thereof include spacers (z1) to (z8) described in a group (I).

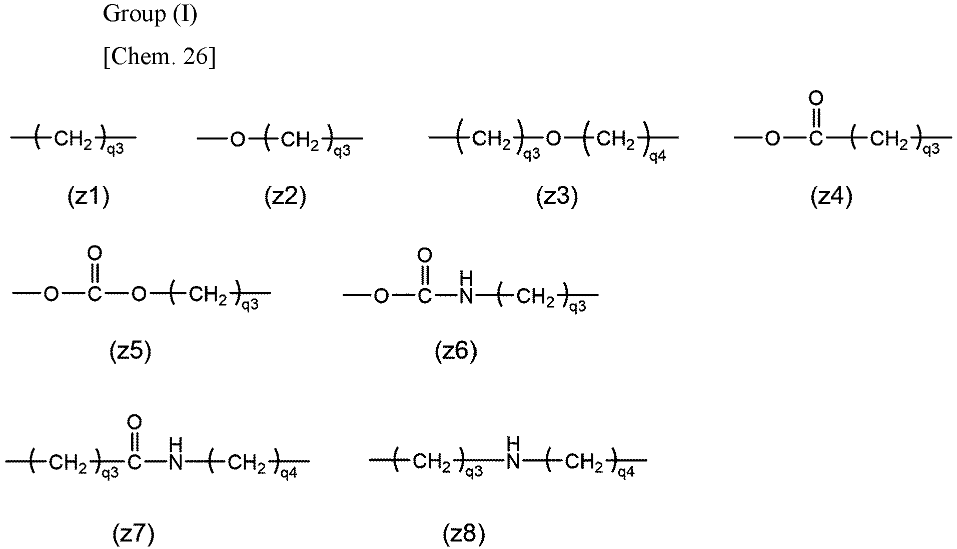

In the formulas, q3 and q4 are each independently an integer of 1 to 12. For example, in the case of bonding a terminal active carbonate group in a hydrophobic environment such as an inside of a protein, it is preferable that q3 and q4 are large, whereas in the case of bonding a terminal active carbonate group in a hydrophilic environment, it is preferable that q3 and q4 are small. However, Z² and Z³ are each an ether bond, an ester bond, a carbonate bond, a urethane bond, an amide bond, a secondary amino group, or an alkylene group containing these, and in the case where a plurality of identical structural units are bonded, the number of the structural units is 2 or less.

Next, the hydrocarbon group having 1 to 24 carbon atoms, the amino group protected by a protective group, or the functional group reactive with a biofunctional molecule, which the polyoxyethylene derivative moiety represented by P¹ may have, will be described. These also correspond to X¹ in the formulas (p1), (p2), (p4), and (p8).

Specific examples of the hydrocarbon group include a methyl group, an ethyl group, a propyl group, an isopropyl group, an allyl group, a butyl group, a t-butyl group, a pentyl group, an isopentyl group, a hexyl group, a heptyl group, a 2-ethylhexyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, an eicosyl group, a heneicosyl group, a docosyl group, a toicosyl group, a tetracosyl group, a phenyl group, a benzyl group, a cresyl group, a butylphenyl group, a dodecylphenyl group, and a trityl group, preferably a hydrocarbon group having 1 to 10 carbon atoms, more preferably a methyl group or an ethyl group, and still more preferably a methyl group.

Here, the protective group is a component that prevents or inhibits a reaction of a specific chemically reactive functional group in the molecule under a certain reaction condition. The protective group changes depending on the type of the chemically reactive functional group to be protected, a use condition, and the presence of other functional groups or protective groups in the molecule. Specific examples of the protective group can be found in many general textbooks, for example, "Wuts, P. G. M.; Greene, T. W. Protective Groups in Organic Synthesis, 4th ed.; Wiley-Interscience: New York, 2007". In the present invention, examples of the amino group to be protected by a protective group include an amino group or an azide group protected by an acyl-based protective group or a carbamate-based protective group, and specific examples of the acyl-based protective group or the carbamate-based protective group include a trifluoroacetyl group, a 9-fluorenylmethyloxycarbonyl group, and a 2-(trimethylsilyl)ethyloxycarbonyl group.

Examples of the functional group reactive with a biofunctional molecule include a formyl group, an epoxy group, a maleimidyl group, a vinylsulfone group, an acryl group, a sulfonyloxy group, a carboxy group, a dithiopyridyl group, an α-haloacetyl group, an alkynyl group, an allyl group, a vinyl group, or an azide group.

More specifically, examples of a functional group reactive with an amino group in the biofunctional molecule to form a covalent bond include a formyl group, an epoxy group, a maleimidyl group, a vinylsulfone group, an acryl group, a sulfonyloxy group, and a carboxy group. Examples of a functional group reactive with a thiol group in the biofunctional molecule to form a covalent bond include a formyl group, an epoxy group, a maleimidyl group, a vinylsulfone group, an acryl group, a sulfonyloxy group, a carboxy group, a dithiopyridyl group, an α-haloacetyl group, an alkynyl group, an allyl group, and a vinyl group. Examples of a functional group reactive with an alkynyl group in the biofunctional molecule to form a covalent bond include an azide group. Examples of a functional group reactive with an azide group in the biofunctional molecule to form a covalent bond include an alkynyl group and a functional group having a triple bond.

In a preferred embodiment of this aspect, the functional group reactive with a biofunctional molecule is a group represented by a group (II), a group (III), a group (IV), or a group (V). Note that, (*7) represents a bonding point with Z².

Group (II): functional groups reactive with an amino group in the biofunctional molecule to form a covalent bond

The following (a), (b), (e), and (f)

Group (III): functional groups reactive with a thiol group in the biofunctional molecule to form a covalent bond

The following (a), (b), (c), (d), (e), (f), and (h)

Group (IV): functional groups reactive with an alkynyl group in the biofunctional molecule to form a covalent bond

The following (c), (d), and (g)

Group (V): functional groups reactive with an azide group in the biofunctional molecule to form a covalent bond
the following (i) and (j)

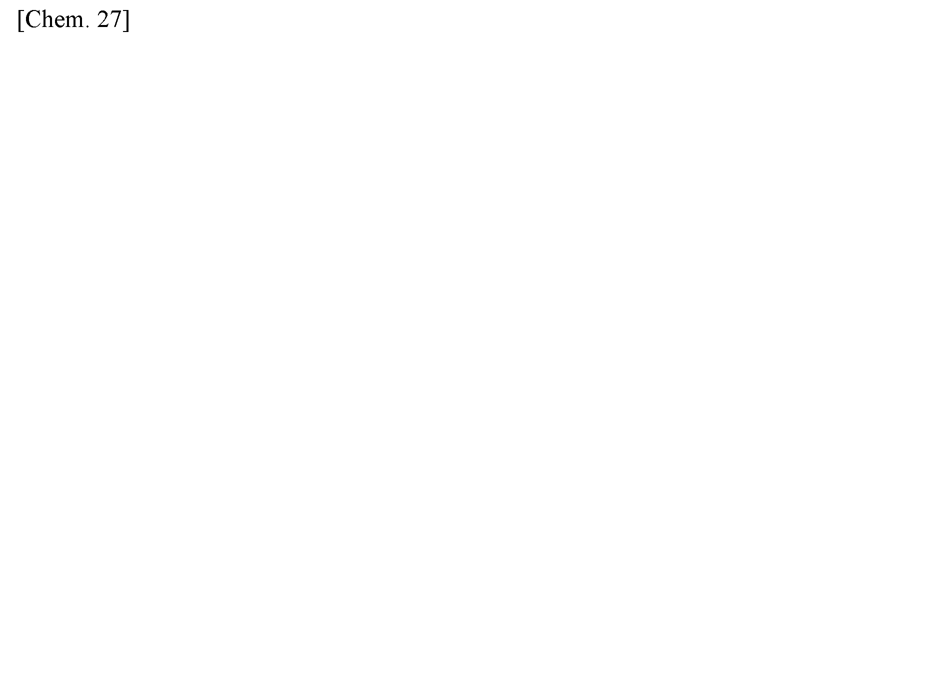

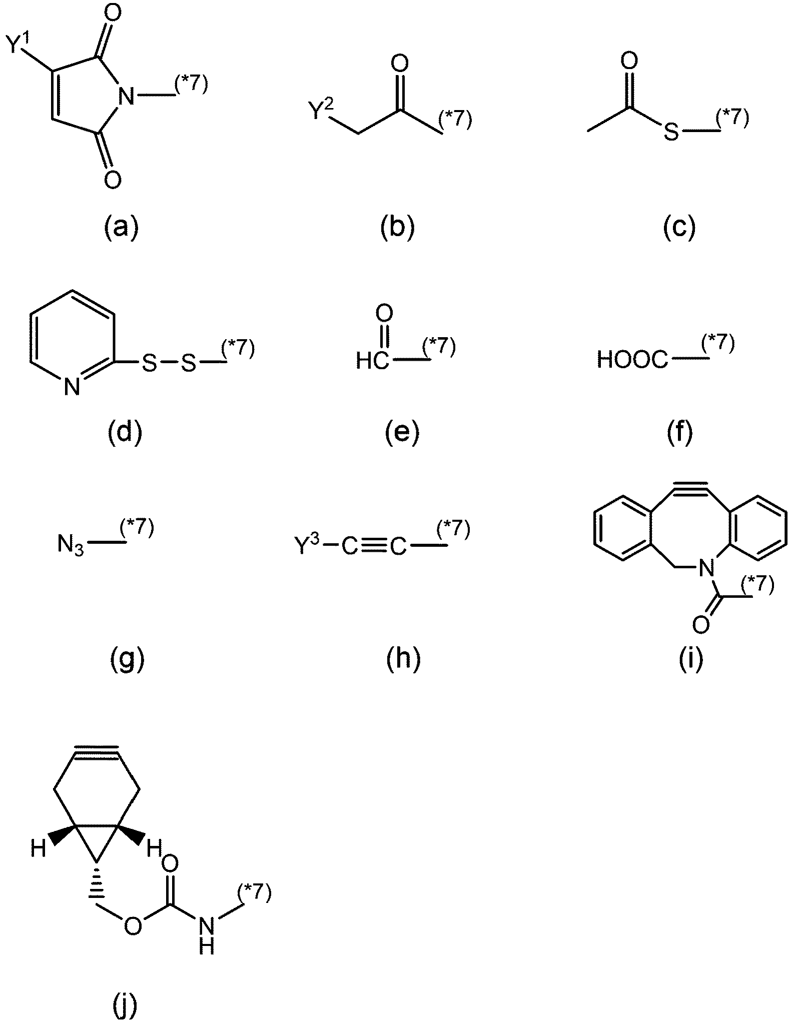

In the formulas, Y¹ and Y³ are each independently a hydrogen atom or a hydrocarbon group having 1 to 5 carbon atoms, and specific examples of the hydrocarbon group include a methyl group, an ethyl group, a propyl group, an isopropyl group, a butyl group, a t-butyl group, and a pentyl group. Y² is a halogen atom selected from a chlorine atom, a bromine atom, and an iodine atom.

In the formula (p2), formula (p4), and formula (p8), s is 0 or 1, t is 2 or 3, and v is 0 or 2. Preferred embodiments are residues represented by the following formulas (p14) to (p19).

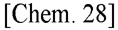

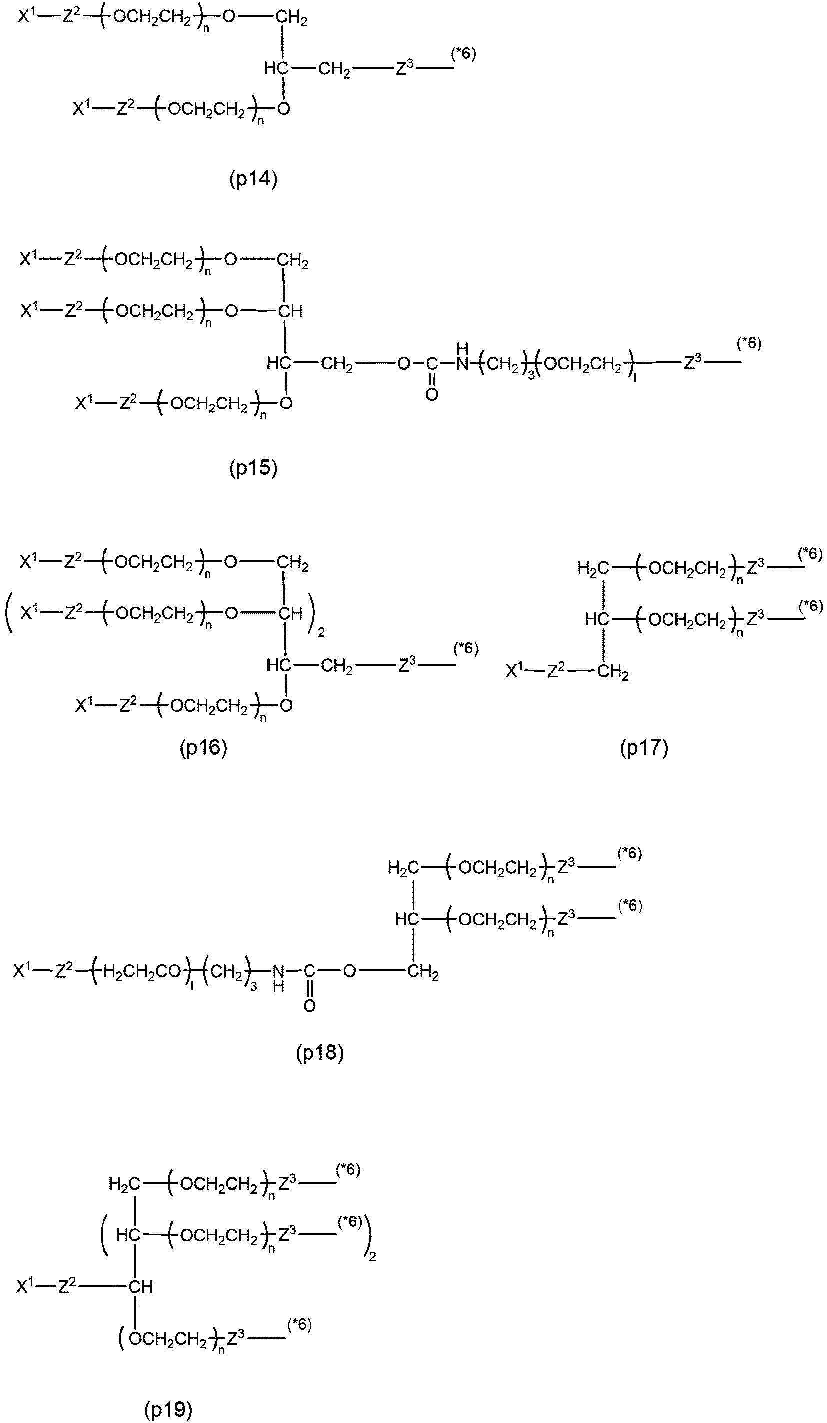

In the formulas (p14) to (p19), X¹, Z², Z³, n, l, and (*6) are as defined above.

In the formulas (1) to (4), R¹, R², R³, R⁴, R⁵, and R¹² are each independently a hydrogen atom or a hydrocarbon group having 1 to 10 carbon atoms, and specific examples of the hydrocarbon group include a methyl group, an ethyl group, a propyl group, an isopropyl group, a t-butyl group, a phenyl group, and a benzyl group, and a hydrogen atom or a methyl group is more preferred.

In the formulas (1) to (4), R⁶ is a hydrogen atom or a hydrocarbon group having 1 to 24 carbon atoms which may be substituted. Specific examples of the hydrocarbon group which may be substituted include a methyl group, a fluoromethyl group, a difluoromethyl group, a trifluoromethyl group, a bromomethyl group, a dibromomethyl group, a tribromomethyl group, a chloromethyl group, a dichloromethyl group, a trichloromethyl group, an ethyl group, a propyl group, an isopropyl group, a butyl group, a t-butyl group, a pentyl group, an isopentyl group, a hexyl group, a heptyl group, a 2-ethylhexyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, an eicosyl group, a heneicosyl group, a docosyl group, a tricosyl group, a tetracosyl group, a phenyl group, a benzyl group, a cresyl group, a butylphenyl group, a dodecylphenyl group, and a trityl group. Preferred is a methyl group, a fluoromethyl group, a difluoromethyl group, a trifluoromethyl group, a bromomethyl group, a dibromomethyl group, a tribromomethyl group, a chloromethyl group, a dichloromethyl group, a trichloromethyl group, an ethyl group, or a phenyl group which may be substituted.

The phenyl group which may be substituted is represented by the following formula (15),

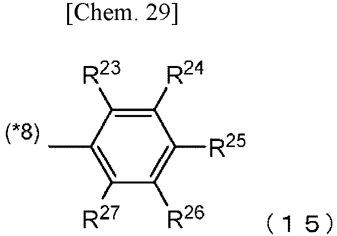

In the formula, R²³ to R²⁷ are each independently an electron-withdrawing substituent, an electron-donating substituent, or a hydrogen atom. Examples of the electron-withdrawing substituent include an acyl group having 2 to 5 carbon atoms, an alkoxycarbonyl group having 2 to 5 carbon atoms, a carbamoyl group having 2 to 5 carbon atoms, an acyloxy group having 2 to 5 carbon atoms, an acylamino group having 2 to 5 carbon atoms, an alkoxycarbonylamino group having 2 to 5 carbon atoms, a fluorine atom, a chlorine atom, a bromine atom, an iodine atom, an alkylsulfanyl group having 1 to 4 carbon atoms, an alkylsulfonyl group having 1 to 4 carbon atoms, an arylsulfonyl group having 6 to 10 carbon atoms, a nitro group, a trifluoromethyl group, and a cyano group. Preferred examples thereof include an acetyl group, a methoxycarbonyl group, a methylcarbamoyl group, an acetoxy group, an acetamide group, a methoxycarbonylamino group, a fluorine atom, a chlorine atom, a bromine atom, an iodine atom, a methylsulfanyl group, a phenylsulfonyl group, a nitro group, a trifluoromethyl group, and a cyano group.

The electron-donating substituent may be an alkyl group having 1 to 4 carbon atoms, and preferred examples thereof include a methyl group, an ethyl group, a propyl group, an isopropyl group, and a t-butyl group. Examples of the electron-donating substituent at the para position and the ortho position of the phenyl group, that is, at R²³, R²⁵, or R²⁷, include an alkoxy group having 1 to 4 carbon atoms, an aryl group having 6 to 10 carbon atoms, and an aryloxy group having 6 to 10 carbon atoms. Preferred examples thereof include a methoxy group, an ethoxy group, a propoxy group, an isopropoxy group, a t-butoxy group, a phenyl group, and a phenoxy group. Examples of the electron-withdrawing substituent at the meta position of the phenyl group, that is, at R²⁴ or R²⁶, and examples of the electron-donating substituent at the para position and the ortho position of the phenyl group, that is, at R²³, R²⁵, or R²⁷, include an alkoxy group having 1 to 4 carbon atoms, an aryl group having 6 to 10 carbon atoms, and an aryloxy group having 6 to 10 carbon atoms. Preferred examples thereof include a methoxy group, an ethoxy group, a propoxy group, an isopropoxy group, a t-butoxy group, a phenyl group, and a phenoxy group.

(*8) represents a bonding point with the carbon atom in the acetal structure.

In the formulas (1) to (4), R⁷, R⁸, R⁹, R¹⁰, and R¹¹ are each independently an electron-withdrawing substituent, an electron-donating substituent, or a hydrogen atom. Examples of the electron-withdrawing substituent include an acyl group having 2 to 5 carbon atoms, an alkoxycarbonyl group having 2 to 5 carbon atoms, a carbamoyl group having 2 to 5 carbon atoms, an acyloxy group having 2 to 5 carbon atoms, an acylamino group having 2 to 5 carbon atoms, an alkoxycarbonylamino group having 2 to 5 carbon atoms, a fluorine atom, a chlorine atom, a bromine atom, an iodine atom, an alkylsulfanyl group having 1 to 4 carbon atoms, an alkylsulfonyl group having 1 to 4 carbon atoms, an arylsulfonyl group having 6 to 10 carbon atoms, a nitro group, a trifluoromethyl group, and a cyano group. Preferred examples thereof include an acetyl group, a methoxycarbonyl group, a methylcarbamoyl group, an acetoxy group, an acetamide group, a methoxycarbonylamino group, a fluorine atom, a chlorine atom, a bromine atom, an iodine atom, a methylsulfanyl group, a phenylsulfonyl group, a nitro group, a trifluoromethyl group, and a cyano group.

The electron-donating substituent may be an alkyl group having 1 to 4 carbon atoms, and preferred examples thereof include a methyl group, an ethyl group, a propyl group, an isopropyl group, and a t-butyl group. Examples of the electron-donating substituent at the para position and the ortho position of the phenyl group, that is, at R⁷, R¹⁰, or R¹¹, include an alkoxy group having 1 to 4 carbon atoms, an aryl group having 6 to 10 carbon atoms, and an aryloxy group having 6 to 10 carbon atoms. Preferred examples thereof include a methoxy group, an ethoxy group, a propoxy group, an isopropoxy group, a t-butoxy group, a phenyl group, and a phenoxy group. Examples of the electron-withdrawing substituent at the meta position of the phenyl group, that is, at R⁸ or R⁹, and examples of the electron-donating substituent at the para position and the ortho position of the phenyl group, that is, at R⁷, R¹⁰, or R¹¹, include an alkoxy group having 1 to 4 carbon atoms, an aryl group having 6 to 10 carbon atoms, and an aryloxy group having 6 to 10 carbon atoms. Preferred examples thereof include a methoxy group, an ethoxy group, a propoxy group, an isopropoxy group, a t-butoxy group, a phenyl group, and a phenoxy group.

In the formulas (1) to (4), R¹³ is a hydrogen atom or a hydrocarbon group having 1 to 10 carbon atoms which may be substituted, R¹⁴ is a hydrocarbon group having 1 to 10 carbon atoms which may be substituted, and R¹³ may be bonded to R¹⁴.

The forms of R¹³ and R¹⁴ are preferably as follows depending on the presence or absence of a bond.

### (Case where R¹³ and R¹⁴ are not bonded to each other)

R¹³ is preferably a methyl group, an ethyl group, a propyl group, an isopropyl group, a butyl group, a t-butyl group, a pentyl group, an isopentyl group, a hexyl group, a heptyl group, or a hydrogen atom, more preferably a methyl group, an ethyl group, a propyl group, an isopropyl group, a butyl group, a t-butyl group, or a hydrogen atom, and still more preferably a methyl group, an ethyl group, a propyl group, an isopropyl group, or a hydrogen atom.

R¹⁴ is an alkylene group which may contain an ether bond, an ester bond, a carbonate bond, a urethane bond, an amide bond, or a secondary amino group. The alkylene group has 1 to 10 carbon atoms, examples thereof include the divalent spacers (z1) to (z8) described in the group (I) described above, and the total of q3 and q4 in (z1) to (z8) is preferably 1 to 10.

In a more preferred embodiment, R¹³ is a methyl group, an ethyl group, a propyl group, an isopropyl group, a butyl group, a t-butyl group, or a hydrogen atom, and R¹⁴ is (z1), (z2), (z3), (z6), (z7), or (z8).

In a preferred embodiment when R¹³ and R¹⁴ are not bonded to each other, it is more preferable that R¹³ is a methyl group, an ethyl group, a propyl group, an isopropyl group, or a hydrogen atom, and R¹⁴ is (z1), (z2), or (z7).

### (Case where R¹³ and R¹⁴ are bonded to each other)

R¹³ is a hydrocarbon group having 1 to 10 carbon atoms which may be substituted and which connects N and R¹⁴, which is represented by the following formula (5).

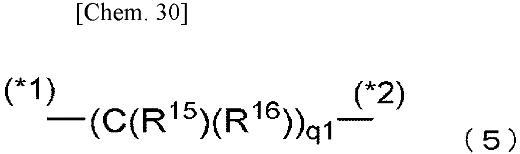

R¹⁵ and R¹⁶ are each independently a hydrogen atom or a hydrocarbon group having 1 to 4 carbon atoms which may be substituted, q1 is an integer of 1 to 4, (*1) represents a bonding point with N, and (*2) represents a bonding point with R¹⁴. R¹⁵ and R¹⁶ are more preferably a methyl group, an ethyl group, or a hydrogen atom.

R¹⁴ is a hydrocarbon group having 1 to 10 carbon atoms which may be substituted and which connects N and P¹, which is represented by the following formula (6).

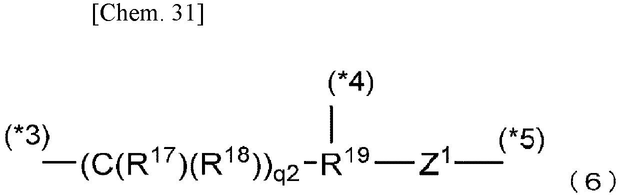

**In** the formula (6), R¹⁷ and R¹⁸ are each independently a hydrogen atom or a hydrocarbon group having 1 to 4 carbon atoms which may be substituted, R¹⁹ is CR²⁰ or a nitrogen atom, R²⁰ is a hydrogen atom or a hydrocarbon group having 1 to 4 carbon atoms which may be substituted, q2 is an integer of 0 to 3, Z¹ is a single bond or a divalent spacer connecting P¹ and a carbon atom or a nitrogen atom of CR²⁰, (*3) represents a bonding point with N, (*4) represents a bonding point with R¹³, and (*5) represents a bonding point with P¹.

As R¹⁷, R¹⁸, and R¹⁹, preferred examples include a methyl group, an ethyl group, a propyl group, a butyl group, an isopropyl group, a t-butyl group, or a hydrogen atom, and more preferably a methyl group, an ethyl group, or a hydrogen atom.

Z¹ is a single bond or a divalent spacer. The divalent spacer is not particularly limited as long as it is more stable than the acetal structure, and Z¹ is preferably an ether bond, an ester bond, a carbonate bond, a urethane bond, an amide bond, a secondary amino group, or an alkylene group containing these, or a single bond. The alkylene group has 1 to 24 carbon atoms, examples thereof include the spacers (z1) to (z8) described in the group (I) described above, and the detailed description of (z1) to (z8) is the same as that described above.

In a more preferred embodiment when R¹³ and R¹⁴ are bonded to each other, in R¹³, R¹⁵ and R¹⁶ are each a methyl group, an ethyl group, or a hydrogen atom, and q1 is 1 to 4, and in R¹⁴, R¹⁷ and R¹⁸ are each a methyl group, an ethyl group, or a hydrogen atom, R¹⁹ is CR²⁰ or a nitrogen atom, R²⁰ is a methyl group, an ethyl group, or a hydrogen atom, q2 is 0 to 3, the total of q1 and q2 is 2 to 5, and Z¹ is a single bond, (z1), (z2), (z3), (z6), (z7), or (z8).

In a still more preferred embodiment when R¹³ and R¹⁴ are bonded to each other, in R¹³, R¹⁵ and R¹⁶ are each a methyl group or a hydrogen atom, and q1 is 1 to 4, and in R¹⁴, R¹⁷ and R¹⁸ are each a methyl group or a hydrogen atom, R¹⁹ is CR²⁰ or a nitrogen atom, R²⁰ is a methyl group or a hydrogen atom, q2 is 0 to 3, the total of q1 and q2 is 3 to 5, and Z¹ is a single bond, (z1), (z2), (z3), (z6), or (z7).

In a more preferred embodiment of the present invention, in the formulas (1) to (4), m is 0, R¹ and R² are each a hydrogen atom, and R³, R⁴, R⁵, and R¹¹ are each a hydrogen atom or a methyl group having 1 carbon atom, and more preferably, R³, R⁴, and R⁵ are each a hydrogen atom, and R¹¹ is a methyl group.

In a still more preferred embodiment of the present invention, in the formulas (1) to (4), it is still more preferred that m is 0, R¹ and R² are each a hydrogen atom, R³, R⁴, R⁵, and R¹² are each independently a hydrogen atom or a methyl group, R¹³ and R¹⁴ in L¹ are bonded to each other, R¹³ is a group represented by -CH₂-CH₂-, that is, R¹⁵ and R¹⁶ are each a hydrogen atom and q1 is 2, and R¹⁴ is a group represented by -CH₂-CH₂-CH< or -CH₂-CH₂-N<, that is, R¹⁷ and R¹⁸ are each a hydrogen atom, R¹⁹ is a methine group or a nitrogen atom, q2 is 2, and Z¹ is a single bond or a methylene group.

Next, a method for producing the amino group-containing acetal-type releasable polyoxyethylene derivative according to the present invention will be described.

In order to produce the amino group-containing acetal-type releasable polyoxyethylene derivative in the present invention, there are performed: a coupling step of coupling a polyoxyethylene derivative with a benzaldehyde derivative or a phenyl ketone derivative to obtain a coupling product represented by the following formula (7) or (8); an acetalization step of, after the coupling step, reacting the coupling product represented by the formula (7) or formula (8) with a phenol having a hydroxymethyl group at a 2-position and a substituent (-CH=CB¹)C(R¹)(R²)-OH (B¹, m, R¹, and R² are as described above) at a 4-position or a 6-position under an acidic condition to obtain an acetal structure; and a leaving group structure introduction step of introducing a leaving group structure (-OC(O)E¹) (E¹ is as described above) to a terminal of the substituent at the 4-position or the 6-position after the acetalization step. 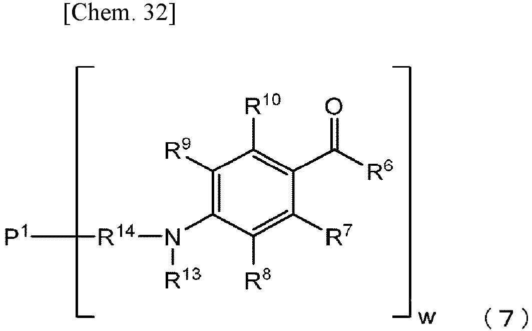 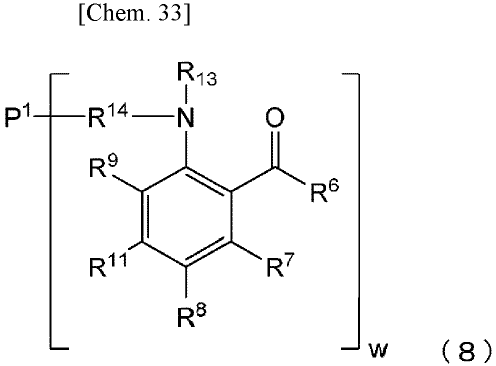 (In the formulas (7) and (8), P¹, w, R⁶, R⁷, R⁸, R⁹, R¹⁰, R¹¹, R¹³, and R¹⁴ are as described above.)

The coupling step of coupling a polyoxyethylene derivative with a benzaldehyde derivative or a phenyl ketone derivative is a step of obtaining a coupling product represented by the formula (7) or (8) via a reaction step represented by a reaction 1-1 or a reaction 1-2, and a purification step may be performed after the reaction step.

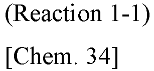

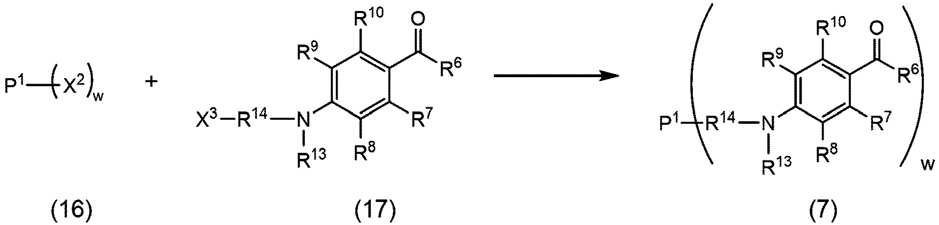

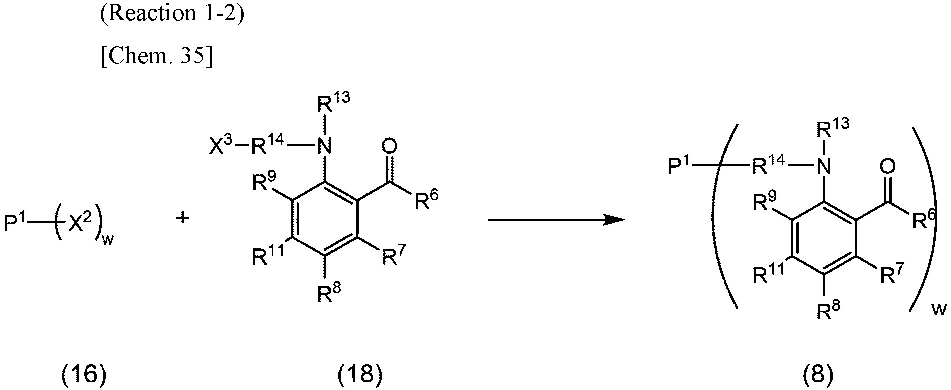

The polyoxyethylene derivative for use in the coupling reaction is a compound represented by a formula (16), and in the formula (16), the detailed description of P¹ and w is the same as that described above, X² is an amino group, a carboxy group, an active ester group, an active carbonate group, a formyl group, a maleimidyl group, a hydroxy group, an alkylene group, an azide group, or E². E² is a leaving group, the leaving group is not particularly limited as long as it is a group having reactivity in the coupling reaction, and examples thereof include a chloro group, a bromo group, an iodo group, a mesylate group, a tosylate group, and a chloromethanesulfonate group, and a mesylate group or a tosylate group is preferred, and a mesylate group is more preferred.

In the formulas (17) and (18), the detailed description of R⁶, R⁷, R⁸, R⁹, R¹¹, R¹³, and R¹⁴ is the same as that described above, and X³ is not particularly limited as long as it reacts with X² to form a covalent bond, and is specifically an amino group, a carboxy group, a thiol group, a hydroxy group, an alkylene group, an azide group, or E². E² is the same as described above, and preferred combinations of X² and X³ are combinations shown in Table 1.

**[Table 1]**

| | |
|---|---|
| X² | X³ |
| Amino group | Carboxy group |
| Carboxy group | Amino group |
| Active ester group | Amino group |
| Active carbonate group | Amino group |
| Formyl group | Amino group |
| Maleimidyl group | Thiol group |
| Hydroxy group | E² |
| Alkylene group | Azide group |
| Azide group | Alkylene group |
| E² | Hydroxy group |

For example, when X² in the formula (16) in the reaction 1-1 and the reaction 1-2 is E², the compound represented by the formula (16) is coupled with a benzaldehyde derivative or a phenyl ketone derivative represented by a formula (17) or formula (18) in which X³ is a hydroxy group in an aprotic solvent such as toluene, benzene, xylene, acetonitrile, ethyl acetate, diethyl ether, t-butyl methyl ether, tetrahydrofuran, chloroform, dichloromethane, dimethyl sulfoxide, dimethylformamide, or dimethylacetamide, or without a solvent, in the presence of an organic base such as triethylamine, N-methylmorpholine, potassium t-butoxide, or sodium hexamethyldisilazane, or an inorganic base such as potassium carbonate, potassium hydroxide, or sodium hydride. Proportions of the benzaldehyde derivative or the phenyl ketone derivative, the organic base, and the inorganic base to be used are not particularly limited, and are preferably equimolar or more relative to a chemically reactive functional group in the compound represented by the formula (16). In addition, an organic base may also be used as a solvent.

When X² in the formula (16) in the reaction 1-1 and the reaction 1-2 is not E², the conditions of the reaction step of the combinations of X² and X³ shown in Table 1 can be found in many general textbooks, and the reaction step can be performed according to, for example, "Greg T. Hermanso, Bioconjugate Techniques, 3rd ed.".

After the reaction step in the reaction 1-1 and the reaction 1-2, impurities produced as by-products in the reaction, remaining compounds not consumed in the reaction, and base catalysts are preferably removed by the purification step. The purification method is not particularly limited, and purification can be performed by extraction, recrystallization, an adsorption treatment, reprecipitation, column chromatography, supercritical extraction, or the like.

Here, a dialkylation step of reacting the coupling product represented by the formula (7) or (8) with a monohydric alcohol under an acidic condition to obtain a dialkyl acetal structure represented by a formula (9) or (10) may be provided between the coupling step and the acetalization step, and the acetalization step may be performed using the dialkyl acetal structure represented by the formula (9) or (10) obtained in the dialkylation step as a substitute for the coupling product represented by the formula (7) or (8).

The monohydric alcohol is an alcohol containing R²¹-OH, R²²-OH, or R²¹-OH and R²²-OH. R¹⁶ and R¹⁷ are each independently a hydrocarbon group having 1 to 10 carbon atoms, preferably a methyl group, an ethyl group, a propyl group, an isopropyl group, a butyl group, and a t-butyl group, more preferably a methyl group, an ethyl group, and a propyl group, and still more preferably a methyl group and an ethyl group.

The reaction between the coupling product represented by the formula (7) or formula (8) and the monohydric alcohol is performed in an aprotic solvent such as toluene, benzene, xylene, acetonitrile, ethyl acetate, diethyl ether, t-butyl methyl ether, tetrahydrofuran, chloroform, dichloromethane, dimethyl sulfoxide, dimethylformamide, or dimethylacetamide, or without a solvent, in the presence of an acid catalyst. The acid catalyst may be either an organic acid or an inorganic acid, and is not particularly limited, and specific examples thereof include p-toluenesulfonic acid, pyridinium p-toluenesulfonate, methanesulfonic acid, 10-camphorsulfonic acid, hydrogen chloride, iodine, ammonium chloride, oxalic acid, and a boron trifluoride diethyl ether complex.

Further, a dehydrating agent may be added to the reaction system to remove water molecules generated in the reaction. The type of the dehydrating agent is not particularly limited as long as the dehydrating agent does not interfere with the reaction, and examples thereof include an orthoester such as methyl orthoformate, sodium sulfate, magnesium sulfate, alumina, silica gel, or a molecular sieve, preferably an orthoester and a molecular sieve.

After the reaction between the coupling product represented by the formula (7) or (8) and the monohydric alcohol, impurities produced as by-products in the reaction, remaining compounds not consumed in the reaction, and base catalysts are preferably removed by the purification step. The purification method is not particularly limited, and purification can be performed by extraction, recrystallization, an adsorption treatment, reprecipitation, column chromatography, supercritical extraction, or the like.

After the coupling step, the acetalization step of reacting, under an acidic condition, the coupling product represented by the formula (7) or formula (8) with a phenol having a hydroxymethyl group at a 2-position and a substituent (-CH=CB¹)ₘC(R¹)(R²)-OH (B¹, m, R¹, and R² are as described above) at a 4-position or a 6-position is a step of obtaining an acetal structure represented by a formula (20), (21), (23), or (24) through a reaction step represented by any one of reactions 2-1 to 2-4, and a purification step may be performed after the reaction step.

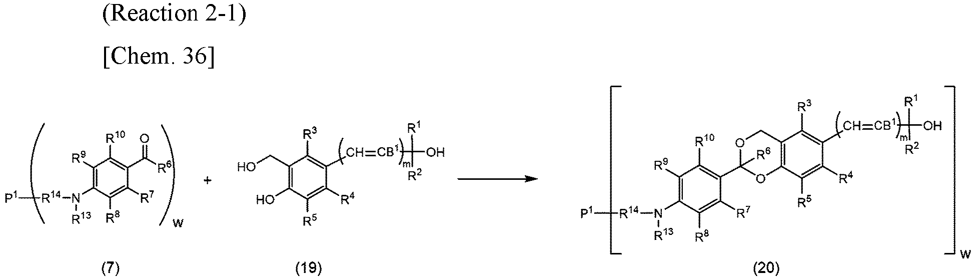

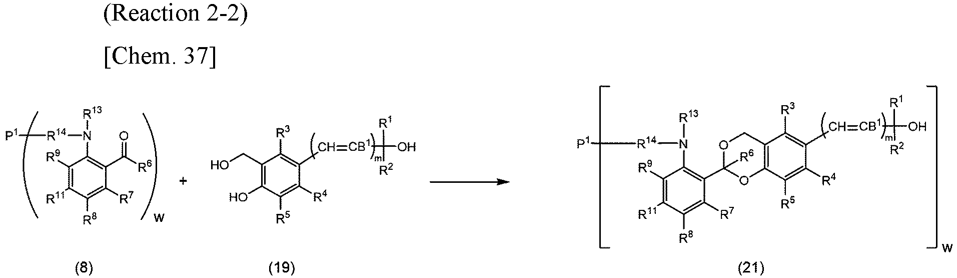

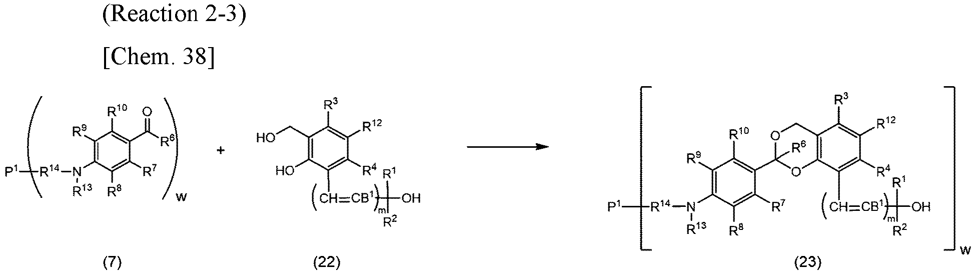

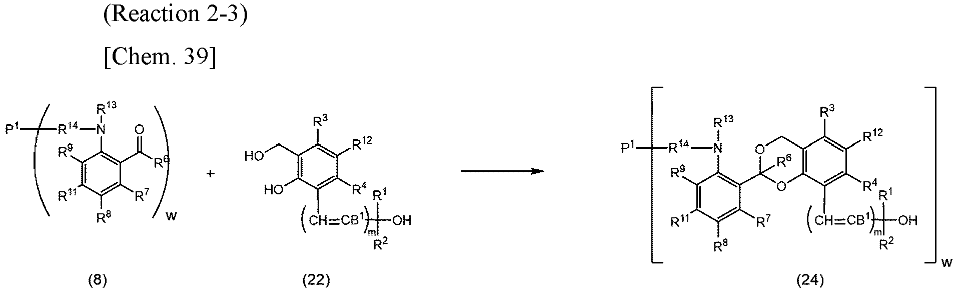

In the formulas (19) to (24), details of P¹, L¹, B¹, m, R¹, R², R³, R⁴, R⁵, R⁶, R⁷, R⁸, R⁹, R¹⁰, R¹¹, R¹², R¹³, and R¹⁴ are the same as those described in the amino group-containing acetal-type releasable polyoxyethylene derivative.

Each of the reactions 2-1 to 2-4 is a step of reacting the coupling product represented by formula (7) or formula (8) with the phenol represented by the formula (19) or formula (22) in an aprotic solvent such as toluene, benzene, xylene, acetonitrile, ethyl acetate, diethyl ether, t-butyl methyl ether, tetrahydrofuran, chloroform, dichloromethane, dimethyl sulfoxide, dimethylformamide, or dimethylacetamide, or without a solvent, in the presence of an acid catalyst, to obtain the acetal structure represented by the formula (20), (21), (23), or (24).

The acid catalyst may be either an organic acid or an inorganic acid, and is not particularly limited, and specific examples thereof include p-toluenesulfonic acid, pyridinium p-toluenesulfonate, methanesulfonic acid, 10-camphorsulfonic acid, hydrogen chloride, iodine, ammonium chloride, oxalic acid, and a boron trifluoride diethyl ether complex. Further, a dehydrating agent may be added to the reaction system to remove water molecules generated in the reaction. The type of the dehydrating agent is not particularly limited as long as the dehydrating agent does not interfere with the reaction, and examples thereof include sodium sulfate, magnesium sulfate, alumina, silica gel, or a molecular sieve, preferably a molecular sieve.

After the reaction step in the reactions 2-1 to 2-4, impurities produced as by-products in the reaction, remaining compounds not consumed in the reaction, and base catalysts are preferably removed by the purification step. The purification method is not particularly limited, and purification can be performed by extraction, recrystallization, an adsorption treatment, reprecipitation, column chromatography, supercritical extraction, or the like.

Particularly, between the acetalization step and the step of introducing a leaving group structure to the hydroxy group, a deprotection step of deprotecting an amino group protected by a protective group in the coupling product represented by the formula (7) or (8) or the dialkyl acetal structure represented by the formula (9) or (10) and a step of introducing, into the amino group deprotected after the deprotection step, a functional group reactive with a biofunctional molecule may be provided. Conditions for the deprotection step for the protective group and the step of introducing a functional group reactive with a biofunctional molecule into the deprotected amino group can be found in many general textbooks. The deprotection step can be performed, for example, according to "Wuts, P. G. M.; Greene, T. W. Protective Groups in Organic Synthesis, 4th ed.; Wiley-Interscience: New York, 2007", and the step of introducing a functional group reactive with a biofunctional molecule into the deprotected amino group can be performed, for example, according to "Greg T. Hermanso, Bioconjugate Techniques, 3rd ed.".

The leaving group structure introduction step of introducing a leaving group structure instead of a terminal hydroxy group after the acetalization step or the step of introducing a functional group reactive with a biofunctional molecule into the deprotected amino group is a step of converting a hydroxy group in the polyoxyethylene derivative represented by formula (20), (21), (23), or (24) into a succinimidyloxycarbonyloxy group, a phthalimidyloxycarbonyloxy group, a 4-nitrophenoxycarbonyloxy group, a 1-imidazolylcarbonyloxy group, a pentafluorophenoxycarbonyloxy group, a benzotriazol-1-yloxycarbonyloxy group, or a 7-azabenzotriazol-1-yloxycarbonyloxy group, and a purification step may be performed after the reaction step.

The conversion of the hydroxy group is performed by condensing the polyoxyethylene derivative represented by the formula (20), (21), (23), or (24) with a reagent for conversion into, for example, each leaving group as shown in Table 1, in an aprotic solvent such as toluene, benzene, xylene, acetonitrile, ethyl acetate, diethyl ether, t-butyl methyl ether, tetrahydrofuran, chloroform, dichloromethane, dimethyl sulfoxide, dimethylformamide, or dimethylacetamide, or without a solvent, in the presence of an organic base such as triethylamine, N-methylmorpholine, pyridine, or 4-dimethylaminopyridine or an inorganic base such as sodium carbonate, sodium hydrogencarbonate, sodium acetate, or potassium carbonate. Proportions of the reagents shown in Table 1 and the base catalysts to be used are not particularly limited, and are preferably equimolar or more relative to the hydroxy group in the polyoxyethylene derivative represented by the formula (20), (21), (23), or (24). In addition, the reagents shown in Table 2 may be commercially available products or may be produced using known reactions.

**[Table 2]**

| Leaving group structure (-OC(O)E¹) | Reagent |
|---|---|
| Succinimidyloxycarbonyloxy group | 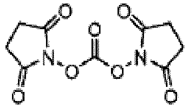 |
| Phthalimidyloxycarbonyloxy group | 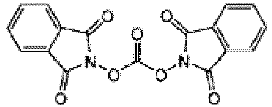 |
| 4-Nitrophenoxycarbonyloxy group | 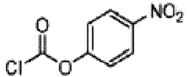 |
| 1-lmidazolylcarbonyloxy group | 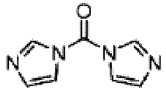 |
| Pentafluorophenoxycarbonyloxy group | 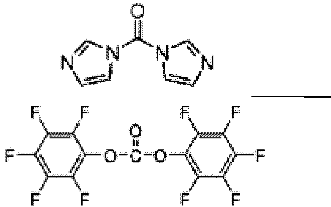 |
| Benzotriazol-1-yloxycarbonyloxy group | 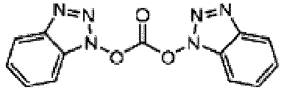 |
| 7-Azabenzotriazol-1-yloxycarbonyloxy group | 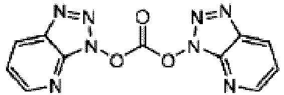 |

After the reaction step in the leaving group structure introduction step, impurities produced as by-products in the reaction, remaining compounds not consumed in the reaction, and base catalysts are preferably removed by the purification step. The purification method is not particularly limited, and purification can be performed by extraction, recrystallization, an adsorption treatment, reprecipitation, column chromatography, supercritical extraction, or the like.

An acetal-type releasable polyoxyethylene conjugate in the present invention is obtained by reacting the -OC(O)E¹ group in the acetal-type releasable polyethylene glycol derivative with an amino group contained in a biofunctional molecule, and is represented by the following formula (9), (10), (11), or (12).

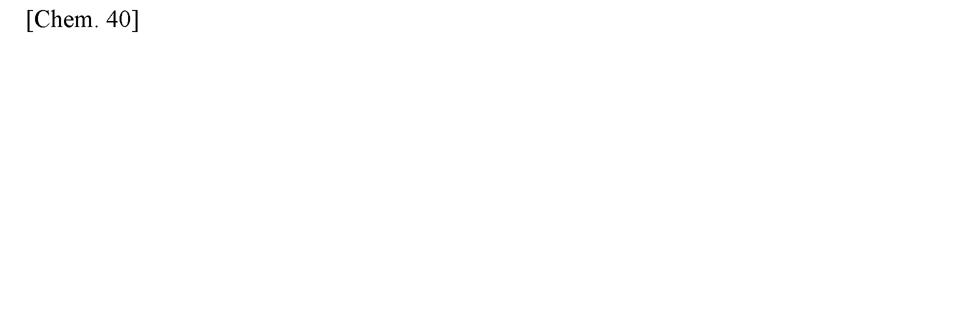

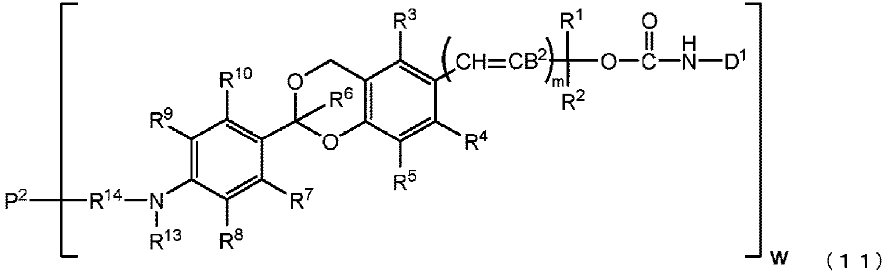

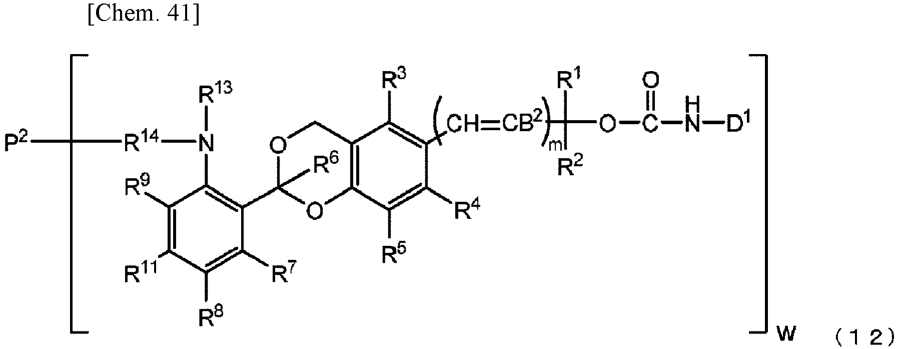

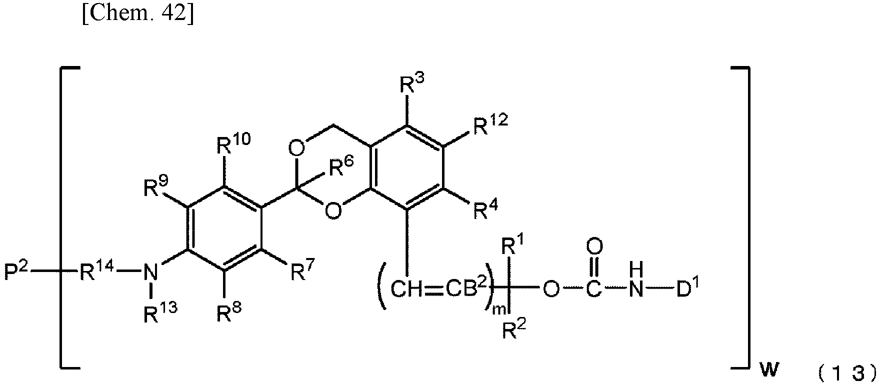

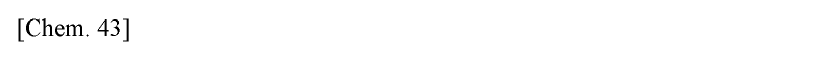

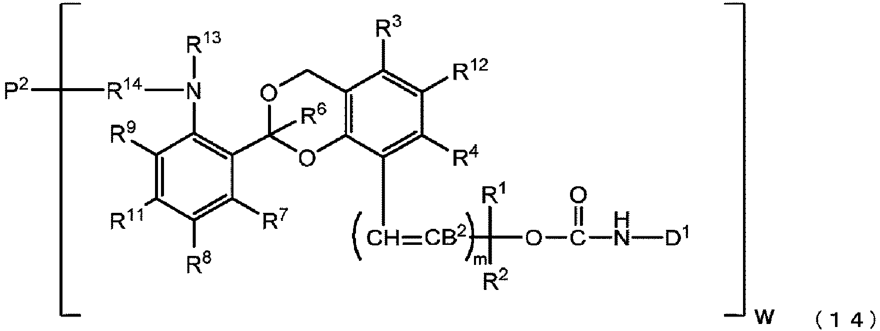

In the formula (11), formula (12), formula (13), and formula (14),
B² is a hydrogen atom or -C(R¹)(R²)OC(O)NHD¹,
D¹ is a residue obtained by removing, from amino groups contained in a biofunctional molecule, the amino group constituting a carbamate bond,
P² is a polyoxyethylene derivative moiety or a conjugate of a polyoxyethylene derivative moiety and a biofunctional molecule,
w is an integer of 1 to 8,
R¹, R², R³, R⁴, R⁵, and R¹² are each a hydrogen atom or a hydrocarbon group having 1 to 10 carbon atoms,
R⁶ is a hydrogen atom or a hydrocarbon group having 1 to 24 carbon atoms which may be substituted,
R⁷, R⁸, R⁹, R¹⁰, and R¹¹ are each independently an electron-withdrawing substituent, an electron-donating substituent, or a hydrogen atom,
R¹³ is a hydrogen atom or a hydrocarbon group having 1 to 10 carbon atoms which may be substituted,
R¹⁴ is a hydrocarbon group having 1 to 10 carbon atoms which may be substituted,
R¹³ may be bonded to R¹⁴, and
m is 0 or 1.

In the formulas (11) to (14), details of R¹ to R¹², L¹, and m are the same as those described above.

In the formulas (11) to (14), B² is a hydrogen atom or -C(R¹)(R²)OC(O)NHD¹, and preferably a hydrogen atom.

In the formulas (11) to (14), D¹ is a residue obtained by removing, from amino groups contained in a biofunctional molecule, the amino group constituting a carbamate bond, and carbamate bonds may be formed independently from each other with a plurality of amino groups contained in the biofunctional molecule. For example, in the case where the -OC(O)E¹ group in the amino group-containing acetal-type releasable polyoxyethylene derivative forms a carbamate bond with one of the amino groups contained in the biofunctional molecule, the number of P² in the amino group-containing acetal-type releasable polyoxyethylene conjugate is one, and in the case where the -OC(O)E¹ group forms the carbamate bond with two of the amino groups, the number of P² is two.

The biofunctional molecule is not particularly limited as long as it is a substance involved in diagnosis, cure, mitigation, treatment or prevention of a disease in humans or other animals. Specific examples thereof include proteins, peptides, nucleic acids, cells, and viruses, and preferred examples of proteins or peptides include hormones, cytokines, antibodies, aptamers, and enzymes.

More specifically, examples of the cytokines include immune-regulating interferon types I, II, and III, interleukins, tumor necrosis factors, and receptor antagonists thereof. Examples of growth factors include erythropoietin as a hematopoietic factor, and granulocyte colony-stimulating factor (GCSF) as a stimulating factor, and examples of blood coagulation factors include factor V, factor VII, factor VIII, factor IX, factor X, and factor XII. Examples of the hormones include calcitonin, insulin and analogs thereof, exenatide, GLP-1, somatostatin, and a human growth hormone. Examples of the antibodies include full-length antibodies, examples of antibody fragments include Fab and svFV, examples of aptamers include DNA aptamers and RNA aptamers, and examples of enzymes include superoxide dismutase and uricase.

Examples of preferred proteins include interferons, interleukins, erythropoietin, GCSF, factor VIII, factor IX, a human growth hormone, and antibody fragments, and more preferably a human growth hormone, interferon, GCSF, erythropoietin, or antibody fragments (particularly Fab).

Examples of preferred peptides include insulin, bivalirudin, teriparatide, exenatide, enfuvirtide, degarelix, mifamurtide, nesiritide, goserelin, glatiramer, octreotide, lanreotide, icatibant, zicotinide, pramlintide, romiplostim, calcitonin, oxytocin, leuprorelin, and glucagon, and more preferably insulin, exenatide, and calcitonin (particularly salmon calcitonin).

In the formulas (9) to (12), P² is a polyoxyethylene derivative moiety or a conjugate of a polyoxyethylene derivative moiety and a biofunctional molecule.

Detailed description of the polyoxyethylene derivative moiety is the same as that for P¹ in the acetal-type releasable polyoxyethylene derivative moiety.

The conjugate of a polyoxyethylene derivative moiety and a biofunctional molecule is a group in which X¹ in P¹ in the acetal-type releasable polyoxyethylene derivative moiety is charged to D², and D² is a functional group formed by the reaction of a group reactive with a biofunctional molecule with the biofunctional molecule. Details of the functional group reactive with a biofunctional molecule are the same as those for X¹ in the acetal-type releasable polyoxyethylene derivative, and the biofunctional molecule is not particularly limited as long as it is a substance involved in diagnosis, cure, mitigation, treatment or prevention of a disease in humans or other animals. Specific examples thereof include proteins, peptides, nucleic acids, cells, and viruses, and preferred examples of proteins or peptides include hormones, cytokines, antibodies, aptamers, and enzymes.

Preferred examples of the biofunctional molecule in D² include a target-directed biofunctional molecule, such as antibodies and aptamers. Examples of the antibodies include antibody fragments such as Fab, Fab', and F(ab')₂, and examples of the aptamers include peptide aptamers, RNA aptamers, and DNA aptamers.

A method for producing the amino group-containing acetal-type releasable polyoxyethylene conjugate according to the present invention will be described. In order to produce the polyoxyethylene conjugate according to the present invention, there are performed: a coupling step of reacting the acetal-type polyoxyethylene derivative with a biofunctional molecule in a neutral or basic buffer solution which may contain a water-soluble organic solvent such as acetonitrile, dimethyl sulfoxide, or N,N-dimethylformamide to obtain the polyoxyethylene conjugate, and a purification step of removing the unreacted polyoxyethylene derivative and biofunctional molecule or by-products under a basic condition after the coupling step. Neutral or basic means a pH of 6.5 to 11.0, preferably a pH of 7.0 to 10.5, more preferably a pH of 7.0 to 10.0, and particularly preferably a pH of 7.0 to 9.0.

The neutral or basic buffer solution is an aqueous solution that has a buffer action that mitigates influences of adding a small amount of acid or base from the outside, or changing the concentration by dilution, thereby keeping the pH (hydrogen ion exponent) at a nearly constant neutral or basic level.

A water-soluble organic solvent may also be added to the buffer solution. In this case, examples of the water-soluble organic solvent include methanol, ethanol, propanol, isopropanol, tetrahydrofuran, acetone, acetonitrile, dimethyl sulfoxide, N,N-dimethylformamide, triethylamine, pyridine, or hexamethylphosphoric triamide, preferably methanol, ethanol, propanol, isopropanol, tetrahydrofuran, acetone, acetonitrile, dimethyl sulfoxide, or N,N-dimethylformamide, and more preferably acetonitrile, dimethyl sulfoxide, or N,N-dimethylformamide.

Examples of a specific method of the purification step performed after the coupling step include ion exchange chromatography, gel filtration chromatography, hydrophobic interaction chromatography, reverse phase chromatography, or affinity chromatography.

In the purification step, the unreacted polyoxyethylene derivative and biofunctional molecule or by-products can be removed under a neutral or basic condition under which the acetal structure in the acetal-type releasable polyoxyethylene conjugate is less likely to be hydrolyzed, and the neutral or basic condition refers to a pH of 6.5 to 11.0, preferably a pH of 7.0 to 10.5, more preferably a pH of 7.0 to 10.0, and particularly preferably a pH of 7.0 to 9.0.

### EXAMPLES

Hereinafter, the present invention will be described in more detail based on Examples, but the present invention is not limited to the following Examples.

In the following Examples, ¹H-NMR was obtained from JNM-ECZ400 or JNM-ECA600 manufactured by JEOL Ltd. A tube having a diameter of 5 mm was used for the measurement, and for a deuterated solvent, D₂O or d6-DMSO or CDCl₃ containing tetramethylsilane (TMS) was used as an internal standard substance. The molecular weight and the purity of the terminal functional group of the obtained acetal-type releasable polyoxyethylene conjugate were calculated by liquid chromatography (GPC and HPLC). In the liquid chromatography system, "HLC-8320GPC EcoSEC" manufactured by Tosoh Corporation was used for GPC, and "Nexera" manufactured by Shimadzu Corporation was used for HPLC.

### (Example 1-1)

To a three-necked flask, NaH (dispersion in paraffin liquid, 21.8 mg, 0.50 mmol) and THF (2.5 g) were charged, and then N-methyl-N-(2-hydroxyethyl)-4-aminobenzaldehyde (17.9 mg, 0.1 mmol) and SUNBRIGHT ME-200MS (α-methyl-ω-[(methylsulfonyl)oxy]poly(oxyethylene), 500 mg, 0.025 mmol) manufactured by NOF Corporation were dissolved therein, followed by a reaction at 60°C for 6 hours in a nitrogen atmosphere. Quenching was performed by adding a 25% ammonium chloride aqueous solution (10 mL), then extraction was performed using dichloromethane (10 mL), the organic layer was dried over anhydrous sodium sulfate, and then filtration was performed. The filtrate was concentrated, the concentrate was dissolved in ethyl acetate, hexane was added to cause crystallization, followed by filtration to obtain crystals, and the obtained crystals were dried under a reduced pressure to obtain a compound represented by a formula (25).

¹H-NMR (CDCl₃, internal standard TMS); δ (ppm): 3.10 (3H, s, -NCH₃-), 3.38 (3H, s, -(OCH₂CH₂)nOCH₃), 3.52-4.23 (m, -(OCH₂CH₂)ₙ-, -OCH₂CH₂NCH₃-), 6.73 (2H, d, arom. H), 7.72 (2H, d, arom. H), 9.73 (1H, s, -COH)

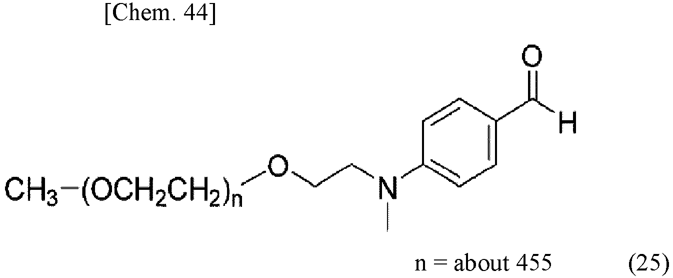

### (Example 1-2)

To a three-necked flask, the compound represented by the formula (25) (300 mg, 0.015 mmol), 2,6-bis(hydroxymethyl)-p-cresol (151.4 mg, 0.900 mmol), tetrahydrofuran (1.5 g), and BHT (0.3 mg) were charged and dissolved, and then a molecular sieve 5A (300 mg) and pyridinium p-toluenesulfonate (6.8 mg, 0.027 mmol) were added thereto, followed by a reaction at 40°C for 4 hours in a nitrogen atmosphere. N-methylmorpholine (5.5 mg, 0.054 mmol) was added and stirred at 25°C for 5 minutes in a nitrogen atmosphere, followed by filtration. The filtrate was diluted with ethyl acetate, and hexane was added to cause crystallization, followed by filtration to obtain crystals, and the obtained crystals were dried under a reduced pressure to obtain a compound represented by a formula (26).

¹H-NMR (CDCl₃, internal standard TMS); δ (ppm):2.30 (3H, s, -CH₃), 3.01 (3H, s, - NCH₃-), 3.38 (3H, s, -(OCH₂CH₂)nOCH₃), 3.52-4.23 (m, -(OCH₂CH₂)ₙ-, -OCH₂CH₂NCH₃-), 4.66 (1H, dd, -OCH₂OH), 4.76 (1H, dd, -OCH₂OH), 4.93 (1H, d, -CH₂O-), 5.14 (1H, d, -CH₂O-), 5.92 (1H, s, -CH<), 6.73 (2H, d, arom. H), 6.87 (1H, s, arom. H), 7.03(1H, s, arom. H), 7.40 (2H, d, arom. H)

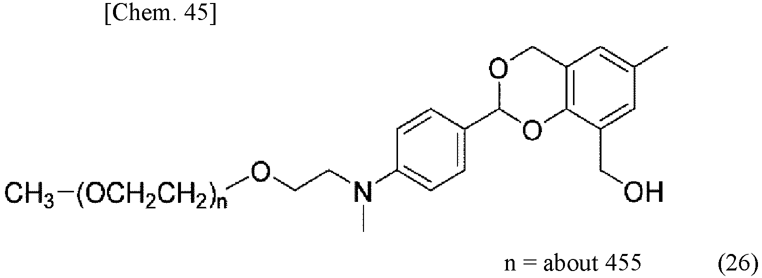

### (Example 1-3)

To a three-necked flask, the compound represented by the formula (26) (200 mg, 0.010 mmol), BHT (0.2 mg), and toluene (0.8 g) were charged and dissolved, and then triethylamine (15 mg, 0.15 mmol) and p-nitrophenyl chloroformate (20.2 mg, 0.1 mmol) were added thereto, followed by a reaction at 60°C for 3 hours in a nitrogen atmosphere. After the reaction, the resultant was diluted with a mixed solvent of acetonitrile and ethyl acetate containing BHT, and hexane was added to cause crystallization, followed by suction filtration to obtain crystals. The obtained crystals were dried under a reduced pressure to obtain a compound represented by a formula (27).

¹H-NMR (CDCl₃, internal standard TMS); δ (ppm):2.30 (3H, s, -CH₃), 3.01 (3H, s, - NCH₃-), 3.38 (3H, s, -(OCH₂CH₂)nOCH₃), 3.52-4.23 (m, -(OCH₂CH₂)ₙ-, -OCH₂CH₂NCH₃-), 4.93 (1H, d, -CH₂O-), 5.14 (1H, d, -CH₂O-), 5.34 (2H, dd, -OCH₂OCO-), 5.92 (1H, s, -CH<), 6.53 (2H, d, arom. H), 6.73 (2H, d, arom. H), 6.87 (1H, s, arom. H), 7.03 (1H, s, arom. H), 7.40 (2H, d, arom. H), 7.59 (2H, d, arom. H)

Number average molecular weight (Mn): 20,532

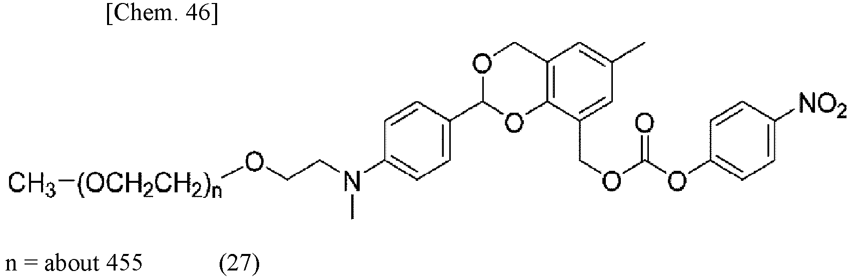

### (Example 2-1)

To a three-necked flask, NaH (dispersion in paraffin liquid, 21.8 mg, 0.50 mmol) and THF (2.5 g) were charged, and then 4-(4-hydoxypiperidin-1-ly)benzaldehyde (41.0 mg, 0.2 mmol) and SUNBRIGHT ME-200MS (α-methyl-ω-[(methylsulfonyl)oxy]poly(oxyethylene), 500 mg, 0.025 mmol) manufactured by NOF Corporation were dissolved therein, followed by a reaction at 60°C for 5 hours. Quenching was performed by adding a 25% ammonium chloride aqueous solution (10 mL), then extraction was performed using dichloromethane (10 mL), the organic layer was dried over anhydrous sodium sulfate, and then filtration was performed. The filtrate was concentrated, the concentrate was dissolved in ethyl acetate, hexane was added to cause crystallization, followed by filtration to obtain crystals, and the obtained crystals were dried under a reduced pressure to obtain a compound represented by a formula (28).

¹H-NMR (CDCl₃, internal standard TMS); δ (ppm): 1.71 (2H, ddt, -CH₂-), 1.99 (2H, ddt, -CH₂-), 3.21 (2H, ddd, -NCH₂-), 3.38 (3H, s, -(OCH₂CH₂)nOCH₃), 3.52-4.23 (m, - (OCH₂CH₂)ₙ-, -CH<, -NCH₂-), 6.91 (2H, d, arom. H), 7.73 (2H, d, arom. H), 9.76 (1H, s, -COH)

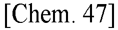

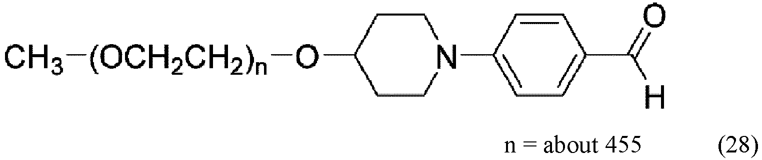

### (Example 2-2)

To a three-necked flask, the compound represented by the formula (28) (300 mg, 0.015 mmol), 2,6-bis(hydroxymethyl)-p-cresol (151.4 mg, 0.900 mmol), tetrahydrofuran (1.5 g), and BHT (0.3 mg) were charged and dissolved, and then a molecular sieve 5A (300 mg) and pyridinium p-toluenesulfonate (56.5 mg, 0.225 mmol) were added thereto, followed by a reaction at 40°C for 4 hours in a nitrogen atmosphere. N-methylmorpholine (45.5 mg, 0.45 mmol) was added and stirred at 25°C for 5 minutes in a nitrogen atmosphere, followed by filtration. The filtrate was diluted with ethyl acetate, and hexane was added to cause crystallization, followed by filtration to obtain crystals, and the obtained crystals were dried under a reduced pressure to obtain a compound represented by a formula (29).

¹H-NMR (CDCl₃, internal standard TMS); δ (ppm): 1.71 (2H, ddt, -CH₂-), 1.99 (2H, ddt, -CH₂-), 2.30 (3H, s, -CH₃), 2.99 (2H, ddd, -NCH₂-), 3.38 (3H, s, -(OCH₂CH₂)nOCH₃), 3.52-4.23 (m, -(OCH₂CH₂)ₙ-, -CH<, -NCH₂-), 4.66 (1H, dd, -OCH₂OH), 4.76 (1H, dd, -OCH₂OH), 4.93 (1H, d, -CH₂O-), 5,14 (1H, d, -CH₂O-), 5,93 (1H, s, -CH<), 6.76 (1H, s, arom. H), 6.95 (2H, d, arom. H), 7.02 (1H, s, arom. H), 7.43 (2H, d, arom. H)

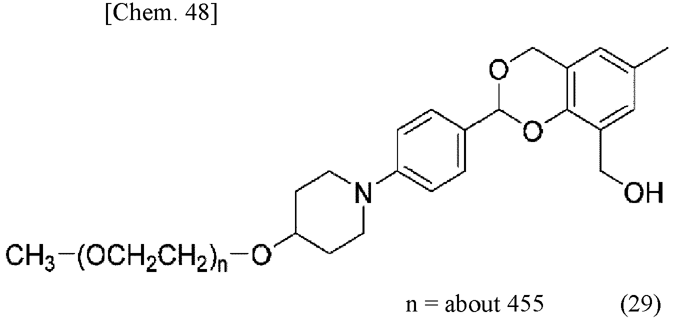

### (Example 2-3)

To a three-necked flask, the compound represented by the formula (29) (200 mg, 0.010 mmol), BHT (0.2 mg), and toluene (0.8 g) were charged and dissolved, and then triethylamine (15 mg, 0.15 mmol) and p-nitrophenyl chloroformate (20.2 mg, 0.1 mmol) were added thereto, followed by a reaction at 60°C for 3 hours in a nitrogen atmosphere. After the reaction, the resultant was diluted with a mixed solvent of acetonitrile and ethyl acetate containing BHT, and hexane was added to cause crystallization, followed by suction filtration to obtain crystals. The obtained crystals were dried under a reduced pressure to obtain a compound represented by a formula (30).
¹H-NMR (CDCl₃, internal standard TMS); δ (ppm): 1.71 (2H, ddt, -CH₂-), 1.99 (2H, ddt, -CH₂-), 2.30 (3H, s, -CH₃), 3.21 (2H, ddd, -NCH₂-), 3.38 (3H, s, -(OCH₂CH₂)nOCH₃), 3.52-4.23 (m, -(OCH₂CH₂)ₙ-, -CH<, -NCH₂-), 4.93 (1H, d, -CH₂O-), 5,14 (1H, d, -CH₂O-), 5.34 (2H, dd, -OCH₂OCO-), 5,93 (1H, s, -CH<), 6.53 (2H, d, arom. H), 6.76 (1H, s, arom. H), 6.95 (2H, d, arom. H), 7.02 (1H, s, arom. H), 7.43(2H, d, arom. H), 7.59 (2H, d, arom. H)
Number average molecular weight (Mn): 20,934

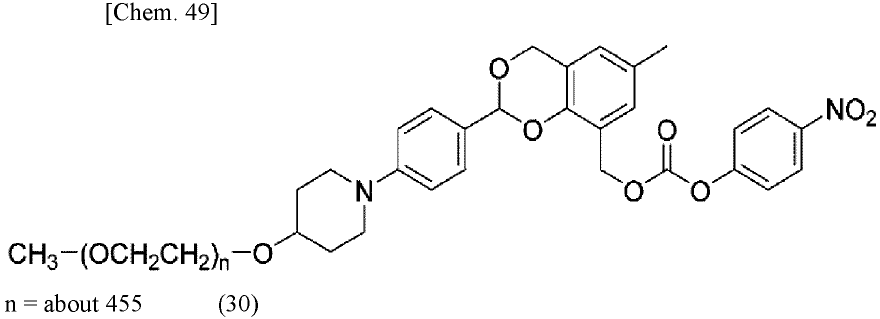

### (Example 3-1)

To a three-necked flask, NaH (dispersion in paraffin liquid, 21.8 mg, 0.50 mmol) and THF (2.5 g) were charged, and then 4-[4-(hydoxymethyl)piperidin-1-ly]benzaldehyde (43.8 mg, 0.2 mmol) and SUNBRIGHT ME-200MS (α-methyl-ω-[(methylsulfonyl)oxy]poly(oxyethylene), 500 mg, 0.025 mmol) manufactured by NOF Corporation were dissolved therein, followed by a reaction at 60°C for 5 hours. Quenching was performed by adding a 25% ammonium chloride aqueous solution (10 mL), then extraction was performed using dichloromethane (10 mL), the organic layer was dried over anhydrous sodium sulfate, and then filtration was performed. The filtrate was concentrated, the concentrate was dissolved in ethyl acetate, hexane was added to cause crystallization, followed by filtration and drying under a reduced pressure to obtain a compound represented by a formula (31).
¹H-NMR (CDCl₃, internal standard TMS); δ (ppm): 1.33 (2H, ddt, -CH₂-), 1.87 (3H, m, -CH₂-, -CH<), 2.92 (2H, ddd, -NCH₂-), 3.35 (2H, ddd, -NCH₂-), 3.38 (3H, s, - (OCH₂CH₂)nOCH₃), 3.52-4.23 (m, -(OCH₂CH₂)ₙ-, -OCH₂CH<), 6.90 (2H, d, arom. H), 7.73 (2H, d, arom. H), 9.75 (1H, s, -COH)

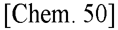

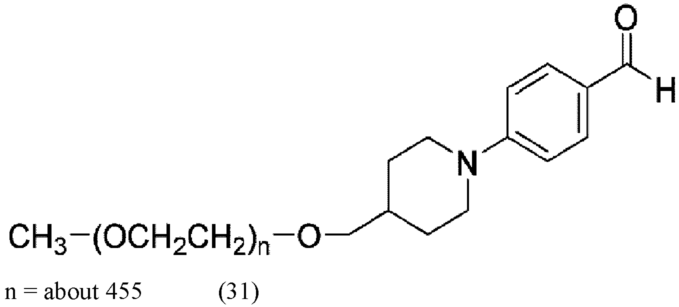

### (Example 3-2)

To a three-necked flask, the compound represented by the formula (31) (300 mg, 0.015 mmol), 2,6-bis(hydroxymethyl)-p-cresol (151.4 mg, 0.900 mmol), tetrahydrofuran (1.5 g), and BHT (0.3 mg) were charged and dissolved, and then a molecular sieve 5A (300 mg) and pyridinium p-toluenesulfonate (56.5 mg, 0.225 mmol) were added thereto, followed by a reaction at 40°C for 4 hours in a nitrogen atmosphere. N-methylmorpholine (45.5 mg, 0.45 mmol) was added and stirred at 25°C for 5 minutes in a nitrogen atmosphere, followed by filtration. The filtrate was diluted with ethyl acetate, and hexane was added to cause crystallization, followed by filtration to obtain crystals, and the obtained crystals were dried under a reduced pressure to obtain a compound represented by a formula (32).
¹H-NMR (CDCl₃, internal standard TMS); δ (ppm): 1.33 (2H, ddt, -CH₂-), 1.87 (3H, m, -CH₂-, -CH<), 2.30 (3H, s, -CH₃), 2.76 (2H, ddd, -NCH₂-), 3.35 (2H, ddd, -NCH₂-), 3.38 (3H, s, -(OCH₂CH₂)nOCH₃), 3.52-4.23 (m, -(OCH₂CH₂)ₙ-, -OCH₂CH<), 4.67 (2H, dd, -OCH₂OH), 4.93 (1H, d, -CH₂O-), 5.14 (1H, d, -CH₂O-), 5,93 (1H, s, -CH<), 6.76 (1H, s, arom. H), 6.95 (2H, d, arom. H), 7.02 (1H, s, arom. H), 7.43 (2H, d, arom. H)

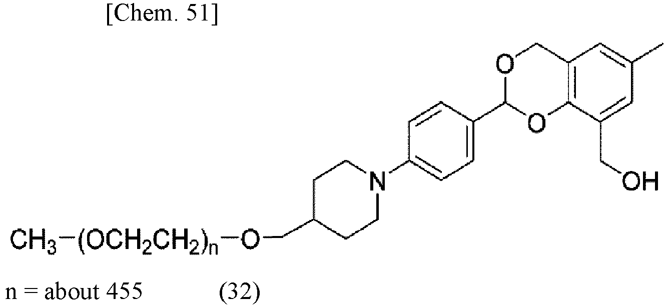

### (Example 3-3)

To a three-necked flask, the compound represented by the formula (32) (200 mg, 0.010 mmol), BHT (0.2 mg), and toluene (0.8 g) were charged and dissolved, and then triethylamine (15 mg, 0.15 mmol) and p-nitrophenyl chloroformate (20.2 mg, 0.1 mmol) were added thereto, followed by a reaction at 60°C for 3 hours in a nitrogen atmosphere. After the reaction, the resultant was diluted with a mixed solvent of acetonitrile and ethyl acetate containing BHT, and hexane was added to cause crystallization, followed by suction filtration to obtain crystals. The obtained crystals were dried under a reduced pressure to obtain a compound represented by a formula (33).
¹H-NMR (CDCl₃, internal standard TMS); δ (ppm): 1.33 (2H, ddt, -CH₂-), 1.87 (3H, m, -CH₂-, -CH<), 2.30 (3H, s, -CH₃), 2.76 (2H, ddd, -NCH₂-), 3.35 (2H, ddd, -NCH₂-), 3.38 (3H, s, -(OCH₂CH₂)nOCH₃), 3.52-4.23 (m, -(OCH₂CH₂)ₙ-, -OCH₂CH<), 4.93 (1H, d, -CH₂O-), 5,14 (1H, d, -CH₂O-), 5.34 (2H, dd, -OCH₂OCO-), 5.93 (1H, s, -CH<), 6.53 (2H, d, arom. H), 6.76 (1H, s, arom. H), 6.95 (2H, d, arom. H), 7.02 (1H, s, arom. H), 7.43 (2H, d, arom. H), 7.59 (2H, d, arom. H)
Number average molecular weight (Mn): 20,121

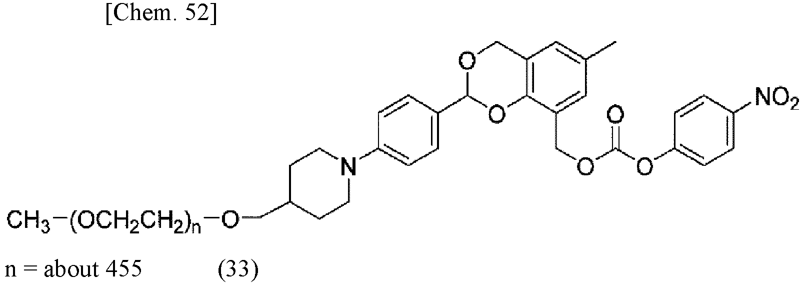

### (Example 4-1)

To a three-necked flask, 4-(piperazin-1-yl)benzaldehyde (38.1 mg, 0.2 mmol) synthesized with reference to Patent Literature CN105777632A, SUNBRIGHT ME-200HS (500 mg, 0.025 mmol) manufactured by NOF Corporation, and chloroform (5.0 g) were charged and dissolved, and then triethylamine (2.5 mg, 0.025 mmol) was charged thereto, followed by a reaction at 40°C for 2 hours in a nitrogen atmosphere. After the reaction, acid washing was performed with a 5% NaCl/6N HCl aqueous solution, followed by alkaline washing with a 5% NaCl aqueous solution (pH: 12), then the organic layer was dried over anhydrous sodium sulfate, and filtration was performed. The filtrate was concentrated, the concentrate was dissolved in ethyl acetate, and hexane was added to cause crystallization, followed by suction filtration to obtain crystals. The obtained crystals were dried under a reduced pressure to obtain a compound represented by a formula (34).
¹H-NMR (CDCl₃, internal standard TMS); δ (ppm): 1.42 (2H, tt, -CH₂-), 1.63 (2H, tt, -CH₂-), 1.69 (2H, dd, -CH₂-), 2.38 (2H, t, -CH₂CO-), 3.38 (3H, s, -(OCH₂CH₂)nOCH₃), 3.52-4.23 (m, -(OCH₂CH₂)ₙ-, -NCH₂-), 6.92 (2H, d, arom. H), 7.78 (2H, d, arom. H), 9.81 (1H, s, - COH)

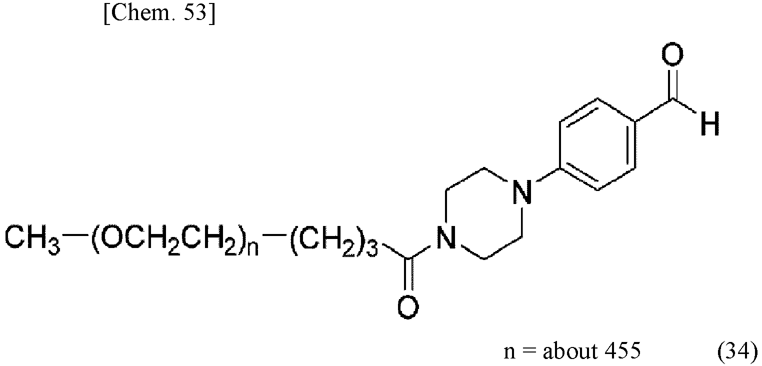

### (Example 4-2)

To a three-necked flask, the compound represented by the formula (34) (300 mg, 0.015 mmol), 2,6-bis(hydroxymethyl)-p-cresol (151.4 mg, 0.900 mmol), tetrahydrofuran (1.5 g), and BHT (0.3 mg) were charged and dissolved, and then a molecular sieve 5A (300 mg) and pyridinium p-toluenesulfonate (56.5 mg, 0.225 mmol) were added thereto, followed by a reaction at 40°C for 4 hours in a nitrogen atmosphere. N-methylmorpholine (45.5 mg, 0.45 mmol) was added and stirred at 25°C for 5 minutes in a nitrogen atmosphere, followed by filtration. The filtrate was diluted with ethyl acetate, and hexane was added to cause crystallization, followed by filtration to obtain crystals, and the obtained crystals were dried under a reduced pressure to obtain a compound represented by a formula (35).
¹H-NMR (CDCl₃, internal standard TMS); δ (ppm): 1.42 (2H, tt, -CH₂-), 1.63 (2H, tt, -CH₂-), 1.69 (2H, dd, -CH₂-), 2.30 (3H, s, -CH₃), 2.38 (2H, t, -CH₂CO-), 3.20 (2H, ddd, -NCH₂-), 3.38 (3H, s, -(OCH₂CH₂)nOCH₃), 3.52-4.23 (m, -(OCH₂CH₂)ₙ-, -NCH₂-), 4.67 (2H, dd, - OCH₂OH), 4.93 (1H, d, -CH₂O-), 5,14 (1H, d, -CH₂O-), 5.95 (1H, s, -CH<), 6.77 (1H, s, arom. H), 6.96 (2H, d, arom. H), 7.03 (1H, s, arom. H), 7.48 (2H, d, arom. H)

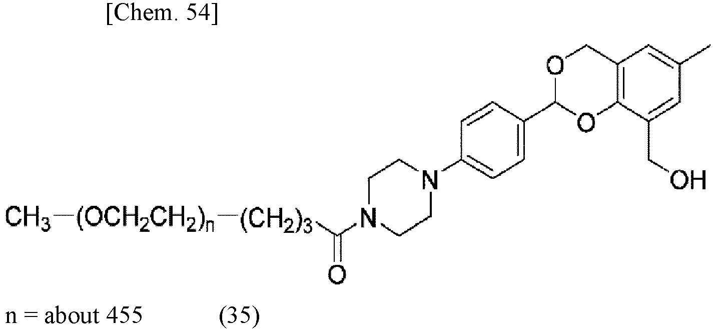

### (Example 4-3)

To a three-necked flask, the compound represented by the formula (35) (200 mg, 0.010 mmol), BHT (0.2 mg), and toluene (0.8 g) were charged and dissolved, and then triethylamine (15 mg, 0.15 mmol) and p-nitrophenyl chloroformate (20.2 mg, 0.1 mmol) were added thereto, followed by a reaction at 60°C for 3 hours in a nitrogen atmosphere. After the reaction, the resultant was diluted with a mixed solvent of acetonitrile and ethyl acetate containing BHT, and hexane was added to cause crystallization, followed by suction filtration to obtain crystals. The obtained crystals were dried under a reduced pressure to obtain a compound represented by a formula (36).
¹H-NMR (CDCl₃, internal standard TMS); δ (ppm): 1.42 (2H, tt, -CH₂-), 1.63 (2H, tt, -CH₂-), 1.69 (2H, dd, -CH₂-), 2.38 (2H, t, -CH₂CO-), 2.20 (2H, ddd, -NCH₂-), 2.30 (3H, s, -CH₃), 3.38 (3H, s, -(OCH₂CH₂)nOCH₃), 3.52-4.23 (m, -(OCH₂CH₂)ₙ-, -NCH₂-), 4.93 (1H, d, -CH₂O-), 5.14 (1H, d, -CH₂O-), 5.34 (2H, dd, -OCH₂OCO-), 5.95 (1H, s, -CH<), 6.77 (1H, s, arom. H), 6.53 (2H, d, arom. H), 6.96 (2H, d, arom. H), 7.03 (1H, s, arom. H), 7.48 (2H, d, arom. H), 7.59 (2H, d, arom. H)
Number average molecular weight (Mn): 20,634

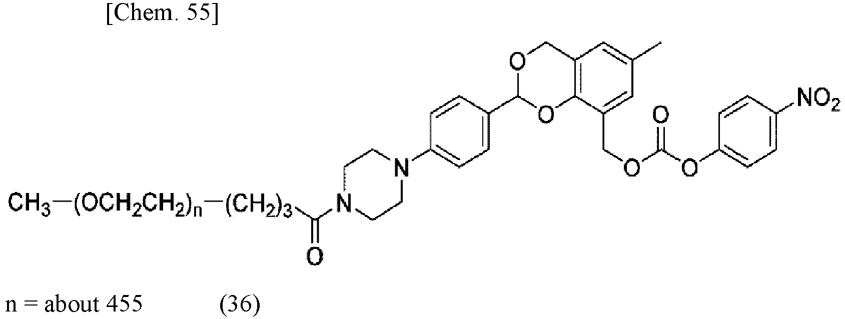

### (Example 5-1)

To a three-necked flask, 3-fluoro-4-piperazin-1-yl-benzaldehyde (41.7 mg, 0.2 mmol) synthesized with reference to Patent Literature CN105777632A, SUNBRIGHT ME-200HS (500 mg, 0.025 mmol) manufactured by NOF Corporation, and chloroform (5.0 g) were charged and dissolved, and then triethylamine (2.5 mg, 0.025 mmol) was charged thereto, followed by a reaction at 40°C for 2 hours in a nitrogen atmosphere. After the reaction, acid washing was performed with a 5% NaCl/6N HCl aqueous solution, followed by alkaline washing with a 5% NaCl aqueous solution (pH: 12), then the organic layer was dried over anhydrous sodium sulfate, and filtration was performed. The filtrate was concentrated, the concentrate was dissolved in ethyl acetate, and hexane was added to cause crystallization, followed by suction filtration to obtain crystals. The obtained crystals were dried under a reduced pressure to obtain a compound represented by a formula (37).
¹H-NMR (CDCl₃, internal standard TMS); δ (ppm): 1.42 (2H, dd, -CH₂-), 1.63-1.68 (4H, m, -CH₂-), 2.38 (2H, t, -COCH₂-), 3.24 (4H, ddd, -NCH₂-), 3.38 (3H, s, - (OCH₂CH₂)nOCH₃), 3.52-4.23 (m, -(OCH₂CH₂)ₙ-, -NCH₂-), 6.99 (1H, dd, arom. H), 7.54-7.61 (2H, m, arom. H), 9.85 (1H, s, -COH)

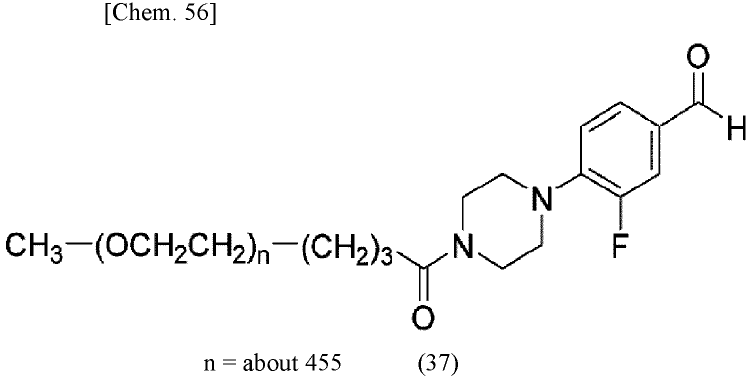

### (Example 5-2)

To a three-necked flask, the compound represented by the formula (37) (300 mg, 0.015 mmol), 2,6-bis(hydroxymethyl)-p-cresol (151.4 mg, 0.900 mmol), tetrahydrofuran (1.5 g), and BHT (0.3 mg) were charged and dissolved, and then a molecular sieve 5A (300 mg) and pyridinium p-toluenesulfonate (13.6 mg, 0.054 mmol) were added thereto, followed by a reaction at 40°C for 4 hours in a nitrogen atmosphere. N-methylmorpholine (45.5 mg, 0.45 mmol) was added and stirred at 25°C for 5 minutes in a nitrogen atmosphere, followed by filtration. The filtrate was diluted with ethyl acetate (90 g), and hexane (60 g) was added to cause crystallization, followed by filtration and drying under a reduced pressure to obtain a compound represented by a formula (38).
¹H-NMR (CDCl₃, internal standard TMS); δ (ppm): 1.42 (2H, dd, -CH₂-), 1.63-1.68 (4H, m, -CH₂-), 2.30 (3H, s, -CH₃), 2.38 (2H, t, -COCH₂-), 3.08 (4H, ddd, -NCH₂-), 3.38 (3H, s, -(OCH₂CH₂)nOCH₃), 3.52-4.23 (m, -(OCH₂CH₂)ₙ-, -NCH₂-), 4.67 (2H, dd, -OCH₂OH), 4.93 (1H, d, -CH₂O-), 5,14 (1H, d, -CH₂O-), 5.94 (1H, s, -CH<), 6.77 (1H, s, arom. H), 6.97 (1H, dd, arom. H), 7.06 (1H, s, arom. H), 7.53-7.60 (2H, m, arom. H)

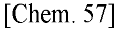

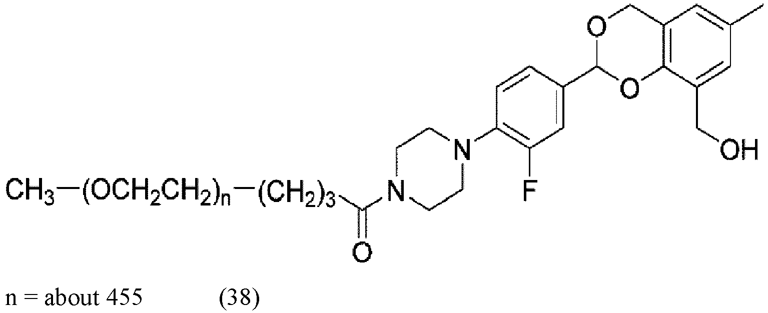

### (Example 5-3)

To a three-necked flask, the compound represented by the formula (38) (200 mg, 0.010 mmol), BHT (0.2 mg), and toluene (0.8 g) were charged and dissolved, and then triethylamine (15 mg, 0.15 mmol) and p-nitrophenyl chloroformate (20.2 mg, 0.1 mmol) were added thereto, followed by a reaction at 60°C for 3 hours in a nitrogen atmosphere. After the reaction, the resultant was diluted with a mixed solvent of acetonitrile and ethyl acetate containing BHT, and hexane was added to cause crystallization, followed by suction filtration to obtain crystals. The obtained crystals were dried under a reduced pressure to obtain a compound represented by a formula (39).
¹H-NMR (CDCl₃, internal standard TMS); δ (ppm): 1.42 (2H, dd, -CH₂-), 1.63-1.68 (4H, m, -CH₂-), 2.30 (3H, s, -CH₃), 2.38 (2H, t, -COCH₂-), 3.08 (4H, ddd, -NCH₂-), 3.38 (3H, s, -(OCH₂CH₂)nOCH₃), 3.52-4.23 (m, -(OCH₂CH₂)ₙ-, -NCH₂-), 4.93 (1H, d, -CH₂O-), 5,14 (1H, d, -CH₂O-), 5.34 (2H, dd, -OCH₂OCO-), 5.94 (1H, s, -CH<), 6.77 (1H, s, arom. H), 6.99 (1H, d, arom. H), 6.53 (2H, d, arom. H), 7.03 (1H, s, arom. H), 7.53-7.60 (4H, m, arom. H)
Number average molecular weight (Mn): 21,243

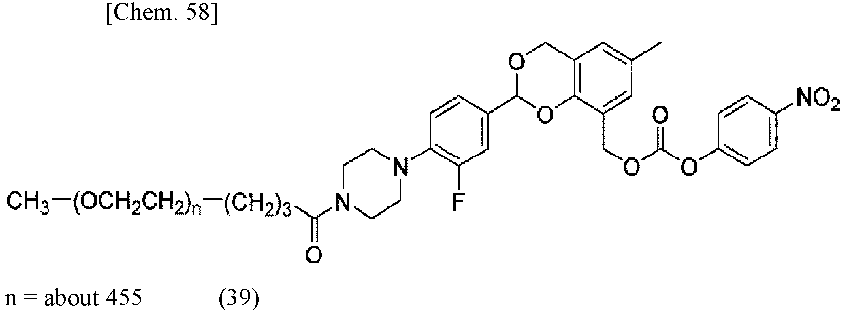

### (Example 6-1)

To a 50 ml three-necked flask equipped with a thermometer, a nitrogen injection tube, and a stirrer, 2-(piperazin-1-yl)benzaldehyde (38.1 mg, 0.2 mmol) synthesized with reference to Patent Literature CN105777632A, SUNBRIGHT ME-200HS (500 mg, 0.025 mmol) manufactured by NOF Corporation, and chloroform (5.0 g) were charged and dissolved, and then triethylamine (2.5 mg, 0.025 mmol) was charged thereto, followed by a reaction at 40°C for 2 hours in a nitrogen atmosphere. After the reaction, acid washing was performed with a 5% NaCl/6N HCl aqueous solution, followed by alkaline washing with a 5% NaCl aqueous solution (pH: 12), then the organic layer was dried over anhydrous sodium sulfate, and filtration was performed. The filtrate was concentrated, the concentrate was dissolved in ethyl acetate, and hexane was added to cause crystallization, followed by suction filtration to obtain crystals. The obtained crystals were dried under a reduced pressure to obtain a compound represented by a formula (40).
¹H-NMR (CDCl₃, internal standard TMS); δ (ppm): 1.42 (2H, tt, -CH₂-), 1.63-1.68 (4H, m, -CH₂-), 2.38 (2H, t, -CH₂CO-), 3.07 (4H, ddd, -NCH₂-), 3.38 (3H, s, -(OCH₂CH₂)nOCH₃), 3.52-4.23 (m, -(OCH₂CH₂)ₙ-, -NCH₂-), 7.15 (1H, d, arom. H), 7.18 (1H, dd, arom. H), 7.55 (1H, dd, arom. H), 7.83 (1H, d, arom. H), 10.35 (1H, s, -COH)

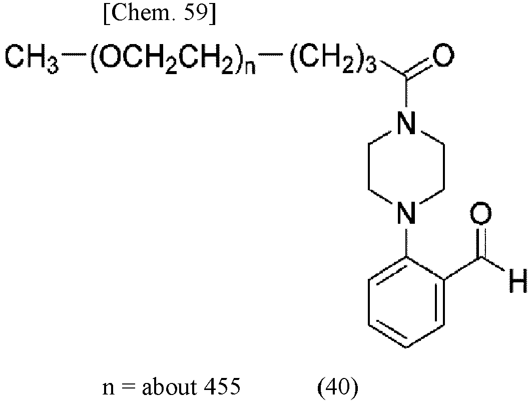

### (Example 6-2)

To a three-necked flask, the compound represented by the formula (40) (300 mg, 0.015 mmol), 2,6-bis(hydroxymethyl)-p-cresol (151.4 mg, 0.900 mmol), tetrahydrofuran (1.5 g), and BHT (0.3 mg) were charged and dissolved, and then a molecular sieve 5A (300 mg) and pyridinium p-toluenesulfonate (56.5 mg, 0.225 mmol) were added thereto, followed by a reaction at 40°C for 4 hours in a nitrogen atmosphere. N-methylmorpholine (45.5 mg, 0.45 mmol) was added and stirred at 25°C for 5 minutes in a nitrogen atmosphere, followed by filtration. The filtrate was diluted with ethyl acetate, and hexane was added to cause crystallization, followed by filtration and drying under a reduced pressure to obtain a compound represented by a formula (41).
¹H-NMR (CDCl₃, internal standard TMS); δ (ppm): 1.42 (2H, tt, -CH₂-), 1.63-1.68 (4H, m, -CH₂-), 2.30 (3H, s, -CH₃), 2.38 (2H, t, -CH₂CO-), 2.93 (4H, ddd, -NCH₂-), 3.38 (3H, s, - (OCH₂CH₂)nOCH₃), 3.52-4.23 (m, -(OCH₂CH₂)ₙ-, -NCH₂-), 4.63 (2H, dd, -OCH₂OH), 4.97 (1H, d, -CH₂O-), 5,17 (1H, d, -CH₂O-), 6.44 (1H, s, -CH<), 6.81 (1H, s, arom. H), 7.05 (1H, s, arom. H), 7.16 (1H, d, arom. H), 7.25 (1H, dd, arom. H), 7.42 (1H, dd, arom. H), 7.76 (1H, d, arom. H)

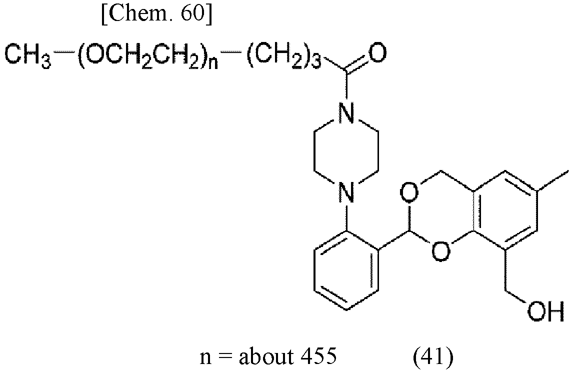

### (Example 6-3)

To a three-necked flask, the compound represented by the formula (41) (200 mg, 0.010 mmol), BHT (0.2 mg), and toluene (0.8 g) were charged and dissolved, and then triethylamine (15 mg, 0.15 mmol) and p-nitrophenyl chloroformate (20.2 mg, 0.1 mmol) were added thereto, followed by a reaction at 60°C for 3 hours in a nitrogen atmosphere. After the reaction, the resultant was diluted with a mixed solvent of acetonitrile and ethyl acetate containing BHT, and hexane was added to cause crystallization, followed by suction filtration to obtain crystals. The obtained crystals were dried under a reduced pressure to obtain a compound represented by a formula (42).
¹H-NMR (CDCl₃, internal standard TMS); δ (ppm): 1.42 (2H, tt, -CH₂-), 1.63-1.68 (4H, m, -CH₂-), 2.30 (3H, s, -CH₃), 2.38 (2H, t, -CH₂CO-), 2.93 (4H, ddd, -NCH₂-), 3.38 (3H, s, - (OCH₂CH₂)nOCH₃), 3.52-4.23 (m, -(OCH₂CH₂)ₙ-, -NCH₂-), 4.97 (1H, d, -CH₂O-), 5,17 (1H, d, -CH₂O-), 5.34 (2H, dd, -OCH₂OCO-), 6.44 (1H, s, -CH<), 6.53 (2H, d, arom. H), 6.81 (1H, s, arom. H), 7.05 (1H, s, arom. H), 7.16 (1H, d, arom. H), 7.25 (1H, dd, arom. H), 7.42 (1H, dd, arom. H), 7.59 (2H, d, arom. H), 7.76 (1H, d, arom. H)
Number average molecular weight (Mn): 20,983

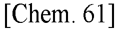

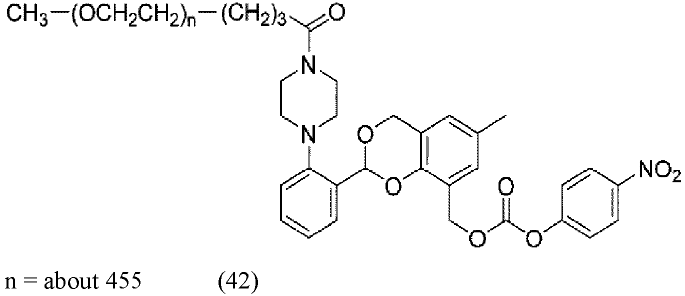

### (Comparative Example 1-1)

To a three flask, 3-hydroxybenzaldehyde (2.00 g, 16.4 mmol), trimethyl orthoformate (3.48 g, 32.8 mmol), and methanol (17 g) were charged, and p-toluenesulfonic acid monohydrate (0.312 g, 1.64 mmol) was added thereto, followed by a reaction at 25°C for 2 hours. Sodium hydroxide was added and stirred for a while, and then the solvent was distilled off under a reduced pressure. The residue was dissolved in dichloromethane and washed with a 5 wt% sodium hydrogencarbonate aqueous solution and then with 25 wt% saline, and the organic layer was dried over anhydrous sodium sulfate. After filtration, the solvent was removed under a reduced pressure to obtain a compound represented by a formula (43).
¹H-NMR (CDCl₃, internal standard TMS; δ (ppm): 3.33 (6H, s, -OCH3), 5.35 (1H, s, - CH<), 6.81 (1H, d, arom. H), 6.95 (1H, d, arom. H), 7.23-7.26 (1H, m, arom. H)

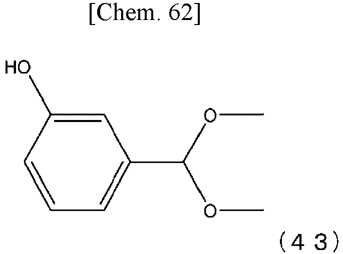

### (Comparative Example 1-2)

To a three-necked flask, 2,4-di(hydroxymethyl)phenol (50.0 mg, 0.324 mmol) synthesized according to a literature (Freeman, J. H.; JAm.Chem. Soc. 1952, 74, 6257-6260), the compound represented by the formula (43) (217 mg, 1.29 mmol), 2,6-di-tert-butyl-p-cresol (7.14 mg, 0.0324 mmol), anhydrous sodium sulfate (1 g), and cyclopentyl methyl ether (10 g) were charged, and then p-toluenesulfonic acid monohydrate (4.10 mg, 0.0212 mmol) was added, followed by a reaction at 40°C for 2 hours. N-methylmorpholine was added and stirred for a while, followed by filtration. After washing with 10 wt% saline, the organic layer was dried over anhydrous sodium sulfate. After filtration, the solvent was removed under a reduced pressure to obtain a compound represented by a formula (44).
¹H-NMR (d6-DMSO, internal standard TMS); δ (ppm): 4.42 (2H, d, -CH₂OH), 4.93 (1H, d, -CH₂O-), 5.10 (1H, t, -CH₂OH), 5.15 (1H, d, -CH₂O-), 6.01 (1H, s, -CH<), 6.80-7.21 (7H, m, arom. H), 9.53 (1H, bs, >C-OH)

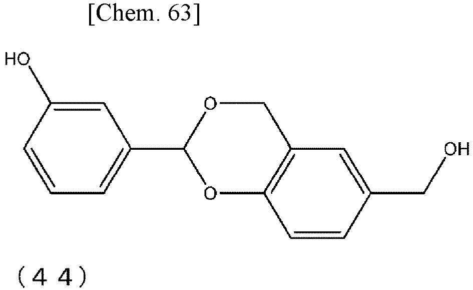

### (Comparative Example 1-3)

To a three-necked flask, the compound represented by the formula (44) (37.0 mg, 0.141 mmol), ME-200MS (α-methyl-ω-[(methylsulfonyl)oxy]poly(oxyethylene), 705 mg, 0.0353 mmol) manufactured by NOF Corporation, potassium carbonate (97.0 mg, 0.705 mmol), and acetonitrile (3.5 g) were charged, followed by a reaction at 80°C for 4 hours. After filtration, the solvent was removed under a reduced pressure and the residue was dissolved in dichloromethane. After washing with 10 wt% saline, the organic layer was dried over anhydrous sodium sulfate. After filtration, the solvent was removed under a reduced pressure and the residue was dissolved in toluene (50 g). Hexane (50 g) was added to cause crystallization, followed by filtration and drying under a reduced pressure to obtain a compound represented by a formula (45).
¹H-NMR (CDCl₃, internal standard TMS); δ (ppm): 3.38 (3H, s, -OCH₃), 3.52-4.18 (m, -(OCH₂CH₂)ₙ-), 4.62 (2H, s, -CH₂OH), 4.98 (1H, d, -CH₂O-), 5.18 (1H, d, -CH₂O-), 5.95 (1H, s, -CH<), 6.87-7.34 (7H, m, arom. H)

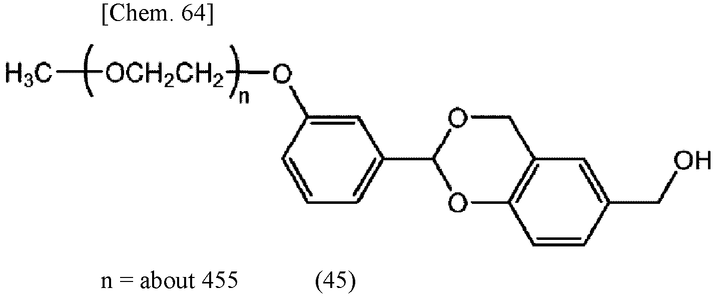

### (Comparative Example 1-4)

To a 50 mL three-necked flask equipped with a thermometer, a nitrogen injection tube, a stirrer and a cooling tube, the compound represented by the formula (45) (300 mg, 0.0150 mmol), di(N-succinimidyl) carbonate (46.0 mg, 0.180 mmol), triethylamine (21.0 mg, 0.208 mmol), and dichloromethane (5 g) were charged, followed by a reaction at 25°C for 12 hours. After filtration, the resultant was washed with 5 wt% saline, and the solvent in the organic layer was distilled off under a reduced pressure. The residue was dissolved in ethyl acetate (6 g) and dried over anhydrous sodium sulfate, followed by filtration. After adding ethyl acetate (44 g), and hexane (50 g) was added to cause crystallization, followed by filtration and drying under a reduced pressure to obtain a compound represented by a formula (46).
¹H-NMR (CDCl₃, internal standard TMS); δ (ppm): 2.85 (4H, s, -COCH₂CH₂CO-), 3.38 (3H, s, -OCH₃), 3.52-4.18 (m, -(OCH₂CH₂)ₙ-), 5.00 (1H, d, -CH₂OCH<), 5.18 (1H, d, - CH₂O-), 5.25 (2H, s, -CH₂OCO-), 5.97 (1H, s, -CH<), 6.96-7.35 (7H, m, arom. H)

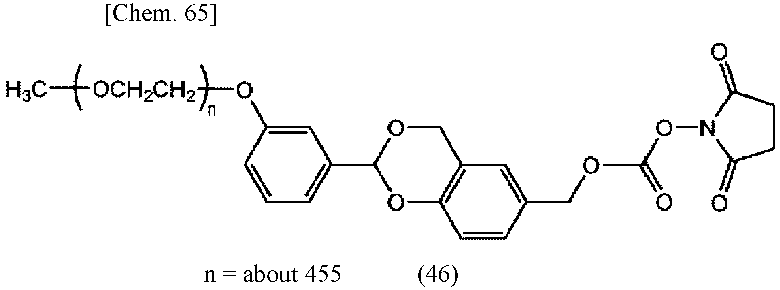

### (Example 7)

β-alanine was dissolved in a 0.1 M sodium phosphate buffer solution (pH: 8.5) to prepare a 20 mg/mL β-alanine solution. The compound represented by the formula (36) (50 mg, 0.0025 mmol) was dissolved in the 20 mg/mL β-alanine solution (1.5 mL), followed by a reaction at 25°C for 6 hours in a nitrogen atmosphere. After the reaction, the resultant was diluted using a 0.1 M sodium phosphate buffer solution (pH: 8.5) containing 20 wt% of sodium chloride, and extraction was performed using chloroform (3 g). The organic layer was dried over anhydrous sodium sulfate, followed by filtration. The filtrate was diluted using ethyl acetate, then hexane was added to cause crystallization, followed by filtration to obtain crystals, and the obtained crystals were dried under a reduced pressure to obtain a compound represented by a formula (47).
¹H-NMR (CDCl₃, internal standard TMS; δ (ppm): 1.42 (2H, tt, -CH₂-), 1.63 (2H, tt, - CH₂-), 1.69 (2H, dd, -CH₂-), 2.30 (3H, s, -CH₃), 2.38 (2H, t, -CH₂CO-), 2.53 (2H, t, -CH₂COOH), 3.20 (2H, ddd, -NCH₂-), 3.38 (3H, s, -(OCH₂CH₂)nOCH₃), 3.37-3.43 (2H, m, -CH₂NH-), 3.52-4.23 (m, -(OCH₂CH₂)ₙ-, -NCH₂-), 4.93 (1H, d, -CH₂O-), 5.08 (1H, dd, -CH₂OCONH-), 5.14 (1H, d, -CH₂O-), 5.38 (1H, dd, -CH₂OCONH-), 5.95 (1H, s, -CH<), 6.77 (1H, s, arom. H), 6.96 (2H, d, arom. H), 7.03 (1H, s, arom. H), 7.48 (2H, d, arom. H)

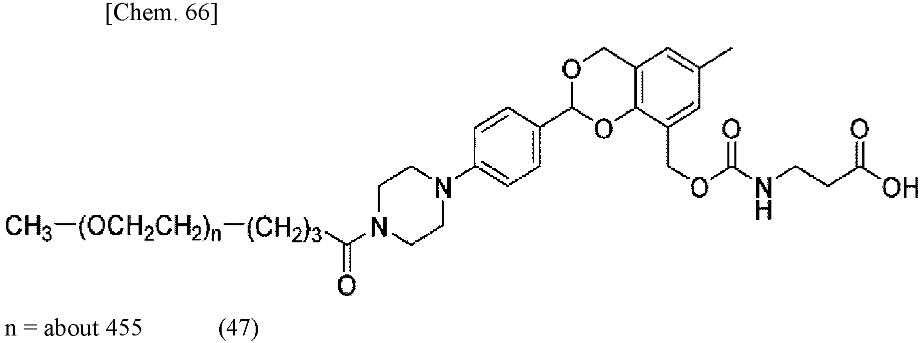

### (Example 8)

β-alanine was dissolved in a 0.1 M sodium phosphate buffer solution (pH: 8.5) to prepare a 20 mg/mL β-alanine solution. The compound represented by the formula (40) (50 mg, 0.0025 mmol) was dissolved in the 20 mg/mL β-alanine solution (1.5 mL), followed by a reaction at 25°C for 6 hours in a nitrogen atmosphere. After the reaction, the resultant was diluted using a 0.1 M sodium phosphate buffer solution (pH: 8.5) containing 20 wt% of sodium chloride, and extraction was performed using chloroform (3 g). The organic layer was dried over anhydrous sodium sulfate, followed by filtration. The filtrate was diluted using ethyl acetate, then hexane was added to cause crystallization, followed by filtration to obtain crystals, and the obtained crystals were dried under a reduced pressure to obtain a compound represented by a formula (48).
¹H-NMR (CDCl₃, internal standard TMS); δ (ppm): 1.42 (2H, dd, -CH₂-), 1.63-1.68 (4H, m, -CH₂-), 2.30 (3H, s, -CH₃), 2.38 (2H, t, -COCH₂-), 2.53 (2H, t, -CH₂COOH), 3.08 (4H, ddd, -NCH₂-), 3.38 (3H, s, -(OCH₂CH₂)nOCH₃), 3.52-4.23 (m, -(OCH₂CH₂)ₙ-, -NCH₂-), 4.93 (1H, d, -CH₂O-), 5.08 (1H, dd, -CH₂OCONH-), 5,14 (1H, d, -CH₂O-), 5.38 (1H, dd, - CH₂OCONH-), 5.94 (1H, s, -CH<), 6.77 (1H, s, arom. H), 6.99 (1H, d, arom. H), 7.03 (1H, s, arom. H), 7.53-7.60 (2H, m, arom. H)

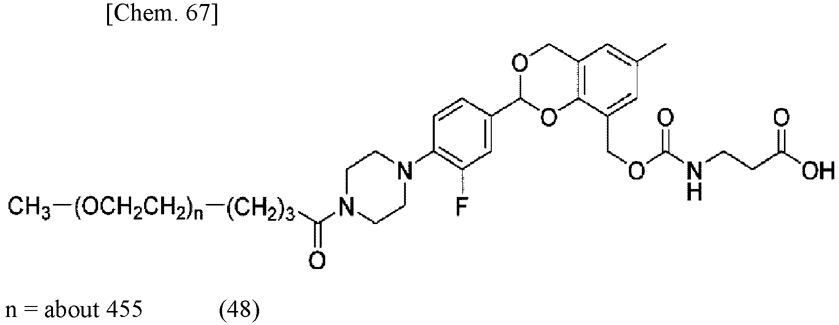

### (Example 9)

β-alanine was dissolved in a 0.1 M sodium phosphate buffer solution (pH: 8.5) to prepare a 20 mg/mL β-alanine solution. The compound represented by the formula (42) (50 mg, 0.0025 mmol) was dissolved in the 20 mg/mL β-alanine solution (1.5 mL), followed by a reaction at 25°C for 6 hours in a nitrogen atmosphere. After the reaction, the resultant was diluted using a 0.1 M sodium phosphate buffer solution (pH: 8.5) containing 20 wt% of sodium chloride, and extraction was performed using chloroform (3 g). The organic layer was dried over anhydrous sodium sulfate, followed by filtration. The filtrate was diluted using ethyl acetate, then hexane was added to cause crystallization, followed by filtration to obtain crystals, and the obtained crystals were dried under a reduced pressure to obtain a compound represented by a formula (49).
¹H-NMR (CDCl₃, internal standard TMS; δ (ppm): 1.42 (2H, tt, -CH₂-), 1.63-1.68 (4H, m, -CH₂-), 2.30 (3H, s, -CH₃), 2.38 (2H, t, -CH₂CO-), 2.53 (2H, t, -CH₂COOH), 2.93 (4H, ddd, -NCH₂-), 3.38 (3H, s, -(OCH₂CH₂)nOCH₃), 3.52-4.23 (m, -(OCH₂CH₂)ₙ-, -NCH₂-), 4.97 (1H, d, -CH₂O-), 5.08 (1H, dd, -CH₂OCONH-), 5,17 (1H, d, -CH₂O-), 5.38 (1H, dd, -OCH₂OCONH-), 6.44 (1H, s, -CH<), 6.81 (1H, s, arom. H), 7.05 (1H, s, arom. H), 7.16 (1H, d, arom. H), 7.25 (1H, dd, arom. H), 7.42 (1H, dd, arom. H), 7.76 (1H, d, arom. H)

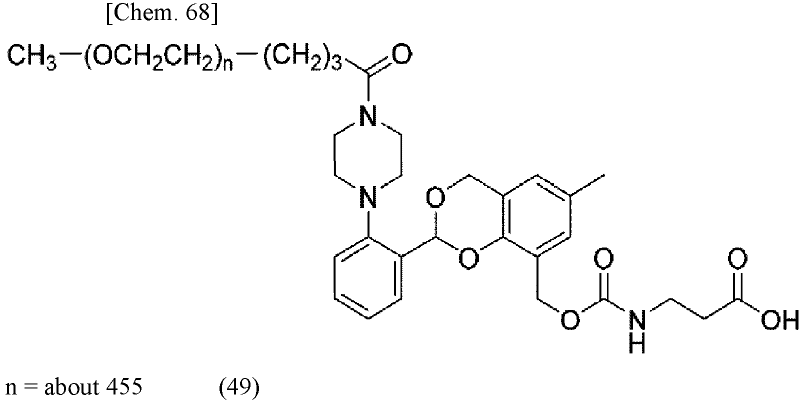

### (Comparative Example 2)

A 20 mg/mL β-alanine buffer solution was prepared using a 0.1 M sodium phosphate buffer solution (pH: 8.5). To a 50 mL three-necked flask equipped with a thermometer, a nitrogen injection tube, and a stirrer, the compound represented by the formula (46) (143 mg, 0.0072 mmol) and the 20 mg/mL β-alanine buffer solution (3.0 g) were charged and dissolved, followed by a reaction at 25°C for 6 hours. After dissolving sodium chloride (750 mg), extraction was performed using chloroform (4.5 g), and the organic layer was dried over anhydrous sodium sulfate, followed by filtration. The filtrate was diluted using ethyl acetate (45 g), and then hexane (33 g) was added to cause crystallization, followed by filtration and drying under a reduced pressure to obtain a compound represented by a formula (50).
¹H-NMR (CDCl₃, internal standard TMS); δ (ppm): 2.47 (2H, t, -CH₂COOH), 3.38 (3H, s, -(OCH₂CH₂)nOCH₃), 3.37-3.43 (2H, m, -CH₂NH-), 3.52-4.21 (m, -(OCH₂CH₂)ₙ-), 4.89 (1H, d, -CH₂O-), 5.05 (1H, d, -CH₂O-), 5.14 (2H, dd, -CH₂OCONH-), 6.22 (1H, s, -CH<), 6.52-7.57 (7H, arom. H)

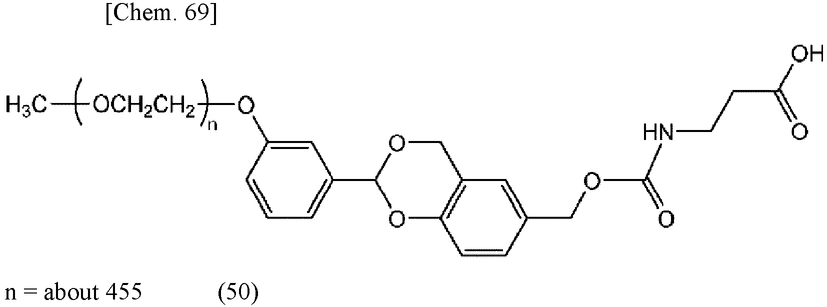

### (Decomposability Test 1)

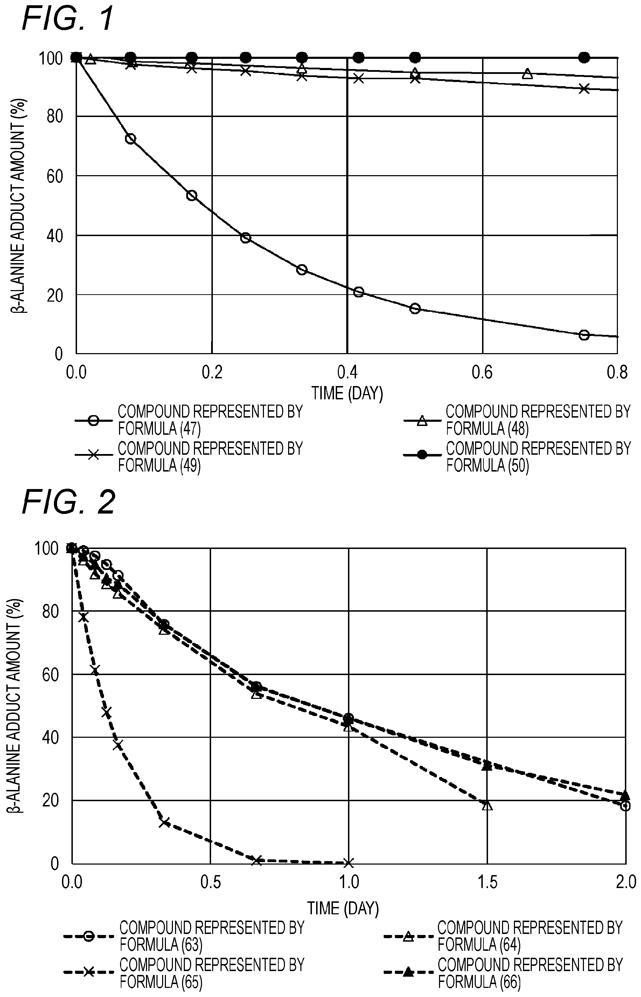

Each of the compounds represented by the formula (47), formula (48), formula (49), and formula (50) (2 mg) was dissolved in phosphate buffered saline (2 mL) having a pH of 7.4, and then placed in a thermostatic bath at 37°C, and HPLC measurement was performed at any timing. FIG. 1 shows a β-alanine adduct amount at any timing, with the β-alanine adduct amount at 0 hours of standing being 100%. With a y intercept set to 100, the half-life (t1/2) calculated according to the following equation based on an approximate equation of an exponential approximation curve obtained from the graph, i.e., y = 100e^{-ax} (-a is an exponent), is 5.0 hours for the compound represented by the formula (47), 7.9 days for the compound represented by the formula (48), 6.5 days for the compound represented by the formula (49), and 231 days for the compound represented by the formula (50).${t}_{1 / 2} = ln \left(2\right) / λ$
(In is a logarithm based on the Napier's constant, and λ is a product of the exponent of the Napier's constant in the approximate equation and -1.) That is, it is shown that the compounds according to the present invention represented by the formulas (47), (48), and (49) have a desired half-life under a physiological condition as compared with the compound exemplified in Patent Literature 3 represented by the formula (50) which is the prior invention.

### (Example 10-1)

A compound represented by a formula (51) was obtained in the same manner as in Example 6-1 except that 2-bromo-4-(piperazin-1-yl)benzaldehyde (53.8 mg, 0.2 mmol) was used instead of 2-(piperazin-1-yl)benzaldehyde.
¹H-NMR (CDCl₃, internal standard TMS); δ (ppm): 1.42 (2H, dd, -CH₂-), 1.63-1.68 (4H, m, -CH₂CH₂CH₂-), 2.38 (2H, t, -COCH₂-), 3.24 (4H, ddd, -NCH₂-), 3.38 (3H, s, - (OCH₂CH₂)nOCH₃), 3.52-4.23 (m, -(OCH₂CH₂)ₙ-, -NCH₂-), 6.68 (1H, dd, arom. H), 7.04 (1H, d, arom. H), 7.85 (1H, m, arom. H), 10.15 (1H, s, -COH)

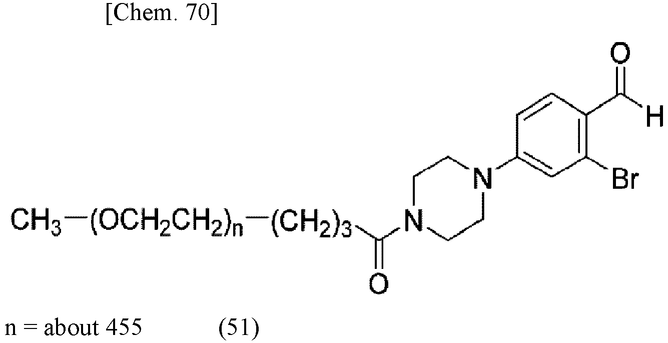

### (Example 10-2)

A compound represented by a formula (52) was obtained in the same manner as in Example 6-2 except that the compound represented by the formula (51) (300 mg, 0.015 mmol) was used instead of the compound represented by the formula (40).
¹H-NMR (CDCl₃, internal standard TMS); δ (ppm): 1.42 (2H, dd, -CH₂-), 1.63-1.68 (4H, m, -CH₂CH₂CH₂-), 2.38 (2H, t, -COCH₂-), 3.24 (4H, ddd, -NCH₂-), 3.38 (3H, s, - (OCH₂CH₂)nOCH₃), 3.52-4.23 (m, -(OCH₂CH₂)ₙ-, -NCH₂-), 4.67 (2H, dd, -CH₂OH), 5.25 (2H, dd, -CH-O-CH₂-CH<), 6.25 (1H, s, -CH<), 6.8-7.7 (5H, arom. H)

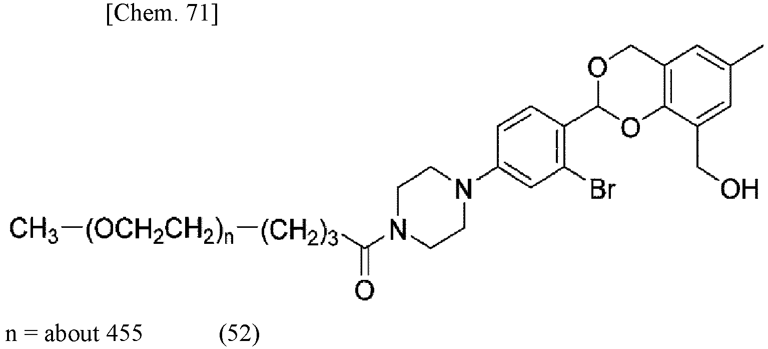

### (Example 10-3)

A compound represented by a formula (53) was obtained in the same manner as in Example 6-3 except that the compound represented by the formula (52) (200 mg, 0.010 mmol) was used instead of the compound represented by the formula (41).
¹H-NMR (CDCl₃, internal standard TMS); δ (ppm): 1.42 (2H, dd, -CH₂-), 1.63-1.68 (4H, m, -CH₂CH₂CH₂-), 2.38 (2H, t, -COCH₂-), 3.24 (4H, ddd, -NCH₂-), 3.38 (3H, s, - (OCH₂CH₂)nOCH₃), 3.52-4.23 (m, -(OCH₂CH₂)ₙ-, -NCH₂-), 4.67 (2H, dd, -CH₂OH), 5.25 (2H, dd, -CH-O-CH₂-CH<), 6.25 (1H, s, -CH<), 6.8-7.7 (5H, arom. H), 8.29 (2H, d, arom. H)
Number average molecular weight (Mn): 21,392

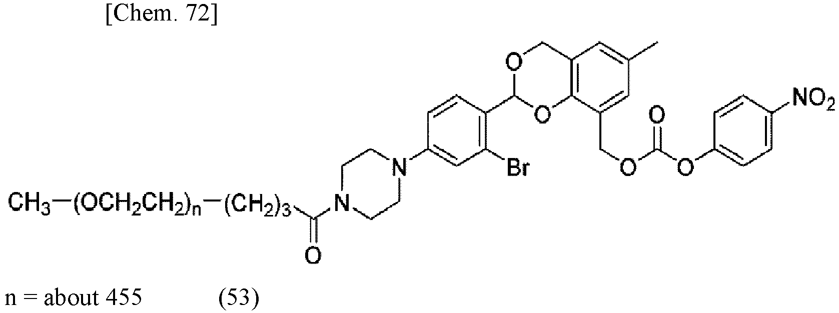

### (Example 11-1)

A compound represented by a formula (54) was obtained in the same manner as in Example 6-1 except that 2-chloro-4-(piperazin-1-yl)benzaldehyde (44.9 mg, 0.2 mmol) was used instead of 2-(piperazin-1-yl)benzaldehyde.
¹H-NMR (CDCl₃, internal standard TMS); δ (ppm): 1.42 (2H, dd, -CH₂-), 1.63-1.68 (4H, m, -CH₂CH₂CH₂-), 2.38 (2H, t, -COCH₂-), 3.24 (4H, ddd, -NCH₂-), 3.38 (3H, s, - (OCH₂CH₂)nOCH₃), 3.52-4.23 (m, -(OCH₂CH₂)ₙ-, -NCH₂-), 6.79 (2H, m, arom. H), 7.85 (1H, m, arom. H), 10.24 (1H, s, -COH)

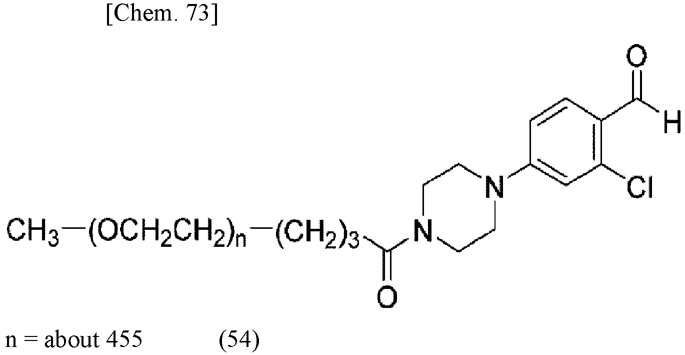

### (Example 11-2)

A compound represented by a formula (55) was obtained in the same manner as in Example 6-2 except that the compound represented by the formula (54) (300 mg, 0.015 mmol) was used instead of the compound represented by the formula (40).
¹H-NMR (CDCl₃, internal standard TMS); δ (ppm): 1.42 (2H, dd, -CH₂-), 1.63-1.68 (4H, m, -CH₂CH₂CH₂-), 2.38 (2H, t, -COCH₂-), 3.24 (4H, ddd, -NCH₂-), 3.38 (3H, s, - (OCH₂CH₂)nOCH₃), 3.52-4.23 (m, -(OCH₂CH₂)ₙ-, -NCH₂-), 4.67 (2H, dd, -CH₂OH), 5.25 (2H, dd, -CH-O-CH₂-CH<), 6.25 (1H, s, -CH<), 6.8-7.7 (5H, arom. H)

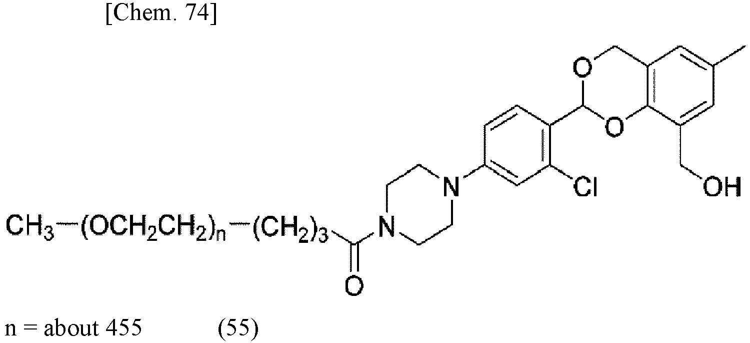

### (Example 11-3)

A compound represented by a formula (56) was obtained in the same manner as in Example 6-3 except that the compound represented by the formula (55) (200 mg, 0.010 mmol) was used instead of the compound represented by the formula (41).
¹H-NMR (CDCl₃, internal standard TMS); δ (ppm): 1.42 (2H, dd, -CH₂-), 1.63-1.68 (4H, m, -CH₂CH₂CH₂-), 2.38 (2H, t, -COCH₂-), 3.24 (4H, ddd, -NCH₂-), 3.38 (3H, s, - (OCH₂CH₂)nOCH₃), 3.52-4.23 (m, -(OCH₂CH₂)ₙ-, -NCH₂-), 4.67 (2H, dd, -CH₂OH), 5.25 (2H, dd, -CH-O-CH₂-CH<), 6.25 (1H, s, -CH<), 6.7-7.8 (5H, arom. H), 8.29 (2H, d, arom. H)
Number average molecular weight (Mn): 20,174

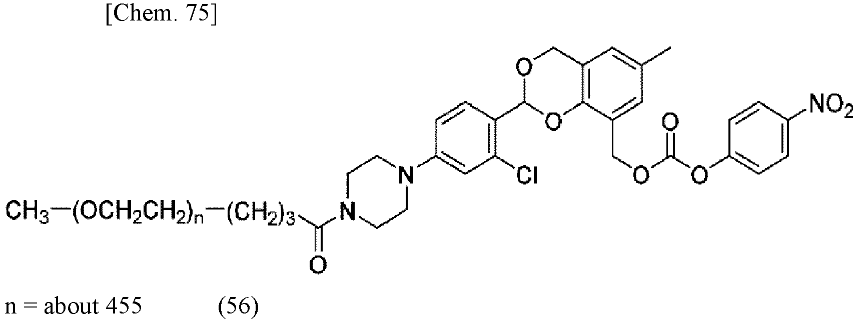

### (Example 12-1)

A compound represented by a formula (57) was obtained in the same manner as in Example 6-1 except that 2-chloro-4-(methyl(2-(methylamino)ethyl)amino)benzaldehyde (45.3 mg, 0.2 mmol) was used instead of 2-(piperazin-1-yl)benzaldehyde.
¹H-NMR (CDCl₃, internal standard TMS); δ (ppm): 1.42 (2H, dd, -CH₂-), 1.63-1.68 (4H, m, -CH₂CH₂CH₂-), 2.38 (2H, t, -COCH₂-), 2.75 (3H, s, >N-CH₃), 2.94 (3H, s, >N-CH₃), 3.38 (3H, s, -(OCH₂CH₂)nOCH₃), 3.52-4.23 (m, -(OCH₂CH₂)ₙ-, -N (CH₃)CH₂-CH₂-N(CH₃)-), 6.79 (2H, m, arom. H), 7.85 (1H, m, arom. H), 10.33 (1H, s, -COH)

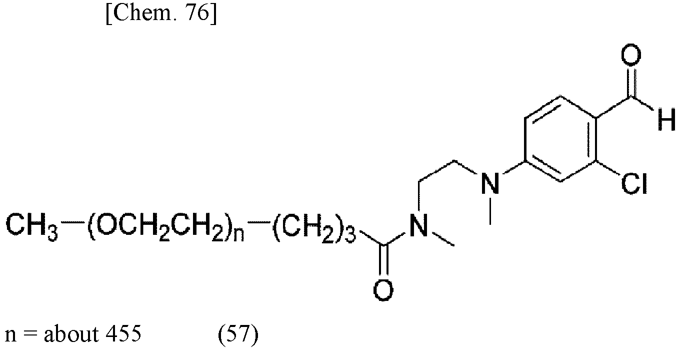

### (Example 12-2)

A compound represented by a formula (58) was obtained in the same manner as in Example 6-2 except that the compound represented by the formula (57) (300 mg, 0.015 mmol) was used instead of the compound represented by the formula (40).
¹H-NMR (CDCl₃, internal standard TMS); δ (ppm): 1.42 (2H, dd, -CH₂-), 1.63-1.68 (4H, m, -CH₂CH₂CH₂-), 2.38 (2H, t, -COCH₂-), 2.75 (3H, s, >N-CH₃), 2.94 (3H, s, >N-CH₃), 3.38 (3H, s, -(OCH₂CH₂)nOCH₃), 3.52-4.23 (m, -(OCH₂CH₂)ₙ-, -N(CH₃)CH₂-CH₂-N(CH₃)-), 4.67 (2H, dd, -CH₂OH), 5.25 (2H, dd, -CH-O-CH₂-CH<), 6.25 (1H, s, -CH<), 6.8-7.5 (5H, arom. H)

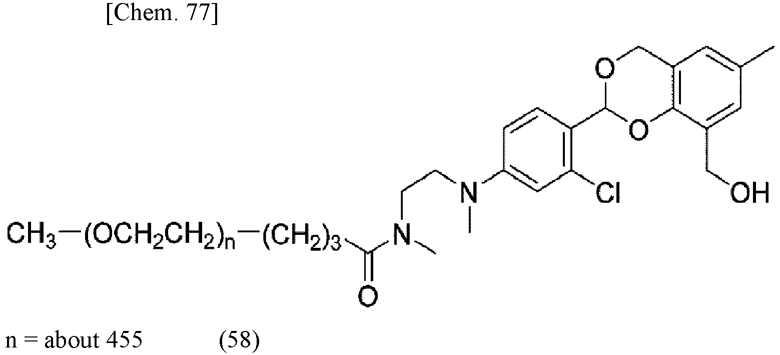

### (Example 12-3)

A compound represented by a formula (59) was obtained in the same manner as in Example 6-3 except that the compound represented by the formula (58) (200 mg, 0.010 mmol) was used instead of the compound represented by the formula (41).
¹H-NMR (CDCl₃, internal standard TMS); δ (ppm): 1.42 (2H, dd, -CH₂-), 1.63-1.68 (4H, m, -CH₂CH₂CH₂-), 2.38 (2H, t, -COCH₂-), 2.75 (3H, s, >N-CH₃), 2.94 (3H, s, >N-CH₃), 3.38 (3H, s, -(OCH₂CH₂)nOCH₃), 3.52-4.23 (m, -(OCH₂CH₂)ₙ-, -N(CH₃)CH₂-CH₂-N(CH₃)-), 4.67 (2H, dd, -CH₂OH), 5.25 (2H, dd, -CH-O-CH₂-CH<), 6.25 (1H, s, -CH<), 6.8-7.5 (5H, arom. H), 8.3 (2H, d, arom. H)
Number average molecular weight (Mn): 20,590

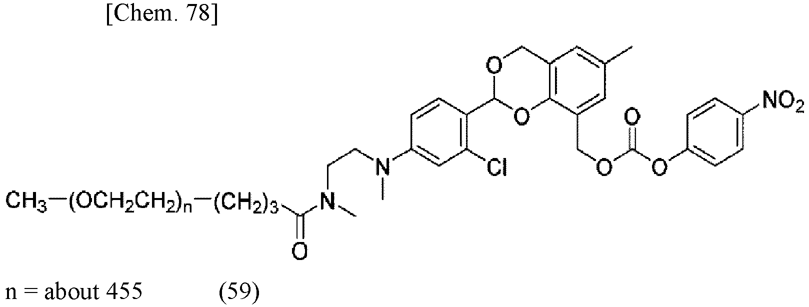

### (Example 13-1)

A compound represented by a formula (60) was obtained in the same manner as in Example 6-1 except that 3-fluoro-4-(methyl(2-(methylamino)ethyl)amino)benzaldehyde (42.1 mg, 0.2 mmol) was used instead of 2-(piperazin-1-yl)benzaldehyde.
¹H-NMR (CDCl₃, internal standard TMS); δ (ppm): 1.42 (2H, dd, -CH₂-), 1.63-1.68 (4H, m, -CH₂CH₂CH₂-), 2.38 (2H, t, -COCH₂-), 2.75 (3H, s, >N-CH₃), 2.94 (3H, s, >N-CH₃), 3.38 (3H, s, -(OCH₂CH₂)nOCH₃), 3.52-4.23 (m, -(OCH₂CH₂)ₙ-, -N (CH₃)CH₂-CH₂-N(CH₃)-), 6.79 (2H, m, arom. H), 7.85 (1H, m, arom. H), 10.21 (1H, s, -COH)

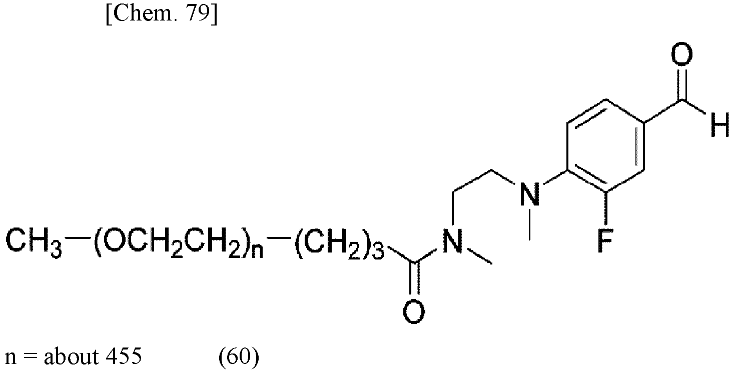

### (Example 13-2)

A compound represented by a formula (61) was obtained in the same manner as in Example 6-2 except that the compound represented by the formula (60) (300 mg, 0.015 mmol) was used instead of the compound represented by the formula (40).
¹H-NMR (CDCl₃, internal standard TMS); δ (ppm): 1.42 (2H, dd, -CH₂-), 1.63-1.68 (4H, m, -CH₂CH₂CH₂-), 2.38 (2H, t, -COCH₂-), 2.75 (3H, s, >N-CH₃), 2.94 (3H, s, >N-CH₃), 3.38 (3H, s, -(OCH₂CH₂)nOCH₃), 3.52-4.23 (m, -(OCH₂CH₂)ₙ-, -N(CH₃)CH₂-CH₂-N(CH₃)-), 4.67 (2H, dd, -CH₂OH), 5.25 (2H, dd, -CH-O-CH₂-CH<), 6.25 (1H, s, -CH<), 6.5-7.7 (5H, arom. H)

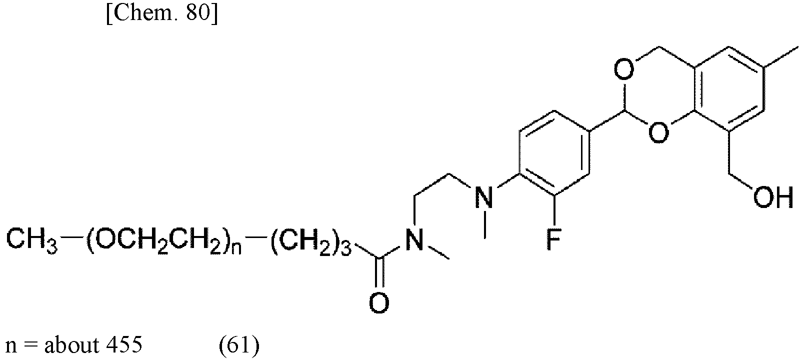

### (Example 13-3)

A compound represented by a formula (62) was obtained in the same manner as in Example 6-3 except that the compound represented by the formula (61) (200 mg, 0.010 mmol) was used instead of the compound represented by the formula (41).
¹H-NMR (CDCl₃, internal standard TMS); δ (ppm): 1.42 (2H, dd, -CH₂-), 1.63-1.68 (4H, m, -CH₂CH₂CH₂-), 2.38 (2H, t, -COCH₂-), 2.75 (3H, s, >N-CH₃), 2.94 (3H, s, >N-CH₃), 3.38 (3H, s, -(OCH₂CH₂)nOCH₃), 3.52-4.23 (m, -(OCH₂CH₂)ₙ-, -N(CH₃)CH₂-CH₂-N(CH₃)-), 4.67 (2H, dd, -CH₂OH), 5.25 (2H, dd, -CH-O-CH₂-CH<), 6.25 (1H, s, -CH<), 6.5-7.7 (5H, arom. H), 8.29 (2H, d, arom. H)
Number average molecular weight (Mn): 21,029

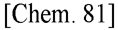

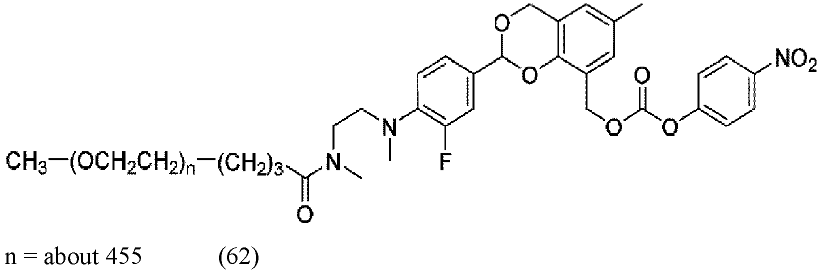

### (Example 14)

A compound represented by a formula (63) was obtained in the same manner as in Example 9 except that the compound represented by the formula (53) (50 mg, 0.0025 mmol) was used instead of the compound represented by the formula (42).
¹H-NMR (CDCl₃, internal standard TMS); δ (ppm): 1.42 (2H, tt, -CH₂-), 1.63 (2H, tt, -CH₂-), 1.69 (2H, dd, -CH₂-), 2.30 (3H, s, -CH₃), 2.38 (2H, t, -CH₂CO-), 2.53 (2H, t, -CH₂COOH), 3.20 (2H, ddd, -NCH₂-), 3.38 (3H, s, -(OCH₂CH₂)nOCH₃), 3.37-3.43 (2H, m, -CH₂NH-), 3.52-4.23 (m, -(OCH₂CH₂)ₙ-, -NCH₂-), 4.93 (1H, d, -CH₂O-), 5.08 (1H, dd, -CH₂OCONH-), 5.14 (1H, d, -CH₂O-), 5.38 (1H, dd, -CH₂OCONH-), 5.95 (1H, s, -CH<), 6.6-7.5 (5H, arom. H)

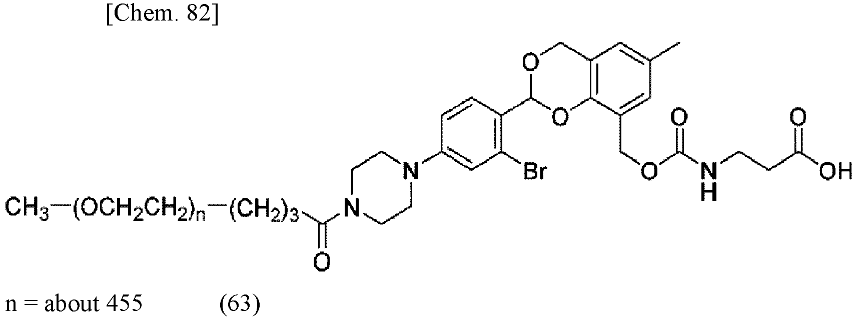

### (Example 15)

A compound represented by a formula (64) was obtained in the same manner as in Example 9 except that the compound represented by the formula (56) (50 mg, 0.0025 mmol) was used instead of the compound represented by the formula (42).
¹H-NMR (CDCl₃, internal standard TMS); δ (ppm): 1.42 (2H, tt, -CH₂-), 1.63 (2H, tt, -CH₂-), 1.69 (2H, dd, -CH₂-), 2.30 (3H, s, -CH₃), 2.38 (2H, t, -CH₂CO-), 2.53 (2H, t, -CH₂COOH), 3.20 (2H, ddd, -NCH₂-), 3.38 (3H, s, -(OCH₂CH₂)nOCH₃), 3.37-3.43 (2H, m, -CH₂NH-), 3.52-4.23 (m, -(OCH₂CH₂)ₙ-, -NCH₂-), 4.93 (1H, d, -CH₂O-), 5.08 (1H, dd, -CH₂OCONH-), 5.14 (1H, d, -CH₂O-), 5.38 (1H, dd, -CH₂OCONH-), 5.95 (1H, s, -CH<), 6.6-7.5 (5H, arom. H)

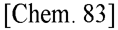

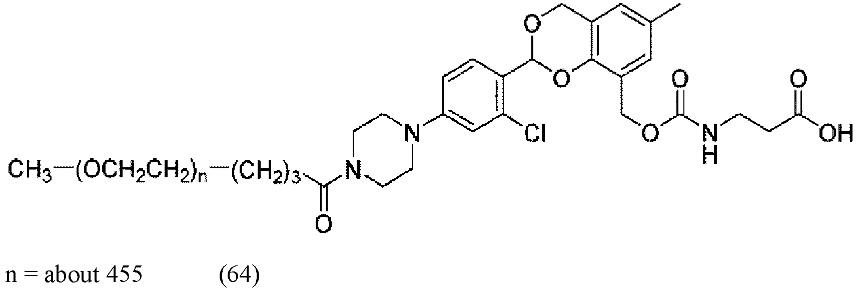

### (Example 16)

A compound represented by a formula (65) was obtained in the same manner as in Example 9 except that the compound represented by the formula (59) (50 mg, 0.0025 mmol) was used instead of the compound represented by the formula (42).
¹H-NMR (CDCl₃, internal standard TMS); δ (ppm): 1.42 (2H, dd, -CH₂-), 1.63-1.68 (4H, m, -CH₂CH₂CH₂-), 2.38 (2H, t, -COCH₂-), 2.75 (3H, s, >N-CH₃), 2.94 (3H, s, >N-CH₃), 3.38 (3H, s, -(OCH₂CH₂)nOCH₃), 3.52-4.23 (m, -(OCH₂CH₂)ₙ-, -N(CH₃)CH₂-CH₂-N(CH₃)-), 4.67 (2H, dd, -CH₂OH), 5.25 (2H, dd, -CH-O-CH₂-CH<), 6.25 (1H, s, -CH<), 6.6-7.8 (5H, arom. H)

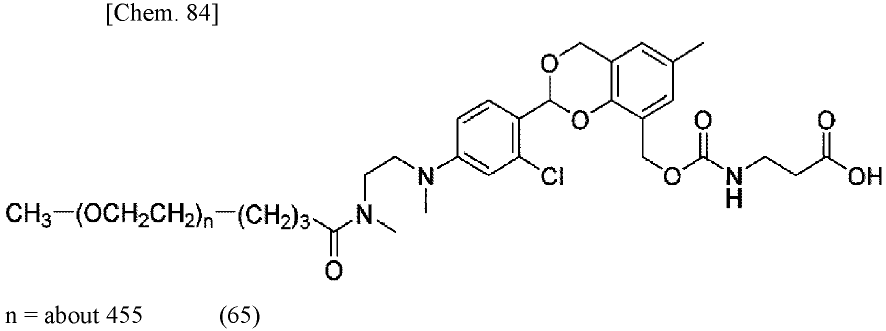

### (Example 17)

A compound represented by a formula (66) was obtained in the same manner as in Example 9 except that the compound represented by the formula (62) (50 mg, 0.0025 mmol) was used instead of the compound represented by the formula (42).
¹H-NMR (CDCl₃, internal standard TMS); δ (ppm): 1.42 (2H, dd, -CH₂-), 1.63-1.68 (4H, m, -CH₂CH₂CH₂-), 2.38 (2H, t, -COCH₂-), 2.75 (3H, s, >N-CH₃), 2.94 (3H, s, >N-CH₃), 3.38 (3H, s, -(OCH₂CH₂)nOCH₃), 3.52-4.23 (m, -(OCH₂CH₂)ₙ-, -N(CH₃)CH₂-CH₂-N(CH₃)-), 4.67 (2H, dd, -CH₂OH), 5.25 (2H, dd, -CH-O-CH₂-CH<), 6.25 (1H, s, -CH<), 6.6-7.5 (5H, arom. H)

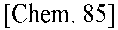

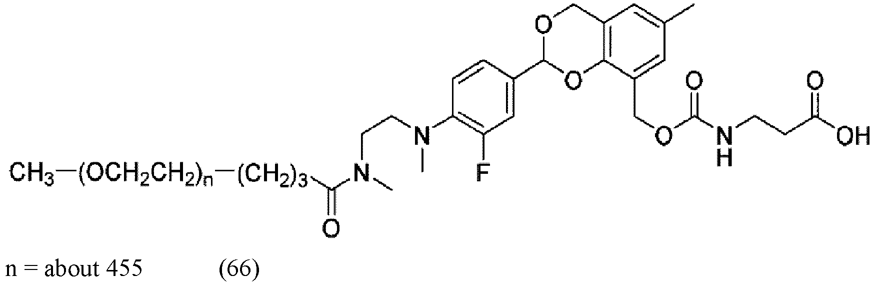

### (Example 18-1)

A compound represented by a formula (67) was obtained in the same manner as in Example 4-1 except that SUNBRIGHT GL2-400GC2 (500 mg, 0.0125 mmol) manufactured by NOF Corporation was used instead of SUNBRIGHT ME-200HS manufactured by NOF Corporation.
¹H-NMR (CDCl₃, internal standard TMS); δ (ppm): 1.42 (2H, tt, -CH₂-), 1.63 (2H, tt, -CH₂-), 1.69 (2H, dd, -CH₂-), 2.38 (2H, t, -CH₂CO-), 3.38 (6H, s, -(OCH₂CH₂)nOCH₃), 3.52-4.23 (m, -(OCH₂CH₂)ₙ-, -NCH₂-), 6.92 (2H, d, arom. H), 7.78 (2H, d, arom. H), 9.85 (1H, s, - COH)

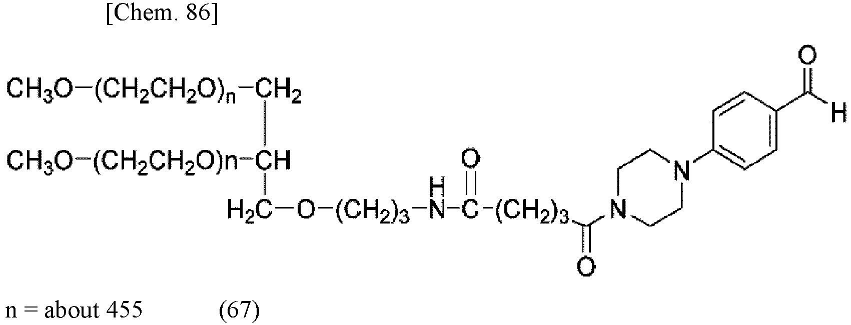

### (Example 18-2)

A compound represented by a formula (68) was obtained in the same manner as in Example 4-2 except that the compound represented by the formula (67) (300 mg, 0.0075 mmol) was used instead of the compound represented by the formula (34). ¹H-NMR (CDCl₃, internal standard TMS); δ (ppm): 1.42 (2H, tt, -CH₂-), 1.63 (2H, tt, -CH₂-), 1.69 (2H, dd, -CH₂-), 2.30 (3H, s, -CH₃), 2.38 (2H, t, -CH₂CO-), 3.20 (2H, ddd, -NCH₂-), 3.38 (6H, s, -(OCH₂CH₂)nOCH₃), 3.52-4.23 (m, -(OCH₂CH₂)ₙ-, -NCH₂-), 4.67 (2H, dd, - OCH₂OH), 4.93 (1H, d, -CH₂O-), 5,14 (1H, d, -CH₂O-), 5.95 (1H, s, -CH<), 6.3-7.5 (6H, arom. H)

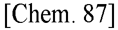

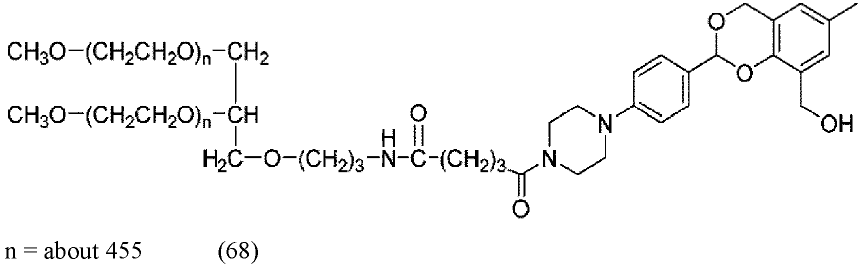

### (Example 18-3)

A compound represented by a formula (69) was obtained in the same manner as in Example 4-3 except that the compound represented by the formula (68) (200 mg, 0.005 mmol) was used instead of the compound represented by the formula (35).
¹H-NMR (CDCl₃, internal standard TMS); δ (ppm): 1.42 (2H, tt, -CH₂-), 1.63 (2H, tt, -CH₂-), 1.69 (2H, dd, -CH₂-), 2.38 (2H, t, -CH₂CO-), 2.20 (2H, ddd, -NCH₂-), 2.30 (3H, s, -CH₃), 3.38 (6H, s, -(OCH₂CH₂)nOCH₃), 3.52-4.23 (m, -(OCH₂CH₂)ₙ-, -NCH₂-), 4.93 (1H, d, -CH₂O-), 5.14 (1H, d, -CH₂O-), 5.34 (2H, dd, -OCH₂OCO-), 5.95 (1H, s, -CH<), 6.3-7.9 (10H, arom. H)
Number average molecular weight (Mn): 39,217

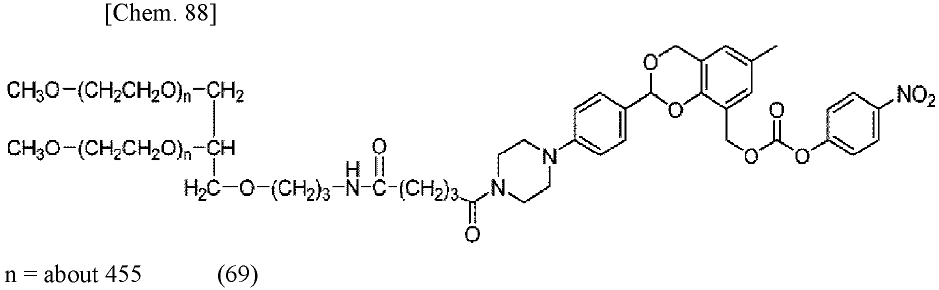

### (Decomposability Test 2)

Each of the compounds represented by the formula (63), formula (64), formula (65), and formula (66) (2 mg) was dissolved in phosphate buffered saline (2 mL) having a pH of 7.4, and then placed in a thermostatic bath at 37°C, and HPLC measurement was performed at any timing. FIG. 2 shows a β-alanine adduct amount at any timing, with the β-alanine adduct amount at 0 hours of standing being 100%. With the y-intercept set to 100, the half-life (t1/2) calculated according to the equation [Math. 1] based on the approximate equation of the exponential approximation curve obtained from the graph, i.e., y = 100e^{-ax} (-a is an exponent) is 19.9 hours for the compound represented by the formula (63), 19.6 hours for the compound represented by the formula (64), 2.7 hours for the compound represented by the formula (65), and 21.6 hours for the compound represented by the formula (66). That is, it is shown that the compounds according to the present invention represented by the formulas (63), (64), (65), and (66) have a desired half-life under a physiological condition as compared with the half-life of 231 days (as shown in the decomposability test 1) of the compound exemplified in Patent Literature 3 represented by the formula (50) which is the prior invention.

### (Example 19)

IL2 (manufactured by NKMAX Co. Ltd.) represented by SEQ ID NO. 1 was dissolved in a 20 mM bicarbonate buffer solution (pH: 9.0) to a final concentration of 0.43 mg/mL and the compound (36) was dissolved in the above bicarbonate buffer solution to a final concentration of 8.5 mg/mL, followed by a reaction at 4°C for 3 hours. Thereafter, 20 mg/mL of a glycine solution was added, followed by stirring at 25°C for 1 hour. After stirring, the solution was exchanged with 1 mM Tris-HCl (pH: 9.0) by ultrafiltration, anion exchange chromatography was performed under the following conditions, and the target fraction was recovered and concentrated to obtain (RLS)PEG(20k)-IL2.
· HPLC apparatus: Nexera (Shimadzu Corporation)
· Column: Asahipack ES-502N 7C (7.5 mm × 100 mm, 9 µm, Showa Denko)
· Flow rate: 1 mL/min
· Column temperature: 15°C
· Injection amount: 50 µL
· Detector: PDA (measurement wavelength: 280 nm)
· Mobile phase A: 1 mM Tris-HCl buffer solution (pH: 9.0)
· Mobile phase B: 0.1M NaCl-containing 1 mM Tris-HCl buffer solution (pH: 9.0)
· Gradient program (A/B): 100/0 (0 min) → 100/0 (20 min) → 75/25 (25 min) → 0/100 (30 min) → 0/100 (35 min)

### (Comparative Example 3)

IL2 (manufactured by NKMAX Co. Ltd.) represented by SEQ ID NO. 1 was dissolved in a 20 mM bicarbonate buffer solution (pH: 9.0) to a final concentration of 0.43 mg/mL and SUNBRIGHT MENP-20T manufactured by NOF Corporation was dissolved in the above bicarbonate buffer solution to a final concentration of 6.5 mg/mL, followed by a reaction at 25°C for 3 hours. Thereafter, 20 mg/mL of a glycine solution was added, followed by stirring at 25°C for 1 hour. After stirring, the solution was exchanged with 1 mM Tris-HCl (pH: 9.0) by ultrafiltration, anion exchange chromatography was performed in the same manner as in Example 18, and the target fraction was recovered and concentrated to obtain (NRL)PEG(20k)-IL2.

### (Cell Proliferation Test)

CTLL-2 (90 µL, RCB0637, manufactured by RIKEN BRC) having a living cell concentration of 1.89 × 10⁵ cells/mL was seeded in each well of a 96-well plate (manufactured by Corning Incorporated) and cultured for 4 hours. Thereafter, 10 µL of a BSA-containing PBS solution of 0 ng/mL to 20 ng/mL of the (RLS)PEG(20k)-IL2 as IL-2 or a BSA-containing PBS solution of 0 ng/mL to 20 ng/mL of the (NRL)PEG(20k)-IL2 as IL-2 was added to each well. After the addition, the cells were cultured for 45 hours. Thereafter, 100 µL of Cell Titor Glo reagent (manufactured by Promega Corporation) was added to each well, and the luminescence amount caused by luciferase was measured.

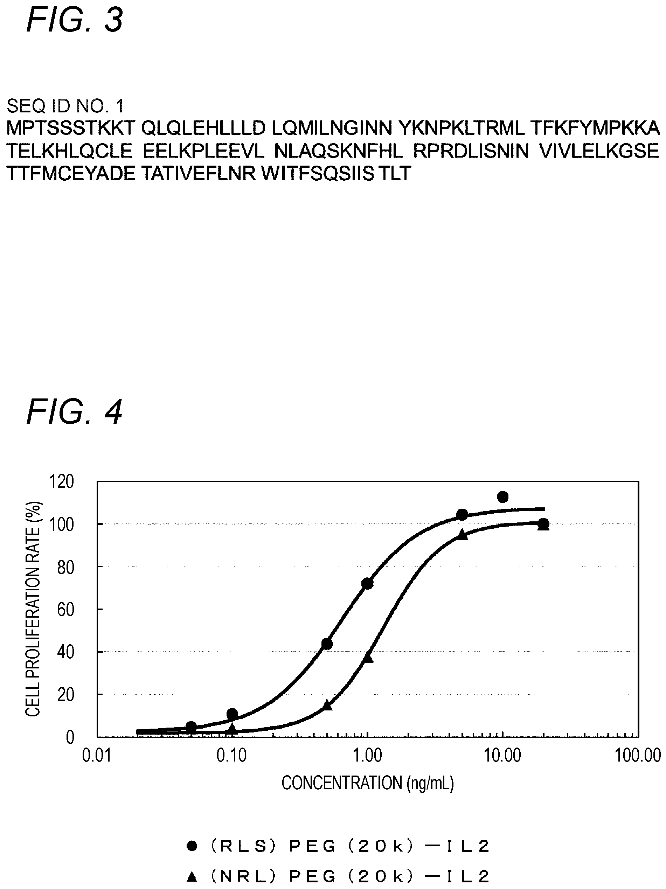

The maximum luminescence amount obtained in each of the (RLS)PEG(20k)-IL2 and the (NRL)PEG(20k)-IL2 was defined as a cell proliferation rate of 100%, and the cell proliferation rate at each concentration was calculated for each of the (RLS)PEG(20k)-IL2 and the (NRL)PEG(20k)-IL2. FIG. 4 shows the proliferation rate at each concentration of the (RLS)PEG(20k)-IL2 and the (NRL)PEG(20k)-IL2. Based on the regression curve equation obtained from the graph, 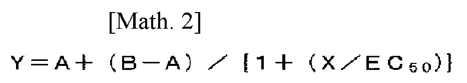 (Y is cell proliferation rate, A is minimum measured value, B is maximum measured value, and X is concentration of compound.)
an EC₅₀ value, indicating the concentration at which the cell proliferation rate of each sample was 50%, was calculated. The EC₅₀ value of the (RLS)PEG(20k)-IL2 was 0.65, and the EC₅₀ value of the (NRL)PEG(20k)-IL2 was 1.32. That is, it is shown that the (RLS)PEG(20k)-IL2 according to the present invention can improve pharmacological activity as compared with the (NRL)PEG(20k)-IL2 in the existing technology.

### INDUSTRIAL APPLICABILITY

The amino group-containing acetal-type releasable polyoxyethylene derivative according to the present invention can form a biofunctional molecule into a prodrug, gradually hydrolyze an acetal under a physiological condition to induce benzyl elimination, and gradually release the biofunctional molecule, thereby improving a pharmacological action of a biofunctional functional molecule modified with a polyoxyethylene derivative.

Although the present invention has been described in detail and with reference to specific embodiments, it will be apparent to those skilled in the art that various changes and modifications can be made without departing from the spirit and scope of the present invention.

The present application is based on a Japanese patent application (Japanese Patent Application No. 2023-177998) filed on October 16, 2023, the contents of which are incorporated herein by reference.

## Claims

1. An amino group-containing acetal-type releasable polyoxyethylene derivative, which is represented by the following formula (1), formula (2), formula (3), or formula (4): 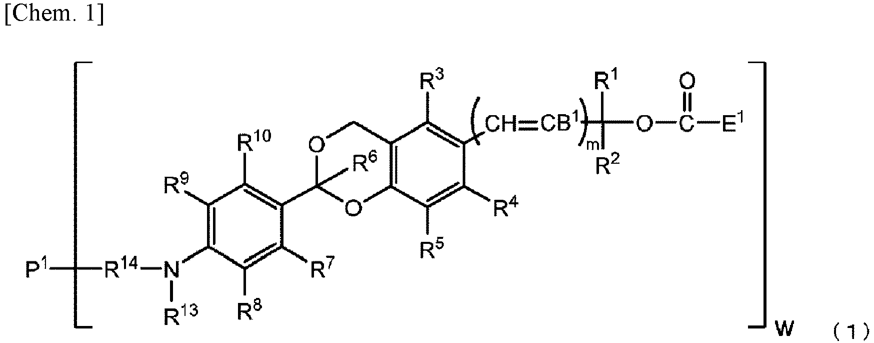 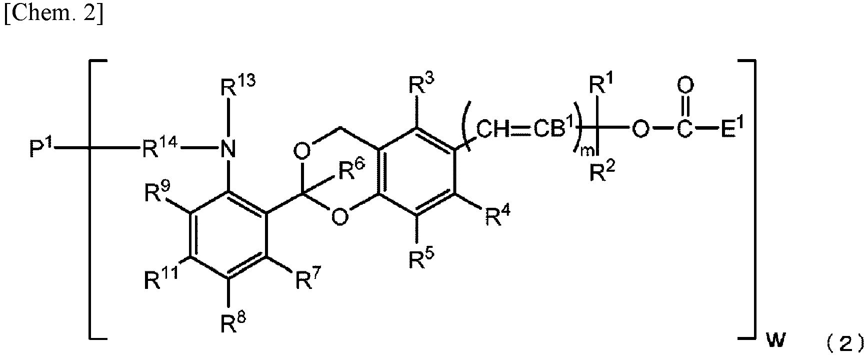 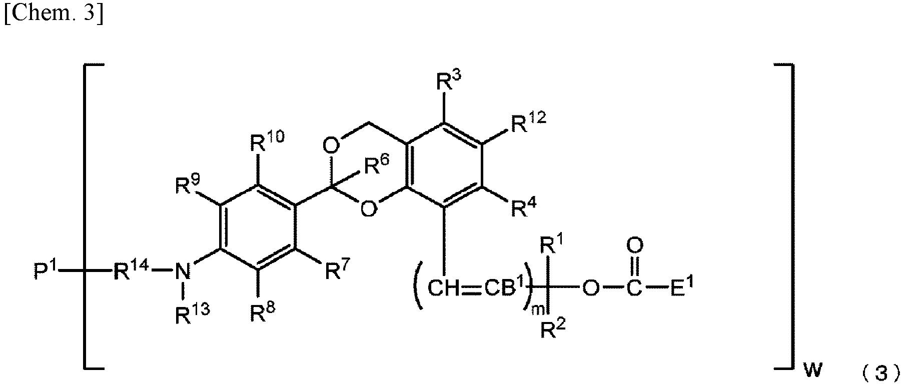 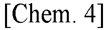 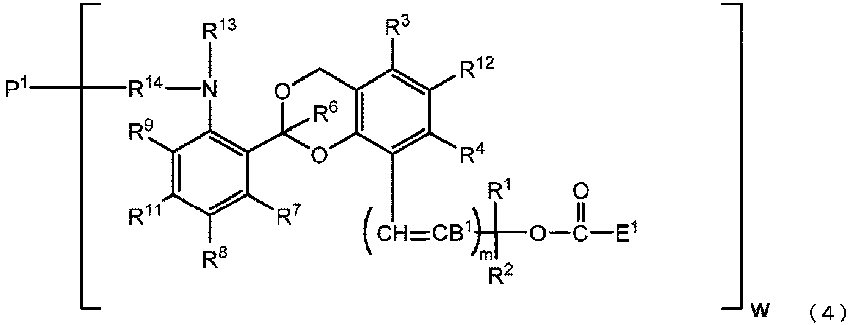 (in the formulas (1), (2), (3), and (4),
B¹ is a hydrogen atom or -C(R¹)(R²)OC(O)E¹,
E¹ is a leaving group,
P¹ is a polyoxyethylene derivative moiety,
w is an integer of 1 to 8,
R¹, R², R³, R⁴, R⁵, and R¹² are each independently a hydrogen atom or a hydrocarbon group having 1 to 10 carbon atoms,
R⁶ is a hydrogen atom or a hydrocarbon group having 1 to 24 carbon atoms which may be substituted,
R⁷, R⁸, R⁹, R¹⁰, and R¹¹ are each independently an electron-withdrawing substituent, an electron-donating substituent, or a hydrogen atom,
R¹³ is a hydrogen atom or a hydrocarbon group having 1 to 10 carbon atoms which may be substituted,
R¹⁴ is a hydrocarbon group having 1 to 10 carbon atoms which may be substituted,
R¹³ may be bonded to R¹⁴, and
m is 0 or 1).

2. The amino group-containing acetal-type releasable polyoxyethylene derivative according to claim 1, wherein m is 0, R¹ and R² are each a hydrogen atom, and R³, R⁴, R⁵, and R¹² are each independently a hydrogen atom or a methyl group.

3. The amino group-containing acetal-type releasable polyoxyethylene derivative according to claim 1 or 2, wherein
m is 0,
R¹ and R² are each a hydrogen atom,
R³, R⁴, R⁵, and R¹² are each independently a hydrogen atom or a methyl group,
R¹³ and R¹⁴ in L¹ are bonded to each other,
R¹³ is a hydrocarbon group represented by the following formula (5), and
R¹⁴ is a hydrocarbon group represented by the following formula (6): 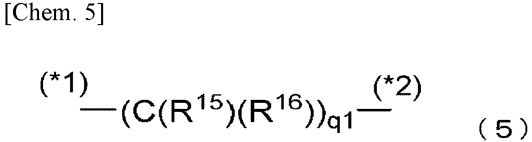
(in the formula (5),
R¹⁵ and R¹⁶ are each independently a hydrogen atom or a hydrocarbon group having 1 to 4 carbon atoms which may be substituted,
q1 is an integer of 1 to 4,
(*1) represents a bonding point with N, and
(*2) represents a bonding point with R¹⁴), 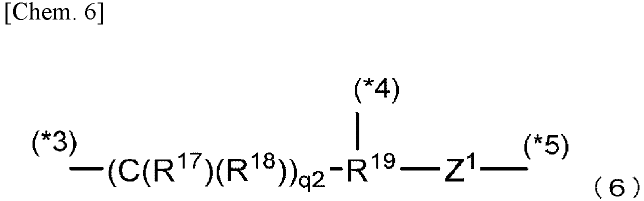 (in the formula (6),
R¹⁷ and R¹⁸ are each independently a hydrogen atom or a hydrocarbon group having 1 to 4 carbon atoms which may be substituted,
R¹⁹ is CR²⁰ or a nitrogen atom,
R²⁰ is a hydrogen atom or a hydrocarbon group having 1 to 4 carbon atoms which may be substituted,
q2 is an integer of 0 to 3,
Z¹ is a single bond or a divalent spacer connecting P¹ and a carbon atom or a nitrogen atom of R¹⁹,
(*3) represents a bonding point with N,
(*4) represents a bonding point with R¹³, and
(*5) represents a bonding point with P¹).

4. The amino group-containing acetal-type releasable polyoxyethylene derivative according to claim 3, wherein
m is 0,
R¹ and R² are each a hydrogen atom,
R³, R⁴, R⁵, and R¹² are each independently a hydrogen atom or a methyl group,
R¹³ and R¹⁴ are bonded to each other,
R¹⁵ and R¹⁶ are each a hydrogen atom,
q1 is 2,
R¹⁷ and R¹⁸ are each a hydrogen atom,
R¹⁹ is a methine group or a nitrogen atom, and
q2 is 2.

5. A method for producing the amino group-containing acetal-type releasable polyoxyethylene derivative according to claim 1, 2, 3, or 4, the method comprising:
a coupling step of coupling a polyoxyethylene derivative with a benzaldehyde derivative or a phenyl ketone derivative to obtain a coupling product represented by the following formula (7) or the following formula (8);
an acetalization step of, after the coupling step, reacting the coupling product represented by the following formula (7) or the following formula (8) with a phenol having a hydroxymethyl group at a 2-position and a substituent (-CH=CB¹)C(R¹)(R²)-OH (B¹, m, R¹, and R² are as described above) at a 4-position or a 6-position under an acidic condition, thereby obtaining an acetal structure; and
a leaving group structure introduction step of introducing a leaving group structure (-OC(O)E¹) (E¹ is a leaving group) to a terminal of the substituent at the 4-position or the 6-position after the acetalization step, 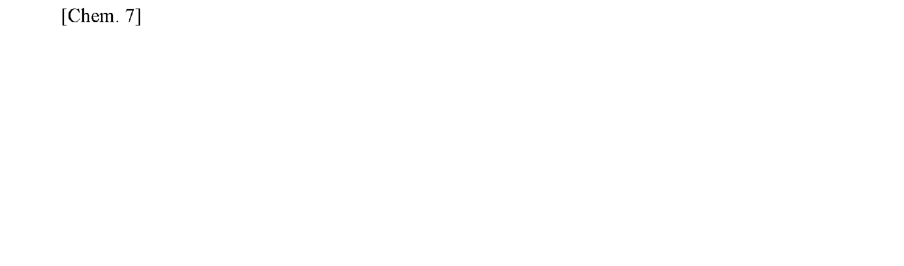 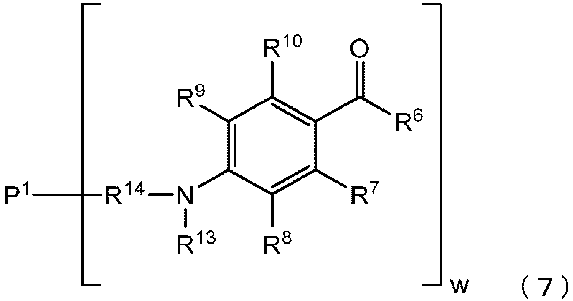 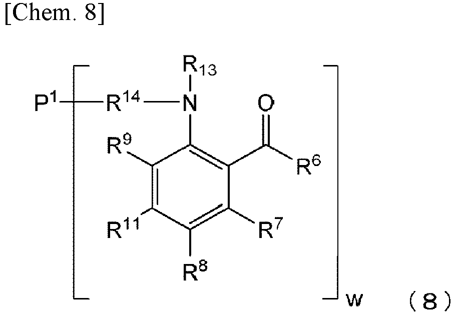 (in the formula (7) and the formula (8), P¹, w, R⁶, R⁷, R⁸, R⁹, R¹⁰, R¹¹, R¹³, and R¹⁴ are as described above).

6. The method for producing an amino group-containing acetal-type releasable polyoxyethylene derivative according to claim 5, further comprising:
between the coupling step and the acetalization step, a dialkylation step of reacting the coupling product represented by the formula (7) or the formula (8) with a monohydric alcohol under an acidic condition to obtain a dialkyl acetal structure represented by the following formula (9) or the following formula (10): 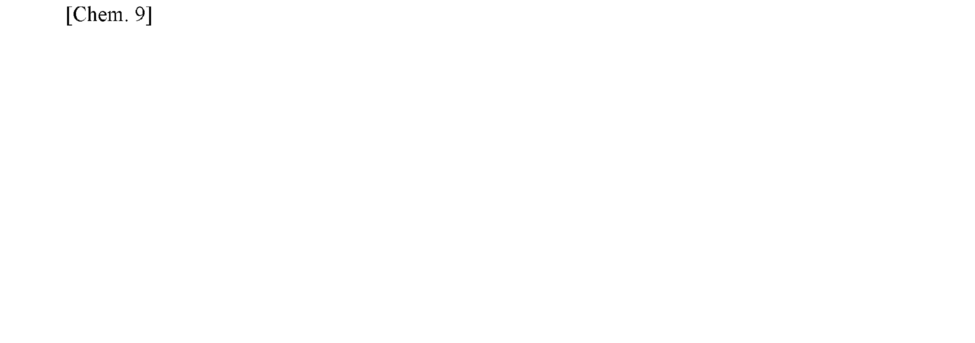 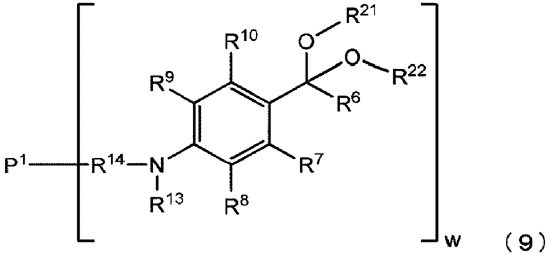 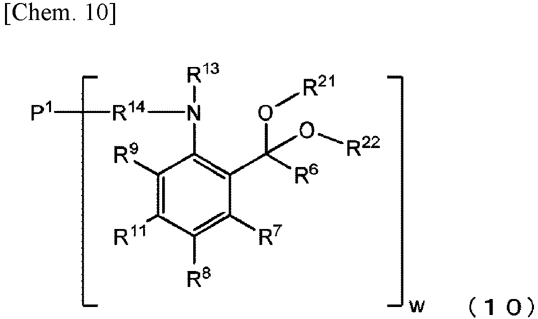 (in the formulas (9) and (10),
R²¹ and R²² are each independently a hydrocarbon group having 1 to 10 carbon atoms, and
P¹, w, R⁶, R⁷, R⁸, R⁹, R¹⁰, R¹¹, R¹³, and R¹⁴ are as described above).

7. The method for producing an amino group-containing acetal-type releasable polyoxyethylene derivative according to claim 5, further comprising, between the acetalization step and the leaving group structure introduction step:
a deprotection step of deprotecting an amino group protected by a protective group in the coupling product; and
a step of introducing, into the amino group deprotected after the deprotection step, a functional group reactive with a biofunctional molecule.

8. The method for producing an amino group-containing acetal-type releasable polyoxyethylene derivative according to claim 6, further comprising, between the acetalization step and the leaving group structure introduction step:
a deprotection step of deprotecting an amino group protected by a protective group in the dialkyl acetal structure; and
a step of introducing, into the amino group deprotected after the deprotection step, a functional group reactive with a biofunctional molecule.

9. An amino group-containing acetal-type releasable polyoxyethylene conjugate, which is represented by the following formula (11), formula (12), formula (13), or formula (14), and which is cleaved under a physiological condition, 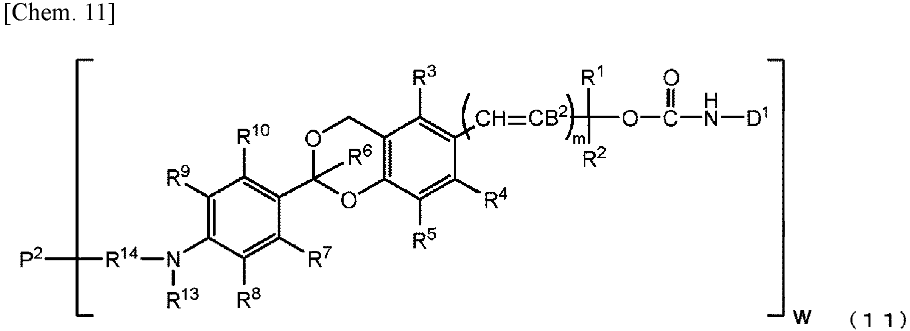 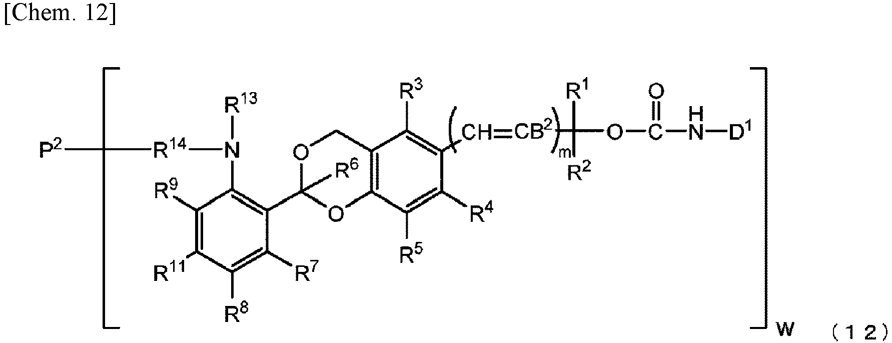 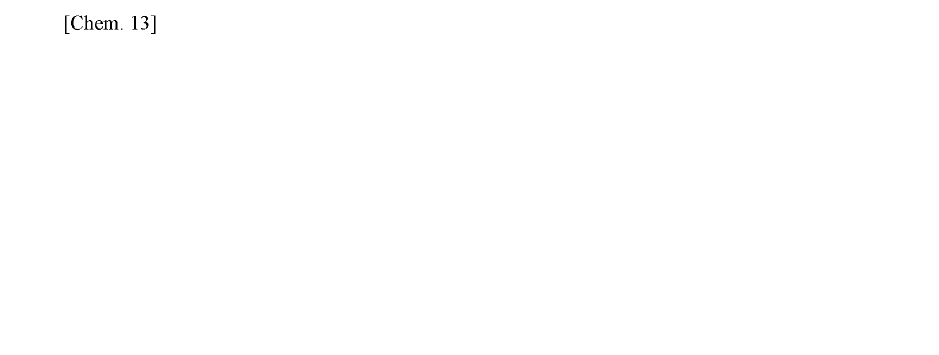 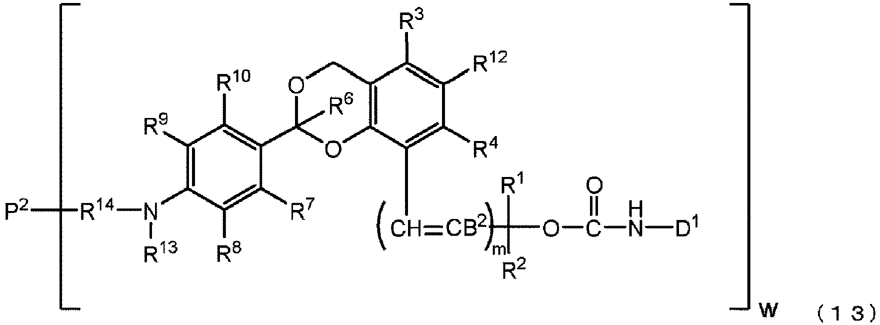 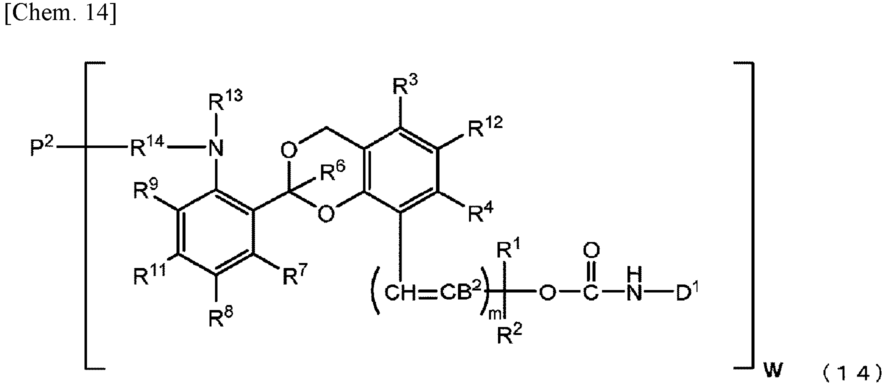 (in the formula (11), formula (12), formula (13), and formula (14),
B² is a hydrogen atom or -C(R¹)(R²)OC(O)NHD¹,
D¹ is a residue obtained by removing, from amino groups contained in a biofunctional molecule, the amino group constituting a carbamate bond,
P² is a polyoxyethylene derivative moiety or a conjugate of a polyoxyethylene derivative moiety and a biofunctional molecule,
w is an integer of 1 to 8,
R¹, R², R³, R⁴, R⁵, and R¹² are each independently a hydrogen atom or a hydrocarbon group having 1 to 10 carbon atoms,
R⁶ is a hydrogen atom or a hydrocarbon group having 1 to 24 carbon atoms which may be substituted,
R⁷, R⁸, R⁹, R¹⁰, and R¹¹ are each independently an electron-withdrawing substituent, an electron-donating substituent, or a hydrogen atom,
R¹³ is a hydrogen atom or a hydrocarbon group having 1 to 10 carbon atoms which may be substituted,
R¹⁴ is a hydrocarbon group having 1 to 10 carbon atoms which may be substituted, R¹³ may be bonded to R¹⁴, and
m is 0 or 1).

10. A method for producing the amino group-containing acetal-type releasable polyoxyethylene conjugate according to claim 9, the method comprising:
a coupling step of reacting the acetal-type releasable polyoxyethylene derivative according to claim 1 or 2 with a biofunctional molecule in a neutral or basic buffer solution which may contain a water-soluble organic solvent; and
a purification step under a neutral or basic condition after the coupling step.
